# EUROPEAN PATENT APPLICATION

(11) **EP 1 923 431 A1**
(43) Date of publication of application: **21.05.2008**
(21) Application number: 06797534.2
(22) Date of filing: 06.09.2006
(51) Int. Cl.: C08L 101/10, C08G 85/00, C08K 5/00, C09D 143/00, C09D 201/00, C09J 143/00, C09J 201/00, C09K 3/10

(54) **CURABLE COMPOSITION**

(30) Priority: 08.09.2005 JP 2005260113
(71) Applicant: Kaneka Corporation, Kita-ku Osaka-shi, Osaka 530-8288 (JP)
(72) Inventor: NAKAGAWA, Yoshiki, Settsu-shi, Osaka 566-0072 (JP); OGAWA, Kohei, Settsu-shi, Osaka 566-0072 (JP); TAMAI, Hitoshi, Settsu-shi, Osaka 566-0072 (JP)
(74) Representative: Hart-Davis, Jason
(86) International application number: PCT/JP2006/317639
(87) International publication number: WO 2007/029733

(57) **Abstract**

The present invention has its object to provide a crosslinkable silyl group-terminated vinyl polymer-containing curable composition which secures a sufficiently long pot life and, at the same time, can be cured rapidly on the occasion of need and can give cured products excellent in thermal stability, oil resistance, weathering resistance, mechanical properties and adhesiveness, among others.

The present invention provides a curable composition containing (I) and (II) mentioned in the following: a vinyl polymer (I) having, on an average, at least one crosslinkable silyl group at its termini, and a photo acid generator (II).

The vinyl polymer (I) according to the present invention is preferably a (meth)acrylic polymer.

## Description

### TECHNICAL FIELD

The present invention relates to a curable composition. More particularly, it relates to a curable composition characterized in that it comprises a vinyl polymer (I) having, on an average, at least one crosslinkable silyl group at its termini and a photo acid generator (II).

### BACKGROUND ART

Curable compositions based on a crosslinkable silyl group-terminated vinyl polymer are generally known to be cured at room temperature by the moisture in the air or contained therein (cf. Patent Document 1). However, there is room for improvement with curable compositions in which such polymer is used. The rate of curing is generally slow in many cases and, when the rate of curing is increased by means of catalytic activity, for instance, the pot life becomes short and the coating work may become difficult.

Active energy ray-curable compositions comprising a similar vinyl polymer, namely a (meth) acryloyl- or like radical polymerizable group-terminated polymer, have recently been reported (cf. Patent Document 2). However, there is also room for improvement with curable compositions in which such polymer is used. Since radical polymerization tends to be inhibited by oxygen, the cured product surface sometimes remains uncured. Further, since the crosslinking reaction involved in curing in itself is low in polarity, contrivance is required for providing adhesiveness. Furthermore, it is necessary in many cases to utilize such a relatively weak bond as an ester bond for introducing such a functional group as a (meth)acryloyl group into a polymer terminus and, therefore, it is feared that deterioration may result due to cleavage of such bond after curing.

On the other hand, it is an old knowledge that crosslinkable silyl groups can be crosslinked by the action of an acid and it is also known that crosslinkable silyl group-containing compounds supplemented with a photo acid generator can be cured by active energy rays utilizing the same reaction (cf. Patent Document 3 and Non-Patent Document 1).

While, in many cases, the crosslinkable silyl group-containing compound to be cured with active energy rays with addition of a photo acid generator is a low-molecular-weight compound, certain crosslinkable silyl group-containing polymers have recently been reported (Patent Document 4). While polyacrylate type vinyl polymers are also shown as such polymers, any crosslinkable silyl group-terminated polymers are not described. Basically, vinyl polymers are produced by free radical polymerization, so that their structure is not precisely controlled. Without precise structure control, the viscosity may increase or it becomes difficult to attain good rubber elasticity.

There is a report about similar active energy ray curing of crosslinkable silyl group-terminated polyethers in the presence of a photo acid generator (cf. Patent Document 5). However, polyethers generally have weak points: they are weak against acids and light. Furthermore, cured products derived therefrom are not so excellent, either, in thermal stability, weathering resistance and chemical resistance.

As discussed above, there is no report as yet about the active energy ray curing of crosslinkable silyl group-terminated vinyl polymers in the presence of a photo acid generator. The active energy ray curing of such polymers in the presence of a photo acid generator, if realized, will make it possible to apply those polymers also in the fields so far regarded as incompatible with them and thus use them in a wider range of modes of application. The realization of such curing is desired from the industrial viewpoint as well.
Patent Document 1: Japanese Kokai Publication Hei-09-272714, Japanese Kokai Publication Hei-11-005815, Japanese Kokai Publication Hei-11-043512, Japanese Kokai Publication Hei-11-080571, Japanese Kokai Publication Hei-11-116617, Japanese Kokai Publication Hei-11-130931, Japanese Kokai Publication Hei-12-086999, Japanese Kokai Publication Hei-12-191912, Japanese Kokai Publication 2000-038404, Japanese Kokai Publication 2000-044626 and Japanese Kokai Publication 2000-072804
Patent Document 2: Japanese Kokai Publication 2000-072816, Japanese Kokai Publication Hei-12-136211, Japanese Kokai Publication Hei-12-095826, Japanese Kokai Publication 2001-055551, Japanese Kokai Publication 2000-154205 and Japanese Kokai Publication 2000-186112
Patent Document 3: Japanese Kokai Publication 2000-1648, Japanese Kokai Publication 2000-169755, Japanese Kokai Publication 2000-171604 and Japanese Kokai Publication 2000-298352
Patent Document 4: Japanese Kohyo Publication 2001-515533, United States Patent 6, 204, 350 and European Patent 966503
Patent Document 5: WO2002/083764
Non-Patent Document 1: Radiation Curing in Polymer Science and Technology, vol. 2, Elsevier Applied Science, London, 1993

### SUMMARY OF THE INVENTION

It is an object of the present invention to provide a crosslinkable silyl group-terminated vinyl polymer-containing curable composition which secures a sufficiently long pot life and, at the same time, can be cured rapidly on the occasion of need and can give cured products excellent in thermal stability, oil resistance, weathering resistance, mechanical properties and adhesiveness, among others.

In view of the above-discussed state of the art, the present inventors made intensive investigations and, as a result, found that photocuring of crosslinkable silyl group-terminated vinyl polymers can be realized by adding a photo acid generator and, further, in addition to good curability, cured products excellent in physical properties can then be obtained. Such findings have now led to completion of the present invention.

Thus, the present invention consists in a curable composition characterized in that it comprises the following two components: a vinyl polymer (I) having, on an average, at least one crosslinkable silyl group at its termini and a photo acid generator (II).

### DETAILED DESCRIPTION OF THE INVENTION

The crosslinkable silyl group in the vinyl polymer (I) is preferably one represented by the following general formula (1) :

-[Si(R¹)_{2-b}(Y)_{b}O]ₘ-Si(R²)₃₋ₐ(Y)ₐ (1)

{wherein, R¹ and R² may be same or different and each is an alkyl group containing 1 to 20 carbon atoms, an aryl group containing 6 to 20 carbon atoms, an aralkyl group containing 7 to 20 carbon atoms or a triorganosiloxy group represented by (R')₃SiO- (in which R' is a univalent hydrocarbon group containing 1 to 20 carbon atoms and a plurality of R' groups may be the same or different) and, when there are two or more R¹ or R² groups, they may be the same or different; Y represents a hydroxyl group or a hydrolyzable group and, when there are two or more Y groups, they may be the same or different; a represents 0, 1, 2 or 3, b represents 0, 1 or 2, and m is an integer of 0 to 19, provided that the relation a + mb ≥ 1 should be satisfied.}

The molecular weight distribution of the vinyl polymer (I) is preferably lower than 1.8.

The main chain of the vinyl polymer (I) is preferably a (meth)acrylic polymer, more preferably an acrylic polymer, still more preferably an acrylate polymer. The main chain of the vinyl polymer (I) is preferably one produced by living radical polymerization, more preferably one produced by atom transfer radical polymerization.

The vinyl polymer (I) preferably has a number average molecular weight of not lower than 3,000.

Usable as the vinyl polymer (I) are those whose main chain is a polyisobutylene polymer.

The main chain structure of the vinyl polymer (I) between the crosslinkable silyl group occurring at one terminus and the crosslinkable silyl group occurring at a site different from the terminus is preferably built up of carbon-carbon bonds alone or of carbon-carbon bonds and carbon-silicon bonds alone.

The photo acid generator (II) is preferably selected from the group consisting of sulfonate esters, onium salts and carboxylate esters.

The curable composition of the present application may further comprise a polyether polymer (III) having, on an average, at least one crosslinkable silyl group at its termini.

Preferably, the main chain of the polyether polymer (III) is essentially polypropylene oxide.

The crosslinkable silyl group in the polyether polymer (III) is preferably one represented by the following general formula (1):

- [Si (R¹)_{2-b}(Y)_{b}O]ₘ-Si (R²)₃₋ₐ(Y)ₐ (1)

{wherein, R¹ and R² may be same or different and each is an alkyl group containing 1 to 20 carbon atoms, an aryl group containing 6 to 20 carbon atoms, an aralkyl group containing 7 to 20 carbon atoms or a triorganosiloxy group represented by (R')₃SiO- (in which R' is a univalent hydrocarbon group containing 1 to 20 carbon atoms and a plurality of R' groups may be the same or different) and, when there are two or more R¹ or R² groups, they may be the same or different; Y represents a hydroxyl group or a hydrolyzable group and, when there are two or more Y groups, they may be the same or different; a represents 0, 1, 2 or 3, b represents 0, 1 or 2, and m is an integer of 0 to 19, provided that the relation a + mb ≥ 1 should be satisfied.}
The curable composition of the present application may further comprise an epoxy compound and/or oxetane compound (IV) .

The epoxy compound and/or oxetane compound (IV) preferably has no aromatic ring and preferably has at least one crosslinkable silyl group within the molecule.

The curable composition of the present application may further comprise a radical-polymerizable carbon-carbon double bond-containing compound.

The curable composition of the present application may comprise a radical-polymerizable carbon-carbon double bond-containing compound.

The vinyl polymer (V) preferably has, on an average, at least one crosslinkable acryloyl group at its termini.

The crosslinkable acryloyl group in the vinyl polymer (V) is preferably one represented by the general formula (3):

-OC(O)C(R^{a})=CH₂ (3)

(wherein R^{a} represents a hydrogen atom or an organic group containing 1 to 20 carbon atoms).

The molecular weight distribution of the vinyl polymer (V) is preferably lower than 1.8.

The main chain of the vinyl polymer (V) is preferably a (meth)acrylic polymer, more preferably an acrylic polymer, still more preferably an acrylate polymer. The main chain of the vinyl polymer (V) is preferably one produced by living radical polymerization, more preferably one produced by atom transfer radical polymerization.

The vinyl polymer (V) preferably has a number average molecular weight of not lower than 3,000.

The curable composition of the present application may further comprise a trialkoxysilane compound or tetraalkoxysilane compound having a molecular weight of not higher than 1,000.

The curable composition of the present application may further comprise a tin-based compound.

The present invention consists in a cured product obtained by irradiating the above curable composition with active energy rays.

The curable composition of the present application can be used as or in a pressure-sensitive adhesive/adhesive composition.

The pressure-sensitive adhesive/adhesive composition based on the curable composition of the present application is suited for use as a sealant, adhesive, pressure-sensitive adhesive, potting agent or coating agent.

### (Effect of the invention)

The curable composition of the invention secures a sufficiently long pot life and, at the same time, can be cured rapidly on the occasion of need and can give cured products excellent in thermal stability, oil resistance, weathering resistance, mechanical properties and adhesiveness, among others.

Hereinafter, a curable composition of the invention will be described in detail.

### <<Vinyl polymer (I)>>

### <Main chain>

The present inventors have so far made a large number of inventions relating to various crosslinkable functional group-terminated vinyl polymers, methods of producing the same, curable compositions comprising the same and uses thereof (see, for example, Japanese Kokai Publication Hei-11-080249, Japanese Kokai Publication Hei-11-080250, Japanese Kokai Publication Hei-11-005815, Japanese Kokai Publication Hei-11-116617, Japanese Kokai Publication Hei-11-116606, Japanese Kokai Publication Hei-11-080571, Japanese Kokai Publication Hei-11-080570, Japanese Kokai Publication Hei-11-130931, Japanese Kokai Publication Hei-11-100433, Japanese Kokai Publication Hei-11-116763, Japanese Kokai Publication Hei-09-272714 and Japanese Kokai Publication Hei-09-272715). The vinyl polymer (I) according to the present invention is not particularly limited, and any of various polymers disclosed in the above-mentioned inventions can be suitably used.

The vinyl monomer which constitutes the main chain of the vinyl polymer of the present invention is not particularly limited, and any of various monomers can be used. Examples of the vinyl monomer include (meth) acrylic acid monomers, such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, isononyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adduct of (meth)acrylic acid, trifluoromethylmethyl (meth)acrylate, 2-trifluoromethylethyl (meth)acrylate, perfluoroethylmethyl (meth)acrylate, 2-perfluoroethylethyl (meth)acrylate, perfluoroethyl-perfluorobutylmethyl (meth)acrylate, 2-perfluoroethyl-2-perfluorobutylethyl (meth)acrylate, perfluoroethyl (meth)acrylate, perfluoromethyl (meth)acrylate, diperfluoromethylmethyl (meth)acrylate, 2,2-diperfluoromethylethyl (meth)acrylate, perfluoromethyl-perfluoroethylmethyl (meth)acrylate, 2-perfluoromethyl-2-perfluoroethylethyl (meth)acrylate, 2-perfluorohexylmethyl (meth)acrylate, 2-perfluorohexylethyl (meth)acrylate, 2-perfluorodecylmethyl (meth)acrylate, 2-perfluorodecylethyl (meth)acrylate, 2-perfluorohexadecylmethyl (meth)acrylate, and 2-perfluorohexadecylethyl (meth)acrylate; aromatic vinyl monomers, such as styrene, vinyltoluene, α-methylstyrene, chlorostyrene, and styrenesulfonic acid and its salts; fluorine-containing vinyl monomers, such as perfluoroethylene, perfluoropropylene, and vinylidene fluoride; silicon-containing vinyl monomers, such as vinyltrimethoxysilane and vinyltriethoxysilane; maleic anhydride, maleic acid, and monoalkyl esters and dialkyl esters of maleic acid; fumaric acid and monoalkyl and dialkyl esters of fumaric acid; maleimide monomers, such as, maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; acrylonitrile monomers, such as acrylonitrile and methacrylonitrile; amido-containing vinyl monomers, such as acrylamide and methacrylamide; vinyl esters, such as vinyl acetate, vinyl propionate, vinyl pivalate, vinyl benzoate, and vinyl cinnamate; alkenes, such as ethylene, propylene and isobutylene; conjugated dienes, such as butadiene and isoprene; and vinyl chloride, vinylidene chloride, allyl chloride, and allyl alcohol. These compounds may be used alone, or at least two may be copolymerized.

The main chain of the vinyl polymer is preferably one produced by polymerizing predominantly at least one monomer selected from the group consisting of (meth)acrylic monomers and isobutylene monomers. The term "predominantly" as used herein means that the above-mentioned monomer accounts for not less than 30 mole%, preferably not less than 50 mole%, of the monomer units constituting the vinyl polymer.

In particular, from the viewpoint of physical properties of a product, etc., (meth)acrylic monomers are preferred. Acrylate monomers and methacrylate monomers are more preferred, acrylate monomers are further preferred. For general building and construction, and the like applications, butyl acrylate monomers are further more preferred from the viewpoint that low viscosity of formulations, low modulus, high elongation, good weather resistance, and good heat resistance of cured products obtained therefrom, and the like physical properties are required. On the other hand, for automobile and the like applications where the oil resistance and the like are required, copolymers predominantly composed of ethyl acrylate are further more preferred. The polymer predominantly composed of ethyl acrylate is somewhat inferior in characteristics at low temperature (cold resistance), although it is excellent in oil resistance. Therefore, it is possible to substitute a part of ethyl acrylate units into butyl acrylate units for improving the characteristics at low temperature. However, since the good oil resistance becomes deteriorated as a proportion of butyl acrylate increases, the proportion of butyl acrylate is preferably not more than 80 mol%, more preferably not more than 60 mol%, further preferably not more than 40 mol%, and particularly more preferably not more than 30 mol%, according to the applications where the oil resistance is required. Furthermore, to improve low-temperature characteristics or the like without deteriorating oil resistance, it is also preferable that 2-methoxyethyl acrylate or 2-ethoxyethyl acrylate having an oxygen-introduced alkyl group in its side chain. However, when heat resistance is required, the ratio thereof is preferably not more than 60 mol% and more preferably not more than 40 %, since heat resistance tends to be poor by introduction of an alkoxy group having ether bond in a side chain. A polymer suitable for various uses or required purposes can be obtained by modifying the ratios of monomers in view of desired properties such as oil resistance, heat resistance or low-temperature characteristics. For example, as the polymer having well-balanced properties among oil resistance, heat resistance, low-temperature characteristics and the like, there may be mentioned, but is not limited to, a copolymer of ethyl acrylate / butyl acrylate / 2-methoxyethyl acrylate (40 to 50 / 20 to 30 / 20 to 30, by mole ratio), among others. When it is to be used as or in a pressure-sensitive adhesive or an adhesive, the composition of the invention is preferably a 2-ethylhexyl acrylate/butyl acrylate polymer.

To make the cured product of the invention, which is obtained when an epoxy resin and/or oxetane resin is added to the vinyl polymer and the mixture is cured, to be transparent, the vinyl polymer is preferably compatible with the epoxy resin and/or oxetane resin, and a polymer or a copolymer having higher polarity than that of a butyl acrylate homopolymer is suitable, and a polymer or a copolymer the main chain of which has a repeating unit structure represented by the general formula (a) is more preferred.

-[CH₂-CR(COOR')]- (a)

(wherein, R represents a hydrogen atom or a methyl group; R' may be same or different and each represents an alkoxyalkyl group or an alkyl group having 1 to 3 carbon atoms.)

The polymer or copolymer having higher polarity than that of a butyl acrylate homopolymer is not particularly limited and examples are copolymers of butyl acrylate and a monomer with higher polarity than that of butyl acrylate. Examples of the monomer with higher polarity than that of butyl acrylate include, for example, ethyl acrylate and 2-methylethyl acrylate. For example, an ethyl acrylate / butyl acrylate / 2-methoxyethyl acrylate copolymer (40 to 50 / 20 to 30 / 20 to 30, by mole ratio) is sufficiently compatible with various kinds of epoxy resins and easy to give a transparent cured product and therefore it is preferable.

To improve the compatibility with another polymer, for example, a modified silicone resin (an oxyalkylene polymer having a crosslinkable silyl group), a monomer having a long chain alkyl group such as stearyl and lauryl group may be copolymerized. Although not being limited particularly, copolymerization of 5 to 30% by mole of stearyl acrylate or lauryl acrylate remarkably improves the compatibility with the modified silicone resin. Since the compatibility differs depending on the molecular weight of each polymer, the ratio of the monomer to be copolymerized is preferable to be selected in accordance with the molecular weight. At that time, block copolymerization may be carried out. An effect can be caused with a small amount of the monomer.

The curable composition comprising the vinyl polymer having a functional silyl group may sometimes have a retarded curability because of storage, that is, the composition may be sometimes deteriorated in the storage stability. For example, copolymerization of methyl acrylate sometimes makes it possible to suppress the deterioration. The copolymerization may be also effective in the case of improving the strength of the cured product. In this case, similarly the ratio of the monomers to be copolymerized may be selected depending on the molecular weights and/or block copolymerization may be carried out.

In the present invention, these preferred monomers may be copolymerized, e.g., block-copolymerized, with another monomer. In this case, the content by weight of the preferred monomers is preferably 40% or more. In the above expression, for example, the term "(meth)acrylic acid" means acrylic acid and/or methacrylic acid.

The molecular weight distribution [ratio (Mw/Mn) of the weight average molecular weight (Mw) to the number average molecular weight (Mn) determined by gel permeation chromatography] of the vinyl polymer of the present invention is not particularly limited, but the ratio is preferably less than 1.8, and further preferably 1.3 or less from the workability viewpoint. In GPC measurement in the present invention, a number average molecular weight and the like may be generally determined in terms of polystyrene using chloroform as a mobile phase and a polystyrene gel column for measurement.

The number average molecular weight of the vinyl polymer of the present invention is not particularly restricted, and preferably in a range of 500 to 1, 000, 000, more preferably 3, 000 to 50,000, and particularly preferably not lower than 10,000 with gel permeation chromatography from the workability and physical properties viewpoints. Naturally, as the molecular weight is lower, the compatibility with other resins (various polymers) becomes better and the cured products obtained tends to have higher modulus and low elongation and on the contrary, if the molecular weight is higher, inversed tendency would be observed.

### <Method of main chain synthesis>

In accordance with the invention, the method of synthesizing the vinyl polymer is not limited, and the free radical polymerization technique may be used. Further, the controlled radical polymerization technique is preferred, the living radical polymerization technique is more preferred, and the atom transfer radical polymerization technique is particularly preferred. These techniques are described below. For an isobutylene polymer, living cation polymerization technique is preferred.

### Controlled radical polymerization

Radical polymerization processes are classified into a general radical polymerization in which a monomer having a specified functional group and a vinyl monomer are simply copolymerized using an azo compound, a peroxide, or the like as a polymerization initiator, and a controlled radial polymerization in which a specified functional group can be introduced at a controlled position such as an end or the like.

The general radical polymerization is a simple process, and a monomer having a specified functional group can be introduced into a polymer only stochastically. When a polymer with high functionality is desired, therefore, a considerable amount of a monomer must be used. Conversely, use of a small amount of a monomer has the problem of increasing the ratio of a polymer in which the specified functional group is not introduced. There is also the problem of producing only a polymer with a wide molecular weight distribution and high viscosity due to free radical polymerization.

The controlled radical polymerization is further classified into a chain transfer agent process in which polymerization is performed using a chain transfer agent having a specified functional group to produce a vinyl polymer having the functional group at an end, and a living radical polymerization in which polymerization propagation termini propagate without causing termination reaction or the like to produce a polymer having a molecular weight substantially equal to the design.

The chain transfer agent process is capable of producing a polymer with high functionality, but a considerable amount of a chain transfer agent having a specified functional group must be used relative to the initiator, thereby causing an economical problem of the cost including the treatment cost. Like the general radical polymerization, the chain transfer agent process also has the problem of producing only a polymer with a wide molecular weight distribution and high viscosity because it is free radical polymerization.

It is true that the living radical polymerization belongs to a radical polymerization which has a high polymerization rate and is difficult to control because termination reaction easily occurs due to radical coupling or the like. However, unlike in the above-mentioned processes, in the living radical polymerization, termination reaction little occurs, a polymer having a narrow molecular weight distribution (Mw/Mn of about 1.1 to 1.5) can be produced, and the molecular weight can be freely controlled by changing the charge ratio of the monomer to the initiator.

Therefore, the living radical polymerization is capable of producing a polymer with a narrow molecular weight distribution and low viscosity and introducing a monomer having a specified functional group into a substantially desired position. Thus, this process is more preferred as a process for producing the vinyl polymer having the specified functional group.

In a narrow sense, "living polymerization" means polymerization in which molecular chains propagate while maintaining activity at the termini. However, the living polymerization generally includes pseudo-living polymerization in which molecular chains propagate in equilibrium between deactivated and activated termini. The definition in the present invention includes the latter.

In recent, the living radical polymerization has been actively studied by various groups. Examples of studies include a process using a cobalt porphyrin complex, as shown in Journal of American Chemical Society (J. Am. Chem. Soc.), 1994, vol. 116, p. 7943, a process using a radical capping agent such as a nitroxide compound, as shown in Macromolecules, 1994, vol. 27, p. 7228, and an atom transfer radical polymerization (ATRP) process using an organic halide or the like as an initiator and a transition metal complex as a catalyst.

Among these living radical polymerization processes, the atom transfer radical polymerization in which a vinyl monomer is polymerized using an organic halide or a halogenated sulfonyl compound as an initiator and a transition metal complex as a catalyst has the above-mentioned characteristics of the living radical polymerization and also has the characteristic that a terminus has a halogen or the like, which is relatively useful for functional group conversion reaction, and the initiator and catalyst have high degrees of design freedom. Therefore, the atom transfer radical polymerization is more preferred as a process for producing a vinyl polymer having a specified functional group. Examples of the atom transfer radical polymerization include the processes disclosed in Matyjaszewski, et al., Journal of American Chemical Society (J. Am. Chem. Soc.), 1995, vol. 117, p. 5614, Macromolecules, 1995, vol. 28, p. 7901, Science, 1996, vol. 272, p. 866, WO96/30421, WO97/18247, WO98/01480 and WO98/40415, Sawamoto, et al., Macromolecules, 1995, vol. 28, p. 1721, and Japanese Kokai Publication Hei-09-208616 and Japanese Kokai Publication Hei-08-41117.

In the present invention, any one of these living radical polymerization processes may be used without limitation, but the atom transfer radical polymerization is preferred.

Hereinafter, the living radical polymerization will be described in detail. First, the controlled radical polymerization using a chain transfer agent, which may be used in the production of the vinyl polymers mentioned below, will be described. The radical polymerization using the chain transfer agent (telomer) is not particularly limited, but examples of a process for producing a vinyl polymer having a terminal structure suitable for the present invention include the following two processes:
A process for producing a halogen-terminated polymer using a halogenated hydrocarbon as the chain transfer agent as disclosed in Japanese Kokai Publication Hei-04-132706, and a method for producing a hydroxyl group-terminated polymer using a hydroxyl group-containing mercaptane or a hydroxyl group-containing polysulfide or the like as the chain transfer agent as disclosed in Japanese Kokai Publication Sho-61-271306, Japanese Patent Publication No. 2594402, and Japanese Kokai Publication Sho-54-47782.

Next, the living radical polymerization will be described.

First, the process using a nitroxide compound and the like as a radical capping agent will be described. This polymerization generally uses stable nitroxy free radical (=N-O·) as a radical capping agent. Preferred examples of such a compound include, but not limited to, nitroxy free radicals produced from cyclic hydroxyamines, such as 2,2,6,6-substituted-1-piperidinyloxy radical and 2,2,5,5-substituted-1-pyrroridinyloxy radical. As a substituent, an alkyl group having 4 or less carbon atoms, such as methyl or ethyl, is suitable. Specific examples of a nitroxy free radical compound include, but not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N, N-di-tert-butylaminoxy radical. Instead of the nitroxy free radical, stable free radical such as galvinoxyl free radical may be used.

The radical capping agent is used in combination with the radical generator. The reaction product of the radical capping agent and the radical generator possibly servers as a polymerization initiator to promote polymerization of an addition-polymerizable monomer. The ratio between both agents used is not particularly limited, but the amount of the radical generator is preferably 0.1 to 10 moles per mole of the radical generator.

As a radical generator, any one of various compounds can be used, but a peroxide capable of generating radical under a polymerization temperature is preferred. Examples of the peroxide include, but not limited to, diacyl peroxides, such as benzoyl peroxide and lauroyl peroxide; dialkyl peroxides, such as dicumyl peroxide and di-tert-butyl peroxide; peroxycarbonates, such as diisopropyl peroxydicarbonate and bis(4-tert-butylcyclohexyl)peroxydicarbonate; and alkyl peresters, such as tert-butyl peroxyoctoate and tert-butyl peroxybenzoate. In particular, benzoyl peroxide is preferred. Instead of the peroxide, a radical generator such as a radical generating azo compound, e.g., azobisisobutyronitrile, may be used.

As reported in Macromolecules, 1995, 28, 2993, the alkoxyamine compound shown below may be used as the initiator instead of a combination of the radical capping agent and the radical generator.

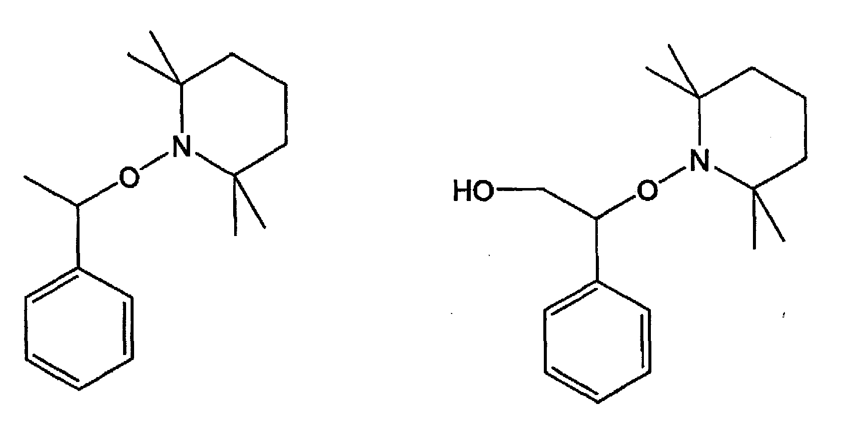

When the alkoxyamine compound is used as the initiator, the use of a compound having a functional group such as a hydroxyl group as shown in the above figure produces a polymer having the functional group at an end. When this compound is used in the method of the present invention, a polymer having the functional group at an end is produced.

The conditions of polymerization using the nitroxide compound and/or the like as the radical capping agent, such as the monomer, the solvent, the polymerization temperature, and the like, are not limited. However, these conditions may be the same as those in atom transfer radical polymerization which will be described below.

### Atom transfer radical polymerization

Next, the atom transfer radical polymerization suitable as the living radical polymerization of the present invention will be described.

The atom transfer radical polymerization uses, as the initiator, an organic halide, particularly an organic halide having a highly reactive carbon-halogen bond (e.g., a carbonyl compound having a halogen at an α-position, or a compound having a halogen at a benzyl position), or a halogenated sulfonyl compound.

Specific examples of such a compound include the following:
C₆H₅-CH₂X, C₆H₅-C(H) (X)CH₃, and C₆H₅-C(X) (CH₃) ₂
(wherein C₆H₅ is a phenyl group, X is chlorine, bromine, or iodine);
R³-C (H) (X) -CO₂R⁴, R³-C (CH₃) (X) -CO₂R⁴, R³-C (H) (X) -C (O) R⁴, and
R³-C(CH₃)(X)-C(O)R⁴
(wherein R³ and R⁴ each is a hydrogen atom or an alkyl group, an aryl group, or an aralkyl group having 1 to 20 carbon atoms; X is chlorine, bromine, or iodine); and
R³-C₆H₄-SO₂X
(wherein R³ is a hydrogen atom or an alkyl group, an aryl group, or an aralkyl group having 1 to 20 carbon atoms; X is chlorine, bromine, or iodine).

As the initiator of the atom transfer radical polymerization, an organic halide or halogenated sulfonyl compound having a functional group other than a functional group which initiates polymerization can be used. In this case, the resultant vinyl polymer has the functional group at one of the main chain ends and a polymerization propagation terminal-structure of atom transfer radical polymerization at the other end. Examples of such a functional group include alkenyl, crosslinkable silyl, hydroxyl, epoxy, amino, and amido group.

Examples of an organic halide having an alkenyl group include, but not limited to, compounds having the structure represented by the general formula (2):

R⁶R⁷C(X)-R⁸-R⁹-C(R⁵)=CH₂ (2)

(wherein R⁵ is a hydrogen atom or a methyl group; R⁶ and R⁷ each is a hydrogen atom, an alkyl group, an aryl group or an aralkyl group having 1 to 20 carbon atoms, or R⁶ and R⁷ are bonded together at the other ends; R⁸ is -C(O)O- (ester group), -C(O)- (keto group), or an o-, m-, or p-phenylene group; R⁹ is a direct bond or a divalent organic group having 1 to 20 carbon atoms, which may contain at least one ether bond; and X is chlorine, bromine, or iodine).

Specific examples of substituents R⁶ and R⁷ include hydrogen, methyl, ethyl, n-propyl, isopropyl, butyl, pentyl, and hexyl group. Substituents R⁶ and R⁷ may be bonded together at the other ends to form a cyclic skeleton.

Specific examples of an alkenyl group-containing organic halide represented by the general formula (2) are the following:
XCH₂C (O)O (CH₂)ₙCH=CH₂,
H₃CC(H) (X)C(O)O(CH₂)ₙCH=CH₂,
(H₃C)₂C (X) C (O) O (CH₂)ₙCH=CH₂,
CH₃CH₂C(H) (X) C (O) O (CH₂)ₙCH=CH₂, and 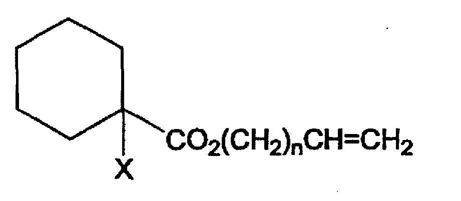 (wherein X is chlorine, bromine, or iodine, and n is an integer of 0 to 20);
XCH₂C (O)O (CH₂)ₙO (CH₂)ₘCH=CH₂,
H₃CC(H) (X)C(O)O(CH₂)ₙO(CH₂)ₘCH=CH₂,
(H₃C) ₂C (X) C (O) O (CH₂) ₙO (CH₂)ₘCH=CH₂,
CH₃CH₂C(H) (X)C(O)O(CH₂)ₙO(CH₂)ₘCH=CH₂, and 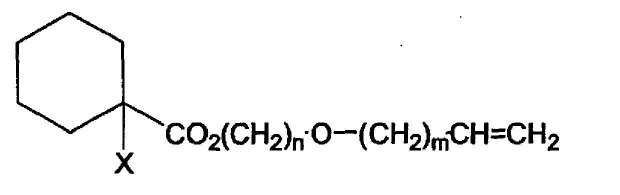 (wherein X is chlorine, bromine, or iodine, n is an integer of 1 to 20, and m is an integer of 0 to 20);
o, m, p-XCH₂-C₆H₄-(CH₂)ₙ-CH=CH₂,
o, m, p-CH₃C (H) (X) -C₆H₄- (CH₂)ₙ-CH=CH₂, and
o, m, p-CH₃CH₂C (H) (X) -C₆H₄- (CH₂)ₙ-CH=CH₂
(wherein X is chlorine, bromine, or iodine, and n is an integer of 0 to 20);
o, m, p-XCH₂-C₆H₄- (CH₂)ₙ-O- (CH₂)ₘ-CH=CH₂,
o, m, p-CH₃C (H) (X) -C₆H₄- (CH₂)ₙ-O- (CH₂)ₘ-CH=CH₂, and
o, m, p-CH₃CH₂C (H) (X) -C₆H₄- (CH₂)ₙ-O- (CH₂)ₘCH=CH₂
(wherein X is chlorine, bromine, or iodine, n is an integer of 1 to 20, and m is an integer of 0 to 20);
o, m, p-XCH₂-C₆H₄-O-(CH₂)ₙ-CH=CH₂,
o, m, p-CH₃C (H) (X) -C₆H₄-O-(CH₂)ₙ-CH=CH₂, and
o, m, p-CH₃CH₂C (H) (X) -C₆H₄-O- (CH₂)ₙ-CH=CH₂
(wherein X is chlorine, bromine, or iodine, and n is an integer of 0 to 20); and
o, m, p-XCH₂-C₆H₄-O- (CH₂)ₙ-O- (CH₂)ₘ-CH=CH₂,
o, m, p-CH₃C (H) (X)-C₆H₄-O- (CH₂)ₙ-O- (CH₂)ₘ-CH=CH₂, and
o, m, p-CH₃CH₂C (H) (X) -C₆H₄-O- (CH₂)ₙ-O- (CH₂)ₘ-CH=CH₂
(wherein X is chlorine, bromine, or iodine, n is an integer of 1 to 20, and m is an integer of 0 to 20).

Other examples of an organic halide having an alkenyl group include compounds represented by the general formula (3) :

H₂C=C (R⁵) -R⁹-C (R⁶) (X) -R¹⁰-R⁷ (3)

(wherein R⁵, R⁶, R⁷, R⁹, and X represent the same as the above, and R¹⁰ represents a direct bond or -C (O) O- (ester group), -C (O)-(keto group), or an o-, m-, or p-phenylene group).

R⁹ is a direct bond or a divalent organic group having 1 to 20 carbon atoms (which may contain at least one ether bond) . When R⁹ is a direct bond, the compound is a halogenated allyl compound in which a vinyl group is bonded to the carbon bonded to a halogen. In this case, the carbon-halogen bond is activated by the adjacent vinyl group, and thus a C(O)O or phenylene group is not necessarily required as R¹⁰, and a direct bond may be present. When R⁹ is not a direct bond, R¹⁰ is preferably a C (O) O, C (O), or phenylene group for activating the carbon-halogen bond.

Specific examples of the compounds represented by the general formula (3) include the following:
CH₂=CHCH₂X, CH₂=C(CH₃)CH₂X, CH₂=CHC(H) (X)CH₃,
CH₂=C (CH₃) C (H) (X) CH₃, CH₂=CHC (X) (CH₃)₂, CH₂=CHC (H) (X) C₂H₅,
CH₂=CHC(H) (X)CH(CH₃)₂, CH₂=CHC(H) (X)C₆H₅, CH₂=CHC(H) (X) CH₂C₆H₅,
CH₂=CHCH₂C (H) (X)-CO₂R, CH₂=CH (CH₂)₂C (H) (X) -CO₂R,
CH₂=CH (CH₂)₃C (H) (X) -CO₂R, CH₂=CH (CH₂)₈C (H) (X) -CO₂R,
CH₂=CHCH₂C (H) (X) -C₆H₅, CH₂=CH (CH₂)₂C (H) (X) -C₆H₅, and
CH₂=CH (CH₂)₃C (H) (X)-C₆H₅
(wherein X is chlorine, bromine, or iodine, and R is an alkyl, aryl, or aralkyl group having 1 to 20 carbon atoms).

Specific examples of a halogenated sulfonyl compound having an alkenyl group include the following:
o-, m-, p-CH₂=CH-(CH₂)ₙ-C₆H₄-SO₂X, and
o-, m-, p-CH₂=CH-(CH₂)ₙ-O-C₆H₄-SO₂X
(wherein X is chlorine, bromine, or iodine, and n is an integer of 0 to 20).

Specific examples of an organic halide having a crosslinkable silyl group include, but not limited to, compounds with a structure represented by the general formula (4) :

R⁶R⁷C (X) -R⁸-R⁹-C (H) (R⁵) CH₂- [Si (R¹¹) _{2-b} (Y)_{b}O]ₘ-Si (R¹²) ₃₋ₐ (Y)ₐ (4)

(wherein R⁵, R⁶, R⁷, R⁸, R⁹ and X represent the same as the above, and R¹¹ and R¹² each represents an alkyl, aryl or aralkyl group having 1 to 20 carbon atoms, or a triorganosiloxy group represented by (R')₃SiO- (the three R's each is a monovalent hydrocarbon group having 1 to 20 carbon atoms and may be the same or different) ; when two or more groups R¹¹ or R¹² are present, they may be the same or different; Y represents a hydroxyl group or a hydrolyzable group, and when two or more groups Y are present, they may be the same or different; a represents 0, 1, 2, or 3; b represents 0, 1, or 2; m is an integer of 0 to 19; and a + mb ≥1 is satisfied).

Specific examples of the compounds represented by the general formula (4) include the following:
XCH₂C (O)O(CH₂)ₙSi (OCH₃)₃,
CH₃C(H) (X) C(O) O (CH₂)ₙSi (OCH₃)₃,
(CH₃)₂C(X)C(O)O(CH₂)ₙSi(OCH₃)₃,
XCH₂C (O) O (CH₂)ₙSi (CH₃) (OCH₃)₂,
CH₃C (H) (X) C (O) O (CH₂)ₙSi (CH₃) (OCH₃) ₂, and
(CH₃)₂C (X) C(O)O (CH₂)ₙSi (CH₃) (OCH₃)₂
(wherein X is chlorine, bromine, or iodine, and n is an integer of 0 to 20);
XCH₂C (O) O (CH₂) ₙO (CH₂) ₘSi (OCH₃)₃,
H₃CC (H) (X) C (O) O (CH₂) ₙO (CH₂) ₘSi (OCH₃) ₃,
(H₃C) ₂C (X) C (O) O (CH₂) ₙO (CH₂) ₘSi (OCH₃)₃,
CH₃CH₂C (H) (X) C (O) O (CH₂) ₙO (CH₂) ₘSi (OCH₃) ₃,
XCH₂C (O) O (CH₂) ₙO (CH₂) ₘSi (CH₃) (OCH₃) ₂,
H₃CC (H) (X) C (O) O (CH₂) ₙO (CH₂)ₘ-Si (CH₃) (OCH₃) ₂,
(H₃C) ₂C (X) C (O) O (CH₂) ₙO (CH₂)ₘ-S i (CH₃) (OCH₃) ₂, and
CH₃CH₂C (H) (X)C(O)O(CH₂)ₙO(CH₂)ₘ-Si(CH₃)(OCH₃)₂,
(wherein X is chlorine, bromine, or iodine, n is an integer of 1 to 20, and m is an integer of 0 to 20); and
o, m, p-XCH₂-C₆H₄- (CH₂)₂Si (OCH₃)₃,
o, m, p-CH₃C(H) (X)-C₆H₄-(CH₂)₂Si(OCH₃)₃,
o, m, p-CH₃CH₂C (H) (X) -C₆H₄- (CH₂)₂Si (OCH₃) ₃,
o, m, p-XCH₂-C₆H₄- (CH₂) ₃Si (OCH₃) ₃,
o, m, p-CH₃C (H) (X)-C₆H₄- (CH₂) ₃Si (OCH₃) ₃,
o, m, p-CH₃CH₂C (H) (X)-C₆H₄- (CH₂) ₃Si (OCH₃) ₃,
o, m, p-XCH₂-C₆H₄- (CH₂)₂-O-(CH₂) ₃Si (OCH₃) ₃,
o, m, p-CH₃C (H) (X) -C₆H₄- (CH₂)₂-O- (CH₂) ₃Si (OCH₃) ₃,
o, m, p-CH₃CH₂C (H) (X) -C₆H₄- (CH₂)₂-O- (CH₂) ₃Si (OCH₃)₃,
o, m, p-XCH₂-C₆H₄-O- (CH₂) ₃Si (OCH₃) ₃,
o, m, p-CH₃C (H) (X) -C₆H₄-O- (CH₂) ₃Si (OCH₃) ₃,
o, m, p-CH₃CH₂C (H) (X) -C₆H₄-O- (CH₂)₃-Si (OCH₃) ₃,
o, m, p-XCH₂-C₆H₄-O- (CH₂)₂-O- (CH₂)₃-Si (OCH₃) ₃,
o, m, p-CH₃C (H) (X) -C₆H₄-O- (CH₂)₂-O- (CH₂)₃Si (OCH₃)₃, and
o, m, p-CH₃CH₂C (H) (X) -C₆H₄-O- (CH₂)₂-O- (CH₂) ₃Si (OCH₃) ₃
(wherein X is chlorine, bromine, or iodine).

Other examples of the organic halide having a crosslinkable silyl group include compounds with a structure represented by the general formula (5):

(R¹²) 3-a (Y)ₐSi- [OSi (R¹¹)_{2-b} (Y)_{b}]ₘ-CH₂-C (H) (R⁵)-R⁹-C (R⁶)(X)-R¹⁰-R⁷ (5)

(wherein R⁵, R⁶, R⁷, R⁹, R¹⁰, R¹¹, R¹², a, b, m, X and Y represent the same as the above).

Specific examples of such compounds include the following:
(CH₃O)₃SiCH₂CH₂C(H) (X)C₆H₅,
(CH₃O)₂ (CH₃) SiCH₂CH₂C (H) (X) C₆H₅,
(CH₃O)₃Si (CH₂) ₂C(H) (X)-CO₂R,
(CH₃O)₂ (CH₃)Si (CH₂)₂ C(H) (X) -CO₂R,
(CH₃O)₃Si (CH₂)₃C(H) (X)-CO₂R,
(CH₃O)₂ (CH₃) Si (CH₂)₃C (H) (X) -CO₂R,
(CH₃O)₃Si (CH₂)₄C(H)(X)-CO₂R,
(CH₃O)₂ (CH₃)Si (CH₂) ₄C (H) (X) -CO₂R,
(CH₃O)₃Si (CH₂)₉C (H) (X) -CO₂R,
(CH₃O)₂ (CH₃) Si (CH₂)₉C (H) (X) -CO₂R,
(CH₃O)₃Si (CH₂)₃C (H) (X) -C₆H₅,
(CH₃O)₂ (CH₃) Si (CH₂) ₃C (H) (X) -C₆H₅,
(CH₃O)₃Si (CH₂) 4C(H)(X)-C₆H₅, and
(CH₃O)₂ (CH₃) Si (CH₂)₄C (H) (X) -C₆H₅
(wherein X is chlorine, bromine, or iodine, and R is alkyl, aryl, or aralkyl group having 1 to 20 carbon atoms).

Examples of the hydroxyl group-containing organic halide or halogenated sulfonyl compound include, but not limited to, the following:

HO- (CH₂)ₙ-OC (O) C (H) (R) (X)

(wherein X is chlorine, bromine, or iodine, R is a hydrogen atom or alkyl, aryl, or aralkyl group having 1 to 20 carbon atoms, and n is an integer of 1 to 20).

Examples of the amino group-containing organic halide or halogenated sulfonyl compound include, but not limited to, the following:

H₂N-(CH₂)ₙ-OC(O)C(H)(R)(X)

(wherein X is chlorine, bromine, or iodine, R is a hydrogen atom or alkyl, aryl, or aralkyl group having 1 to 20 carbon atoms, and n is an integer of 1 to 20) .

Examples of the epoxy group-containing organic halide or halogenated sulfonyl compound include, but not limited to, the following: 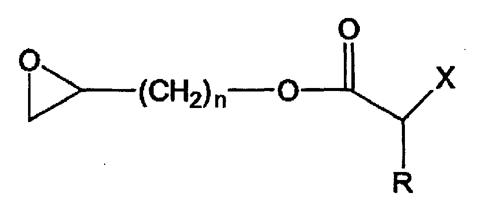 (wherein X is chlorine, bromine, or iodine, R is a hydrogen atom or alkyl, aryl, or aralkyl group having 1 to 20 carbon atoms, and n is an integer of 1 to 20).

In order to obtain a polymer having at least two polymerization propagation terminal structures per molecule, an organic halide or halogenated sulfonyl compound having at least two initiation points is preferably used as the initiator. Examples of such a compound include the following:

o,m,p- X-CH₂-C₆H₄-CH₂-X

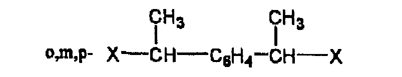

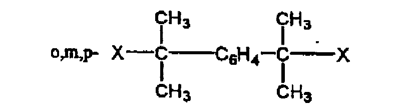

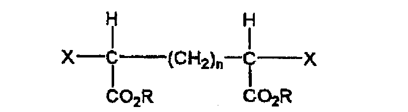

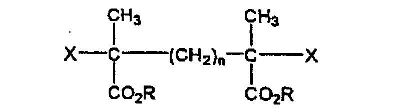

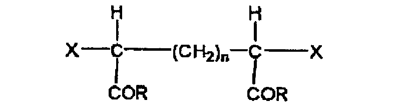

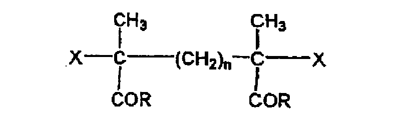

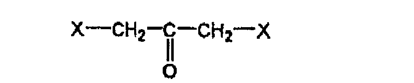

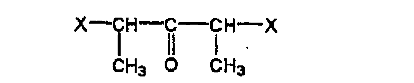

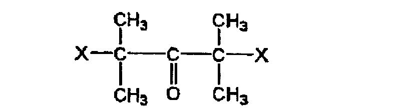

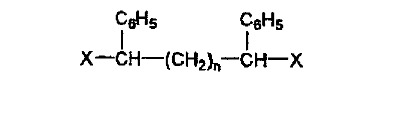

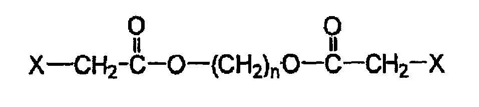

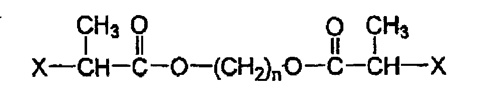

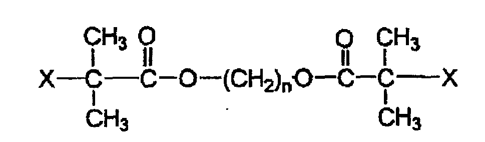

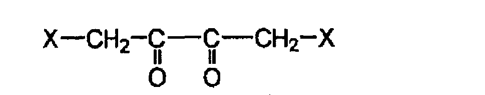

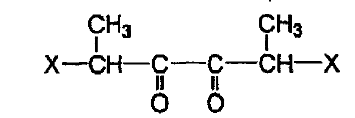

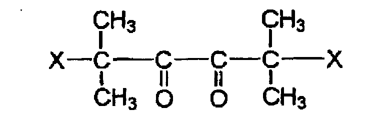

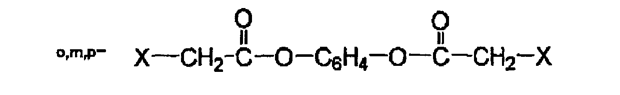

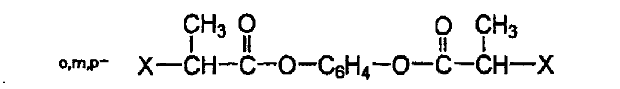

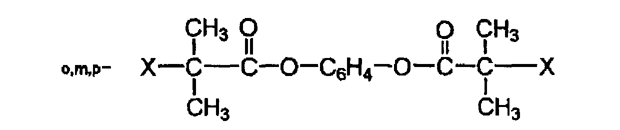

o.m.p- X-SO₂-C₆H₄-SO₂-X

(wherein X is chlorine, bromine, or iodine, R is a hydrogen atom or alkyl, aryl, or aralkyl group having 1 to 20 carbon atoms, and n is an integer of 1 to 20).

The vinyl monomer used in the polymerization is not particularly limited, and any of the compounds listed above can be preferably used.

The transition metal complex used as the polymerization catalyst is not particularly limited, but a metal complex composed of a VII, VIII, IX, X, or XI group element in the periodic table as a central metal is preferred. A complex of zero-valent copper, monovalent copper, divalent ruthenium, divalent iron, or divalent nickel is more preferred. Among these complexes, a copper complex is most preferred. Specific examples of a monovalent copper compound include cuprous chloride, cuprous bromide, cuprous iodide, cuprous cyanide, cuprous oxide, and cuprous perchlorate. When a copper compound is used, a ligand, such as 2,2'-bipyridyl or its derivative, 1,10-phenanthroline or its derivative, or polyamine, e.g., tetramethylethylenediamine, pentamethyldiethylenetriamine, or hexamethyl tris (2-aminoethyl) amine, is added for increasing catalyst activity. As a ligand, nitrogen-containing compounds are preferred, chelate nitrogen compounds are more preferred, N,N,N',N",N"-pentamethyldiethylenetriamine is further preferred. Also, a tristriphenylphosphine complex (RuCl₂(PPh₃)₃) of divalent ruthenium chloride is suitable as the catalyst. When a ruthenium compound is used as a catalyst, an aluminum alkoxide is added as an activator. Furthermore, a bistriphenylphosphine complex (FeCl₂(PPh₃)₂) of divalent iron, a bistriphenylphosphine complex (NiCl₂(PPh₃)₂) of divalent nickel, or a bistributylphosphine complex (NiBr₂(PBu₃)₂) of divalent nickel is preferred as the catalyst.

The polymerization can be performed without a solvent or in any of various solvents. Examples of the solvent include hydrocarbon solvents, such as benzene and toluene; ether solvents, such as diethyl ether and tetrahydrofuran; halogenated hydrocarbon solvents, such as methylene chloride and chloroform; ketone solvents, such as acetone, methyl ethyl ketone, and methyl isobutyl ketone; alcohol solvents, such as methanol, ethanol, propanol, isopropanol, n-butyl alcohol, and tert-butyl alcohol; nitrile solvents, such as acetonitrile, propionitrile, and benzonitrile; ester solvents, such as ethyl acetate and butyl acetate; and carbonate solvents, such as ethylene carbonate and propylene carbonate. These solvents can be used alone or as a mixture of two or more.

The polymerization can be performed in a range of 0°C to 200°C, and preferably 50°C to 150°C without any purpose of restriction.

The atom transfer radical polymerization of the invention includes so called reverse atom transfer radical polymerization. The reverse atom transfer radical polymerization is a method comprising reacting an ordinary atom transfer radical polymerization catalyst in its high oxidation state resulting from radical generation, for example Cu (II') when Cu(I) is used as the catalyst, with an ordinary radical initiator, such as a peroxide, to thereby bring about an equilibrium state like in atom transfer radical polymerization (cf. Macromolecules, 1999, 32, 2872).

### <Functional groups>

### Number of crosslinkable silyl groups

The number of crosslinkable silyl groups in the vinyl polymer is not particularly restricted and, from the viewpoint of the curability of the composition and the physical properties of the cured product, preferably not smaller than 1, more preferably not smaller than 1.2 but not greater than 3.5, further preferably not smaller than 1.4 but not greater than 2, on average in one molecule.

### Position of crosslinkable silyl group

The crosslinkable silyl groups which the vinyl polymer (I) according to the invention has occur respectively at a molecular terminus. Their occurrence at molecular termini makes it possible for the intercrosslink molecular weight, which exerts a great influence on the rubber elasticity, to be great; accordingly, the cured products obtained by curing the curable composition can be provided with good rubber-like properties. Although the crosslinkable silyl group may occur at a site other than the molecular terminus, more preferably, all crosslinkable functional groups are located at molecular chain termini.

Methods of producing vinyl polymers, in particular (meth) acrylic polymers, having at least one crosslinkable silyl group such as mentioned above at a molecular terminus thereof are disclosed in Japanese Kokoku Publication Hei-03-14068, Japanese Kokoku Publication Hei-04-55444 and Japanese Kokai Publication Hei-06-211922, among others. However, these methods are free radical polymerization methods in which the above-mentioned "chain transfer agent methods" is used and, therefore, the polymers obtained generally have problems, namely they show a molecular weight distribution represented by Mw/Mn as wide as not less than 2 as well as a high viscosity, although they have crosslinkable silyl groups, in relatively high proportions, at molecular chain termini. Therefore, for obtaining vinyl polymers showing a narrow molecular weight distribution and a low viscosity and having crosslinkable silyl groups, in high proportions, at molecular chain termini, the above-described "living radical polymerization method" is preferably used. The present invention is not restricted to the polymers showing a narrow molecular weight distribution, however.

In the following, an explanation is made of these functional groups.

### Crosslinkable silyl groups

As the crosslinkable silyl groups to be used in the practice of the present invention, there may be mentioned those groups represented by the general formula (1):

-[Si(R¹)_{2-b}(Y)_{b}O]ₘ-Si(R²)₃₋ₐ (Y)ₐ (1)

{wherein, R¹ and R² each is an alkyl group containing 1 to 20 carbon atoms, an aryl group containing 6 to 20 carbon atoms, an aralkyl group containing 7 to 20 carbon atoms or a triorganosiloxy group represented by (R')₃SiO- (in which R' is a univalent hydrocarbon group containing 1 to 20 carbon atoms and the three R' groups may be the same or different) and, when there are two or more R¹ or R² groups, they may be the same or different; Y represents a hydroxyl group or a hydrolyzable group and, when there are two or more Y groups, they may be the same or different; a represents 0, 1, 2 or 3, b represents 0, 1 or 2, and m is an integer of 0 to 19, provided that the relation a + mb ≥ 1 should be satisfied.}

As the hydrolyzable group, there may be mentioned, among others, a hydrogen atom and those groups which are in general use, for example alkoxy, acyloxy, ketoximate, amino, amido, aminoxy, mercapto and alkenyloxy groups. Among them, alkoxy, amido and aminoxy groups are preferred. In view of mild hydrolyzability and ease of handling, alkoxy groups are particularly preferred. For alkoxy groups, the less carbon atoms an alkoxy group has, the more active said group is. Among alkoxy groups, methoxy group > ethoxy group > propoxy group > ... becomes less active in that order and, therefore, they can be selected according to the purpose and/or use.

One to three hydrolyzable groups and/or hydroxyl groups can be bound to each silicon atom and it is preferred that (a + Σb) be within the range of 1 to 5. When there are two or more hydrolyzable groups or hydroxyl groups in one crosslinkable silyl group, they may be the same or different. The number of silicon atoms forming the crosslinkable silyl group is not less than 1 and, in the case of silicon atoms connected by siloxane or like bonding, it is preferably not more than 20. Particularly preferred are crosslinkable silyl groups represented by the general formula (6):

-Si(R²)₃₋ₐ(Y)ₐ (6)

(wherein R² and Y are as defined above; and a is an integer of 1 to 3) because of ready availability.

Considering the curability, the integer a is preferably 2 or more, though this is not critical.

In many cases, a polymer which has a hydrolysable silicon group consisted of two hydrolysable groups bound to one silicon atom is used as the vinyl polymer containing a crosslinkable silyl group. In the case where the polymer is used for an adhesive or at a low temperature, particularly where a very high curing rate is required, the curing rate of the polymer is insufficient. On the contrary, in the case where flexibility is required after curing, the crosslinking density has to be lowered and accordingly due to the insufficient crosslinking density, the stickiness (surface tack) is sometimes increased. In such a case, one in which a is 3 (e.g. trimethoxy functional group) is preferable.

One in which a is 3 (e.g. trimethoxy functional group) is faster in curability than one in which a is 2 (e.g. dimethoxy functional group) but, as for the storage stability and/or mechanical properties (e.g. elongation), one in which a is 2 is sometimes superior. For attaining a balance between curability and physical properties, one in which a is 2 (e.g. dimethoxy functional group) and one in which a is 3 (e.g. trimethoxy functional group) may be used in combination.

For example, in the case where each of Ys is the same each other, the reactivity of the group represented by Y increases as the number represented by a increases, and therefore the curability and the mechanical properties of the cured product can be controlled by properly selecting Y and a and Y and a may be selected in accordance with the purposes and uses. Further, one in which a is 1 may be used as a chain expanding agent by being mixed with a polymer containing a crosslinkable silyl group, practically with at least one polymer selected from polysiloxane, polyoxypropylene, or polyisobutylene polymers. Accordingly, it becomes possible to obtain the composition with low viscosity before curing and high elongation at break, low bleeding property, less surface staining property, and excellent adhesiveness with a coating material after curing.

### Crosslinkable silyl group introduction method

In the following, several methods of crosslinkable silyl group introduction into the vinyl polymer of the present invention are described without any purpose of restriction.

At first, a method of introducing the crosslinkable silyl group, alkenyl group, and hydroxyl group by conversion of the terminal functional groups will be described. Since these functional groups may be precursors for other groups, it is described in the backward order from the crosslinkable silyl group.

As methods of synthesizing a vinyl polymer containing at least one crosslinkable silyl group, there may be mentioned, among others,
(A) the method which comprises subjecting a crosslinkable silyl group-containing hydrosilane compound to addition to a vinyl polymer having at least one alkenyl group in the presence of a hydrosilylation catalyst,
(B) the method which comprises reacting a vinyl polymer having at least one hydroxyl group with a compound having, in each molecule, a crosslinkable silyl group and a group capable of reacting with the hydroxyl group, such as an isocyanato group,
(C) the method which comprises subjecting a compound having, in each molecule, a polymerizable alkenyl group and a crosslinkable silyl group to reaction in synthesizing a vinyl polymer by radical polymerization,
(D) the method which comprises subjecting a chain transfer agent having a crosslinkable silyl group to reaction in synthesizing a vinyl polymer by radical polymerization, and
(E) the method which comprises reacting a vinyl polymer having at least one highly reactive carbon-halogen bond with a compound having, in each molecule, a crosslinkable silyl group and a stable carbanion.

The vinyl polymer having at least one alkenyl group, which is to be used in the above method (A), can be obtained by various methods. Several methods of synthesis are mentioned below, without any purpose of restriction, however.
(A-a) Method comprising subjecting to reaction a compound having, in each molecule, a polymerizable alkenyl group together with a low polymerizability alkenyl group, such as one represented by the general formula (9) shown below as a second monomer in synthesizing a vinyl polymer by radical polymerization:

   H₂C=C (R¹⁴) -R¹⁵-R¹⁶-C (R¹⁷) =CH₂ (9)

   (wherein R¹⁹ represents a hydrogen atom or a methyl group, R¹⁵ represents -C(O)O- or an o-, m- or p-phenylene group, R¹⁶ represents a direct bond or a divalent organic group containing 1 to 20 carbon atoms, which may contain one or more ether bonds, and R¹⁷ represents a hydrogen atom, an alkyl group containing 1 to 20 carbon atoms, an aryl group containing 6 to 20 carbon atoms or an aralkyl group containing 7 to 20 carbon atoms).
   The time when the compound having, in each molecule, a polymerizable alkenyl group together with a low polymerizability alkenyl group is subjected to reaction is not particularly restricted but, in particular in living radical polymerization and when rubber-like properties are expected, the compound is preferably subjected to reaction as a second monomer at the final stage of the polymerization reaction or after completion of the reaction of the employed monomers.
(A-b) Method comprising subjecting to reaction a compound having at least two low polymerizability alkenyl groups, for example 1,5-hexadiene, 1,7-octadiene or 1, 9-decadiene, at the final stage of the polymerization or after completion of the reaction of the monomers employed in vinyl polymer synthesis by living radical polymerization.
(A-c) Method comprising reacting a vinyl polymer having at least one highly reactive carbon-halogen bond with one of various alkenyl-containing organometallic compounds, for example an organotin such as allyltributyltin or allyltrioctyltin, for substitution of the halogen.
(A-d) Method comprising reacting a vinyl polymer having at least one highly reactive carbon-halogen bond with a stabilized, alkenyl-containing carbanion such as one represented by the general formula (10), for substitution of the halogen:

   M⁺C⁻(R¹⁸) (R¹⁹)-R²⁰-C(R¹⁷)=CH₂ (10)

   (wherein R¹⁷ is as defined above, R¹⁸ and R¹⁹ each is an electron-withdrawing group capable of stabilizing the carbanion C⁻ or one of them is such an electron-withdrawing group and the other represents a hydrogen atom, an alkyl group containing 1 to 10 carbon atoms or a phenyl group, R²⁰ represents a direct bond or a divalent organic group containing 1 to 10 carbon atoms, which may contain one or more ether bonds, and M⁺ represents an alkali metal ion or a quaternary ammonium ion).
   Particularly preferred as the electron-withdrawing group R¹⁸ and/or R¹⁹ are those which have a structure of -CO₂R, -C(O)R or -CN.
(A-e) Method comprising reacting a vinyl polymer having at least one highly reactive carbon-halogen bond with a simple substance metal, such as zinc, or an organometallic compound and then reacting the thus-prepared enolate anion with an alkenyl-containing, electrophilic compound, such as an alkenyl-containing compound having a leaving group such as a halogen atom or an acetyl group, an alkenyl-containing carbonyl compound, an alkenyl-containing isocyanate compound or an alkenyl-containing acid halide.
(A-f) Method comprising reacting a vinyl polymer having at least one highly reactive carbon-halogen bond with an alkenyl-containing oxy anion or carboxylate anion such as one represented by the general formula (11) or (12), for substitution of the halogen:

   H₂C=C(R¹⁷)-R²¹-O⁻M⁺ (11)

   (wherein R¹⁷ and M⁺ are as defined above and R²¹ is a divalent organic group containing 1 to 20 carbon atoms, which may contain one or more ether bonds);

   H₂C=C (R¹⁷)-R²²-C (O) O⁻M⁺ (12)

   (wherein R¹⁷ and M⁺ are as defined above and R²² is a direct bond or a divalent organic group containing 1 to 20 carbon atoms, which may contain one or more ether bonds).
   The method of synthesizing the above-mentioned vinyl polymer having at least one highly reactive carbon-halogen bond includes, but is not limited to, atom transfer radical polymerization methods using an organic halide or the like as initiator and a transition metal complex as catalyst, as mentioned above.
   It is also possible to obtain the vinyl polymer having at least one alkenyl group from a vinyl polymer having at least one hydroxyl group. As utilizable methods, there may be mentioned, for example, the following, without any purpose of restriction.
(A-g) Method comprising reacting the hydroxyl group of a vinyl polymer having at least one hydroxyl group with a base, such as sodium methoxide, followed by reaction with an alkenyl-containing halide, such as allyl chloride.
(A-h) Method comprising reacting such hydroxyl group with an alkenyl-containing isocyanate compound, such as allyl isocyanate.
(A-i) Method comprising reacting such hydroxyl group with an alkenyl-containing acid halide, such as (meth) acrylic acid chloride, in the presence of a base, such as pyridine.
(A-j) Method comprising reacting such hydroxyl group with an alkenyl-containing carboxylic acid, such as acrylic acid, in the presence of an acid catalyst.

In the practice of the present invention, when no halogen is directly involved in the alkenyl group introduction, as in the method (A-a) or (A-b), the vinyl polymer is preferably synthesized by living radical polymerization. From the viewpoint of ready controllability, the method (A-b) is more preferred. In the case of (A-b), a polymer such that the region thereof from a terminal silyl group to another silyl group is wholly formed by carbon-carbon bonds and carbon-silicon bonds can be obtained by using a compound containing two alkenyl groups bound to a hydrocarbon group and, accordingly, the thermal stability, weathering resistance and chemical resistance of the polymer and cured products are increased.

In cases where alkenyl group introduction is effected by conversion of the halogen atom of a vinyl polymer having at least one highly reactive carbon-halogen atom, use is preferably made of a vinyl polymer having at least one terminal carbon-halogen bond, which is highly reactive, as obtained by subjecting a vinyl monomer to radical polymerization (atom transfer radical polymerization) using, as an initiator, an organic halide or halogenated sulfonyl compound having at least one highly reactive carbon-halogen bond and, as a catalyst, a transition metal complex. In view of easier controllability, the method (A-f) is more preferred.

The crosslinkable silyl group-containing hydrosilane compound is not particularly restricted but includes, as typical examples, compounds represented by the general formula (13) .

H-[Si (R¹)_{2-b} (Y)_{b}O]ₘ-Si (R²)₃₋ₐ (Y)ₐ (13)

{wherein R¹ and R² each represents an alkyl group containing 1 to 20 carbon atoms, an aryl group containing 6 to 20 carbon atoms, an aralkyl group containing 7 to 20 carbon atoms or a triorganosiloxy group represented by (R')₃SiO- (in which R' is a univalent hydrocarbon group containing 1 to 20 carbon atoms and the three R' groups may be the same or different) and, when there are two or more R¹ or R² groups, they may be the same or different; Y represents a hydroxyl group or a hydrolyzable group and, when there are two or more Y groups, they may be the same or different; a represents 0, 1, 2 or 3, b represents 0, 1 or 2 and m is an integer of 0 to 19, provided that the relation a + mb ≥ 1 should be satisfied}.

Particularly preferred among those hydrosilane compounds in view of ready availability are crosslinkable group-containing compounds represented by the general formula (14):

H-Si(R²)₃₋ₐ(Y)ₐ (14)

(wherein R² and Y are as defined above; and a is an integer of 1 to 3).

In subjecting the above crosslinkable silyl-containing hydrosilane compound to addition to the alkenyl group, a transition metal catalyst is generally used. The transition metal catalyst includes, among others, simple substance platinum; solid platinum dispersed on a support such as alumina, silica or carbon black; chloroplatinic acid; chloroplatinic acid complexes with alcohols, aldehydes, ketones or the like; platinum-olefin complexes; and
platinum(0)-divinyltetramethyldisiloxane complex. As other catalysts than platinum compounds, there may be mentioned RhCl(PPh₃)₃, RhCl₃, RuCl₃, IrCl₃, FeCl₃, AlCl₃, PdCl₂·H₂O, NiCl₂ and TiCl₄, for instance.

The method of producing the vinyl polymer having at least one hydroxyl group, which polymer is to be used in the methods (B) and (A-g) to (A-j), includes, but is not limited to, the following, among others.
(B-a) Method comprising subjecting to reaction, as a second monomer, a compound having both a polymerizable alkenyl group and a hydroxyl group in each molecule, for example one represented by the general formula (15) given below, in synthesizing the vinyl polymer by radical polymerization:

   H₂C=C (R¹⁴)-R¹⁵-R¹⁶-OH (15)

   (wherein R¹⁴, R¹⁵ and R¹⁶ are as defined above) .
   The time for subjecting to reaction the compound having both a polymerizable alkenyl group and a hydroxyl group in each molecule is not critical but, in particular in living radical polymerization, when rubber-like properties are demanded, the compound is preferably subj ected to reaction as a second monomer at the final stage of the polymerization reaction or after completion of the reaction of the employed monomer.
(B-b) Method comprising subjecting an alkenyl alcohol, such as 10-undecenol, 5-hexenol or allyl alcohol, to reaction at the final stage of polymerization reaction or after completion of the reaction of the employed monomer in synthesizing the vinyl polymer by living radical polymerization.
(B-c) Method comprising radical-polymerizing a vinyl monomer using a hydroxyl-containing chain transfer agent, such as a hydroxyl-containing polysulfide, in large amounts, as described in Japanese Kokai Publication Hei-05-262808, for instance.
(B-d) Method comprising subjecting a vinyl monomer to radical polymerization using hydrogen peroxide or a hydroxyl-containing initiator, as described in Japanese Kokai Publication Hei-06-239912 and Japanese Kokai Publication Hei-08-283310, for instance.
(B-e) Method comprising subjecting a vinyl monomer to radical polymerization using an alcohol in excess, as described in Japanese Kokai Publication Hei-06-116312, for instance.
(B-f) Method comprising introducing a terminal hydroxyl group by hydrolyzing the halogen atom of a vinyl polymer having at least one highly reactive carbon-halogen bond or reacting such halogen atom with a hydroxyl-containing compound, according to the method described in Japanese Kokai Publication Hei-04-132706, for instance.
(B-g) Method comprising reacting a vinyl polymer having at least one highly reactive carbon-halogen bond with a hydroxyl-containing stabilized carbanion, such as one represented by the general formula (16) for substitution of the halogen atom:

   M⁺C⁻(R¹⁸)(R¹⁹)-R²⁰-OH (16)

   (wherein R¹⁸, R¹⁹ and R²⁰ are as defined above) .
   Particularly preferred as the electron-withdrawing groups R¹⁸ and R¹⁹ are those having a structure of -CO₂R, -C(O)R or -CN.
(B-h) Method comprising reacting a vinyl polymer having at least one highly reactive carbon-halogen bond with a simple substance metal, such as zinc, or an organometallic compound and then reacting the thus-prepared enolate anion with an aldehyde or ketone.
(B-i) Method comprising reacting a vinyl polymer having at least one highly reactive carbon-halogen bond with a hydroxyl-containing oxy anion or carboxylate anion, such as one represented by the general formula (17) or (18) given below, for substitution of the halogen atom:

   HO-R²¹-O⁻M⁺ (17)

   (wherein R²¹ and M⁺ are as defined above);

   HO-R²²-C(O)O⁻M⁺ (18)

   (wherein R²² and M⁺ are as defined above) .
(B-j) Method comprising subjecting, as a second monomer, a compound having a low polymerizable alkenyl group and a hydroxyl group in each molecule to reaction at the final stage of the polymerization reaction or after completion of the reaction of the employed monomer in synthesizing the vinyl polymer by living radical polymerization.
   Such compound is not particularly restricted but may be a compound represented by the general formula (19), for instance:

   H₂C=C (R¹⁴)-(R²¹) -OH (19)

   (wherein R¹⁴ and R²¹ are as defined above).
   The compound represented by the above general formula (19) is not particularly restricted but, in view of ready availability, alkenyl alcohols such as 10-undecenol, 5-hexenol and allyl alcohol are preferred.
In the practice of the present invention, when no halogen is directly involved in hydroxyl group introduction, as in the methods (B-a) to (B-e) and (B-j), the vinyl polymer is preferably synthesized by living radical polymerization. The method (B-b) is more preferred from the viewpoint of ease of control.
In cases where hydroxyl group introduction is effected by conversion of the halogen atom of a vinyl polymer having at least one highly reactive carbon-halogen atom, use is preferably made of a vinyl polymer having at least one terminal carbon-halogen bond, which is highly reactive, as obtained by subjecting a vinyl monomer to radical polymerization (atom transfer radical polymerization) using an organic halide or halogenated sulfonyl compound as an initiator and, as a catalyst, a transition metal complex. From the viewpoint of ease of control, the method (B-i) is more preferred.

As the compound having a crosslinkable silyl group and a group capable of reacting with a hydroxyl group, such as an isocyanato group, in each molecule, there may be mentioned, for example, γ-isocyanatopropyltrimethoxysilane, γ-isocyanatopropylmethyldimethoxysialne, γ-isocyanatopropyltriethoxysilane and the like. If necessary, any of urethane formation reaction catalysts generally known in the art can be used.

The compound having both a polymerizable alkenyl group and a crosslinkable silyl group in each molecule, which is to be used in the method (C), includes, among others, trimethoxysilylpropyl (meth)acrylate, methyldimethoxysilylpropyl (meth)acrylate and like compounds represented by the general formula (20) given below:

H₂C=C (R¹⁴) -R¹⁵-R²³- [Si (R¹)_{2-b}(Y)_{b}O]ₘ-Si(R²)₃₋ₐ(Y)ₐ (20)

(wherein R¹, R², R¹⁴, R¹⁵, Y, a, b and m are as defined above and R²³ is a direct bond or a divalent organic group containing 1 to 20 carbon atoms, which may contain one or more ether bonds).

The time for subjecting the compound having both a polymerizable alkenyl group and a crosslinkable silyl group in each molecule is not critical but, in particular in living radical polymerization and when rubber-like properties are demanded, the compound is preferably subjected to reaction as a second monomer at the final stage of the polymerization reaction or after completion of the reaction of the employed monomer.

The chain transfer agent having a crosslinkable silyl group, which is to be used in the chain transfer agent method (D), includes mercaptan having a crosslinkable silyl group, hydrosilane having a crosslinkable silyl group, and the like, described in Japanese Kokoku Publication Hei-03-14068, Japanese Kokoku Publication Hei-04-55444, for instance.

The method of synthesizing the vinyl polymer having at least one highly reactive carbon-halogen bond, which is to be used in the method (E), includes, but is not limited to, the atom transfer radical polymerization method which uses an organic halide or the like as an initiator and a transition metal complex as a catalyst.

As the compound having both a crosslinkable silyl group and a stabilized carbanion in each molecule, there may be mentioned compounds represented by the general formula (21):

M⁺C⁻ (R¹⁸) (R¹⁹) -R²⁴-C (H) (R²⁵) -CH₂- [Si (R¹)_{2-b} (Y) _{b}O]ₘ-Si (R²)₃₋ₐ (Y)ₐ (21)

(wherein R¹, R², R¹⁸, R¹⁹, Y, a, b and m are as defined above, R²⁴ is a direct bond or a divalent organic group containing 1 to 10 carbon atoms, which may contain one or more ether bonds, and R²⁵ represents a hydrogen atom, an alkyl group containing 1 to 10 carbon atoms, an aryl group containing 6 to 10 carbon atoms or an aralkyl group containing 7 to 10 carbon atoms).

Particularly preferred as the electron-withdrawing groups R¹⁸ and R¹⁹ are those having a structure of -CO₂R, -C(O)R or -CN.

### <Use of a plurality of vinyl polymers>

The above-mentioned vinyl polymers may be used alone and two or more vinyl polymers may be used in combination. In the case where only one kind vinyl polymer is used, it is preferable to use a vinyl polymer having a molecular weight of 5,000 to 50,000 and 1.2 to 3.5 crosslinkable silyl groups. In the case of combination use of two or more vinyl polymers, if a first polymer is a vinyl polymer having a molecular weight of 5,000 to 50, 000 and 1.2 to 3.5 crosslinkable silyl groups and a second polymer is a polymer containing less crosslinkable silyl groups, it is possible to obtain the cured product with high elongation at break, low bleeding property, less surface staining property, and excellent adhesiveness with a coating material. Further, the viscosity of the composition can be lowered by setting the molecular weight of the second polymer to be lower. The molecular weight of the polymer to be the lower molecular weight component is preferably lower than 10,000, more preferably lower than 5,000 and the number of the crosslinkable silyl groups is preferably lower than 1.2 and more preferably lower than 1. Further, the molecular weight distribution is preferably lower than 1. 8 since the viscosity is decreased more. If the vinyl polymer containing a crosslinkable functional group and a molecular weight distribution of 1.8 or higher and the vinyl polymer containing a crosslinkable silyl group at one terminus are added, the effect to lower the viscosity is significant.

It is preferred to use the vinyl polymer containing a crosslinkable silyl group at one terminus and obtained by the following production method as the polymer having a low molecular weight and less crosslinkable silyl groups, because the crosslinkable silyl group can be reliably introduced.

The vinyl polymer containing a crosslinkable silyl group at one terminus consists of approximately one terminal crosslinkable silyl group per one molecule. The above-mentioned living radical polymerization method, particularly an atom transfer radical polymerization method is preferable to be employed, since the vinyl polymer containing a terminal crosslinkable silyl group at a high ratio, having narrow molecular weight distribution of lower than 1.8, and low viscosity can be obtained.

As methods of introducing a crosslinkable silyl group at one terminus, the following method can be used, for example. Here, for a method of introducing a crosslinkable silyl group, alkenyl group, and hydroxyl group by conversion of the terminal functional groups, it is described in the backward order from the method of introducing a crosslinkable silyl group because these functional groups may be precursors for other groups,.

As methods of synthesizing a vinyl polymer containing at least one crosslinkable silyl group, there may be mentioned, among others.

There may be mentioned,
(1) the method which comprises subjecting a crosslinkable silyl group-containing hydrosilane compound to addition to a polymer having one terminal alkenyl group in each molecule in the presence of a hydrosilylation catalyst,
(2) the method which comprises reacting a polymer having one terminal hydroxyl group in each molecule with a compound having, in each molecule, a crosslinkable silyl group and a group capable of reacting with the hydroxyl group, such as an isocyanato group, and
(3) the method which comprises reacting a polymer having one highly reactive terminal carbon-halogen bond in each molecule with a compound having, in each molecule, a crosslinkable silyl group and a stable carbanion.

The polymer having one terminal alkenyl group in each molecule, which is to be used in the above method (1), can be obtained by various methods. Several methods of production are mentioned below, without any purpose of restriction, however.
(1-1) Method comprising reacting a polymer having one highly reactive terminal carbon-halogen bond in each molecule with one of various alkenyl-containing organometallic compounds, for example an organotin such as allyltributyltin or allyltrioctyltin, for substitution of the halogen.
(1-2) Method comprising reacting a polymer having one highly reactive terminal carbon-halogen bond in each molecule with a stabilized, alkenyl-containing carbanion such as one represented by the general formula (10), for substitution of the halogen:

   M⁺C⁻(R¹⁸) (R¹⁹) -R²⁰-C (R¹⁷) =CH₂ (10)

   (wherein R¹⁸ and R¹⁹ each is an electron-withdrawing group capable of stabilizing the carbanion C⁻ or one of them is such an electron-withdrawing group and the other represents a hydrogen atom, an alkyl group containing 1 to 10 carbon atoms or a phenyl group, R²⁰ represents a direct bond or a divalent organic group containing 1 to 10 carbon atoms, which may contain one or more ether bonds, R¹⁷ represents a hydrogen atom, an alkyl group containing 1 to 20 carbon atoms, an aryl group containing 6 to 20 carbon atoms or an aralkyl group containing 7 to 20 carbon atoms, and M⁺ represents an alkali metal ion or a quaternary ammonium ion).
   Particularly preferred as the electron-withdrawing group R¹⁸ and/or R¹⁹ are those which have a structure of -CO₂R, -C(O)R or -CN.
(1-3) Method comprising reacting a polymer having one highly reactive terminal carbon-halogen bond in each molecule with a simple substance metal, such as zinc, or an organometallic compound and then reacting the thus-prepared enolate anion with an alkenyl-containing, electrophilic compound, such as an alkenyl-containing compound having a leaving group such as a halogen atom or an acetyl group, an alkenyl-containing carbonyl compound, an alkenyl-containing isocyanate compound or an alkenyl-containing acid halide.
(1-4) Method comprising reacting a polymer having one highly reactive terminal carbon-halogen bond in each molecule with an alkenyl-containing oxy anion or carboxylate anion such as one represented by the general formula (11) or (12), for substitution of the halogen:

   H₂C=C (R¹⁷)-R²¹-O⁻M⁺ (11)

   (wherein R¹⁷ and M⁺ are as defined above and R²¹ is a divalent organic group containing 1 to 20 carbon atoms, which may contain one or more ether bonds);

   H₂C=C (R¹⁷)-R²²-C (O) O⁻M⁺ (12)

   (wherein R¹⁷ and M⁺ are as defined above and R²² is a direct bond or a divalent organic group containing 1 to 20 carbon atoms, which may contain one or more ether bonds).
   The method of synthesizing the above-mentioned polymer having one highly reactive terminal carbon-halogen bond in each molecule includes, but is not limited to, atom transfer radical polymerization methods using an organic halide or the like as initiator and a transition metal complex as catalyst, as mentioned above.
   It is also possible to obtain the polymer having one terminal alkenyl group in each molecule from a polymer having at least one terminal hydroxyl group. As utilizable methods, there may be mentioned, for example, the following, without any purpose of restriction.
(1-5) Method comprising reacting the hydroxyl group of a polymer having at least one terminal hydroxyl group with a base, such as sodium methoxide, followed by reaction with an alkenyl-containing halide, such as allyl chloride.
(1-6) Method comprising reacting such hydroxyl group with an alkenyl-containing isocyanate compound, such as allyl isocyanate.
(1-7) Method comprising reacting such hydroxyl group with an alkenyl-containing acid halide, such as (meth) acrylic acid chloride, in the presence of a base, such as pyridine.
(1-8) Method comprising reacting such hydroxyl group with an alkenyl-containing carboxylic acid, such as acrylic acid, in the presence of an acid catalyst.

In cases where alkenyl group introduction is effected by conversion of the halogen atom of a polymer having one highly reactive terminal carbon-halogen bond in each molecule, use is preferably made of a polymer having, in each molecule, one terminal carbon-halogen bond, which is highly reactive, as obtained by subjecting a vinyl monomer to radical polymerization (atom transfer radical polymerization) using, as an initiator, an organic halide or halogenated sulfonyl compound having one highly reactive carbon-halogen bond in each molecule and, as a catalyst, a transition metal complex.

The crosslinkable silyl group-containing hydrosilane compound is not particularly restricted but includes, as typical examples, compounds represented by the general formula (13) .

H-[Si(R¹)_{2-b}(Y)_{b}O]ₘ-Si(R²)₃₋ₐ(Y)ₐ (13)

{wherein R¹, R², Y, a, b and m are as defined above and, when there are two or more R¹ or R² groups, they may be the same or different, provided that the relation a + mb ≥ 1 should be satisfied}.

Particularly preferred among those hydrosilane compounds in view of ready availability are crosslinkable silyl group-containing compounds represented by the general formula (14) :

H-Si(R²)₃₋ₐ(Y)ₐ (14)

(wherein R², Y and a are as defined above).

In subjecting the above crosslinkable silyl-containing hydrosilane compound to addition to the alkenyl group, a transition metal catalyst is generally used. The transition metal catalyst includes, among others, simple substance platinum; solid platinum dispersed on a support such as alumina, silica or carbon black; chloroplatinic acid; chloroplatinic acid complexes with alcohols, aldehydes, ketones or the like; platinum-olefin complexes; and
platinum(O)-divinyltetramethyldisiloxane complex. As other catalysts than platinum compounds, there may be mentioned RhCl(PPh₃)₃, RhCl₃, RuCl₃, IrCl₃, FeCl₃, AlCl₃, PdCl₂·H₂O, NiCl₂ and TiCl₄, for instance.

The use amount of the vinyl polymer containing a crosslinkable silyl group at one terminus and preferably having a molecular weight distribution of less than 1.8 is preferably 5 to 400 parts by weight per 100 parts by weight of the vinyl polymers in terms of the modulus and elongation.

In the second aspect using two or more kinds of vinyl polymers in combination, the vinyl polymer having a molecular weight distribution of 1.8 or higher and the vinyl polymer having a molecular weight distribution of less than 1.8 may be used in combination. The vinyl polymer having a molecular weight distribution of 1.8 or higher may or may not comprise the crosslinkable silyl group, however in the case of the vinyl polymer comprising the crosslinkable silyl group, the weather resistance, adhesion strength and strength at break are improved and therefore, the vinyl polymer is preferable. Further, the tensile strength of the cured product obtained from the composition is expected to be high. The polymer derived from vinyl monomers as described above is usable as the main chain of the vinyl polymer having a molecular weight distribution of 1.8 or higher as the first polymer and the vinyl polymer having a molecular weight distribution of less than 1. 8 as the second polymer, and both polymers are preferably acrylate polymers.

The above-mentioned vinyl polymer having a molecular weight distribution of 1.8 or higher may be obtained by a common vinyl polymerization method such as a solution polymerization method by radical reaction. The polymerization may be carried out generally by a reaction of the above-mentioned monomers at 50 to 150°C in the presence of a radical initiator, a chain transfer agent and/or the like. In this case, polymers having a molecular weight distribution of 1.8 or higher are generally obtained.

Examples of the above-mentioned initiator may include azo type initiators such as 2,2'-azobisisobutylonitrile, 2,2'-azobis(2-methylbutylonitrile), 4,4'-azobis(4-cyanovaleric) acid, 1,1'-azobis(1-cyclohexanecarbonitrile), azobisisobutyric acid amidine hydrochloride and 2,2'-azobis(2,4-dimethylvarelonitrile and organic peroxide type initiators such as benzoyl peroxide and di-tert-butyl peroxide, and from the viewpoint that they are not affected with the solvent to be used for the polymerization, that the risk of explosion or the like is low, and the like, azo type initiators are preferably used.

Examples of the chain transfer agent may include mercaptans such as n-dodecylmercaptan, tert-dodecylmercaptan, laurylmercaptan, γ-mercaptopropyltrimethoxysilane, γ-mercaptopropylmethyldimethoxysilane, γ-mercaptopropyltriethoxysilane and γ-mercaptopropylmethyldiethoxysilane, halogen-containing compounds, and the like.

The polymerization may be carried out in a solvent. Preferable examples of the solvent are ethers, hydrocarbons, esters and other non-reactive solvents.

A method of introducing the crosslinkable silyl group may be a method of copolymerizing a compound having both of a polymerizable unsaturated bond and crosslinkable silyl group with a (meth)acrylate monomer unit. Examples of the compound having both of a polymerizable unsaturated bond and crosslinkable silyl group are monomers represented by the general formula (26):

CH₂=C (R²⁸) COOR³⁰- [Si (R¹_{2-b}) (Y_{b})O]ₘSi(R²₃₋ₐ) Yₐ (26)

(wherein, R²⁸ represents the same as described above; R³⁰ represents a divalent alkylene group having 1 to 6 carbon atoms; R¹, R², Y, a, b, and m independently represent the same as described above) or the general formula (27):

CH₂=C(R²⁸)-[Si(R¹_{2-b})(Y_{b})O]ₘSi(R²₃₋ₐ)Yₐ (27)

(wherein, R²⁸, R¹, R², Y, a, b, and m independently represent the same as described above) and practically may include γ-methacryloxypropylpolyalkoxysilanes such as γ-methacryloxypropyltrimethoxysilane, γ-methacryloxypropylmethyldimethoxysilane, and γ-methacryloxypropyltriethoxysilane; γ-acryloxypropylpolyalkoxysilanes such as γ-acryloxypropyltrimethoxysilane, γ-acryloxypropylmethyldimethoxysilane, and γ-acryloxypropyltriethoxysilane; and vinylalkylpolyalkoxysilane such as vinyltrimethoxysilane, vinylmethyldimethoxysilane, and vinyltriethoxysilane; and the like. Further, if a compound having both of a mercapto group and crosslinkable silyl group is used as a chain transfer agent, the crosslinkable silyl group can be introduced into the polymer termini. Examples of the chain transfer agent may include mercaptans such as γ-mercaptopropyltrimethoxysilane, γ-mercaptopropylmethyldimethoxysilane, γ-mercaptopropyltriethoxysilane, and γ-mercaptopropylmethyldiethoxysilane.

The vinyl polymer containing a crosslinkable functional group and having a molecular weight distribution of 1.8 or higher is preferable to be a polymer having a number average molecular weight of 500 to 100, 000 measured by GPC measurement on the basis of polystyrene conversion in terms of the handling easiness. Further, a polymer having a number average molecular weight of 1,500 to 30,000 is more preferable because of good weather resistance and workability of the cured product.

### «Polyisobutylene polymer»

As mentioned hereinabove, a polyisobutylene polymer is also preferred as the crosslinkable silyl group-terminated vinyl polymer (I) according to the invention.

### <Main chain>

The polyisobutylene polymer may be one all the monomer units of which are isobutylene units or one comprising, in addition to isobutylene units, monomer units copolymerizable with isobutylene preferably in a proportion not higher than 50% (by weight; hereinafter the same shall apply), more preferably not higher than 30%, particularly preferably not higher than 10%. As such monomer components, there may be mentioned olefins containing 4 to 12 carbon atoms, vinyl ethers, aromatic vinyl compounds, vinylsilanes and allylsilanes, among others. As such copolymer components, there may be mentioned, for example, 1-butene, 2-butene, 2-methyl-1-butene, 3-methyl-1-butene, pentene, 4-methyl-1-pentene, hexene, vinylcyclohexene, methyl vinyl ether, ethyl vinyl ether, isobutyl vinyl ether, styrene, α-methylstyrene, dimethylstyrene, monochlorostyrene, dichlorostyrene, β-pinene, indene, vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, tetravinylsilane, allyltrichlorosilane, allylmethyldichlorosilane, allyldimethylchlorosilane, allyldimethylmethoxysilane, allyltrimethylsilane, diallyldichlorosilane, diallyldimethoxysilane, diallyldimethylsilane, γ-methacryloyloxypropyltrimethoxysilane and γ-methacryloyloxypropylmethyldimethoxysilane.

When a vinylsilane or allylsilane is used as the monomer copolymerizable with isobutylene, the silicon content increases and the number of groups capable of acting as a silane coupling agent increases and the resulting composition is improved in adhesiveness. In the case of a hydrogenated polybutadiene polymer or another saturated hydrocarbon polymer as well, other monomer units, in addition to the main component monomer units may be contained in the polymer, like in the case of the isobutylene polymer mentioned above.

The main chain of the polyisobutylene polymer according to the invention may contain a small amount, preferably not higher than 10%, more preferably not higher than 5%, particularly not higher than 1%, of butadiene, isoprene or like polyene compound units or like monomer units leaving double bonds after polymerization so long as the objects of the invention can be accomplished. The saturated hydrocarbon polymer, preferably an isobutylene polymer or hydrogenated polybutadiene polymer preferably has a number average molecular weight of about 500 to 50,000 and, in particular, a liquid or fluid one having a number average molecular weight of about 1, 000 to 30, 000 is preferred from easy handleability viewpoint, among others.

### <Main chain synthesis method>

The method of synthesizing the main chain of the polyisobutylene polymer according to the invention is not particularly restricted but the technique of living cation polymerization is preferred from the molecular weight and/or easy functional group introduction control viewpoint.

### Living cationic polymerization

Living cationic polymerization is a technique of polymerization according to which those isomerization, chain transfer and termination reaction of growing carbenium ions which are problems encountered in cationic polymerization are suppressed and the polymerization proceeds without apparent deactivation of growing termini. The term "apparent" is used herein to include also the case of growth in a condition of equilibrium between terminally inactivated species and terminally activated species, like in the case of living radical polymerization mentioned above. As reported examples of living cationic polymerization, there may be mentioned, among others, the polymerization, by Higashimura et al. (Macromolecules, 17, 265, 1984), of a vinyl ether using an initiator comprising a combination of hydrogen iodide and iodine and the polymerization, by Kennedy et al. (Japanese Kokai Publications Sho-62-48704 and Sho-64-62308), of isobutylene or a like olefin monomer using an organic carboxylic acid, ester or ether as an initiator in combination with a Lewis acid.

This living cationic polymerization includes, but is not limited to, the polymerization of a cationically polymerizable monomer in the presence of a compound represented by the following general formula (32):

(CR³⁸R³⁹X)ₙR⁴⁰ (32)

(wherein X is a substituent selected from among halogen atoms, alkoxy or acyloxy groups containing 1 to 6 carbon atoms, R³⁸ and R³⁹ each is a hydrogen atom or a monovalent hydrocarbon group containing 1 to 6 carbon atoms and R³⁸ and R³⁹ may be the same or different, R⁴⁰ is a polyvalent aromatic hydrocarbon group or polyvalent aliphatic hydrocarbon group and n represents a natural number of 1 to 6).

### Monomer for living cationic polymerization

The monomer to be used in living cationic polymerization according to the invention is not particularly restricted but includes the above-mentioned monomers each constituting the main chain of the polymer (II); isobutylene is preferred, however.

### Living cationic polymerization initiator

The compound represented by the general formula (32) serves as an initiator and presumably forms the corresponding carbocation in the present of a Lewis acid, for instance, and thus provides an initiation site for cationic polymerization. As examples of the compound of general formula (32) which can be used in the practice of the invention, such compounds as enumerated below may be mentioned, among others.
(1-Chloro-1-methylethyl)benzene [C₆H₅C(CH₃)₂Cl], 1,4-bis(1-chloro-1-methylethyl)benzene [1,4-Cl (CH₃)₂CC₆H₄C (CH₃)₂Cl), 1,3-bis(1-chloro-1-methylethyl)benzene [1,3-Cl (CH₃)₂CC₆H₄C (CH₃)₂Cl), 1,3,5-tris(1-chloro-1-methylethyl)benzene [1,3,5-(ClC(CH₃)₂)₃C₆H_{3]}, and 1,3-bis(1-chloro-1-methylethyl)-5-(tert-butyl)benzene [1,3-(C(CH₃)₂Cl)₂-5-(C(CH₃)₃)C₆H₃].

Particularly preferred among them are bis(1-chloro-1-methylethyl)benzene [C₆H₄(C(CH₃)₂Cl)₂]. [Bis(1-chloro-1-methylethyl)benzene is also known as bis(α-chloroisopropyl)benzene, bis(2-chloro-2-propyl)benzene or dicumyl chloride.] These are bifunctional initiators and, when the polymerization is started with these, polymers both the termini of which are growing chain ends are obtained.

### Catalyst for living cation polymerization

On the occasion of living cation polymerization, the polymerization may be carried out in the presence of a Lewis acid catalyst as well. Such Lewis acid may be any of those which can be used in cationic polymerization. Thus, such metal halides as TiCl₄, TiBr₄, BCl₃, BF₃, BF₃·OEt₂, SnCl₄, SbCl₅, SbF₅, WCl₆, TaCl₅, VCl₅ FeCl₃, ZnBr₂, AlCl₃ and AlBr₃; and organometal halides such as Et₂AlCl and EtAlCl₂ can be suitably used. Among them, TiCl₄, BCl₃ and SnCl₄ are preferred considering their catalytic activity and ready commercial availability. The level of addition of the Lewis acid is not particularly restricted but can be selected considering the polymerization characteristics of the monomer(s) used or the polymerization concentration, among others. Generally, the Lewis acid can be used in an amount of 0.1 to 100 mole equivalents, preferably within the range of 1 to 60 mole equivalents, relative to the compound represented by the general formula (32).

### Electron donor component for living cation polymerization

On the occasion of living cation polymerization, the polymerization may also be carried out in the presence of an electron donor component as well according to need. This electron donor component is considered to be effective in stabilizing the growing carbocation on the occasion of cationic polymerization, and the addition of an electron donor results in the formation of a polymer narrow in molecular weight distribution and controlled in structure. The electron donor component that can be used is not particularly restricted but includes, among others, pyridines, amines, amides, sulfoxides, esters, and metal compounds having a metal atom-bound oxygen atom.

### Conditions for living cation polymerization

The living cation polymerization can be carried out in the presence of a solvent according to need, and any of those organic solvents which will not essentially disturb the cationic polymerization can be used without any particular restriction. Specifically, there may be mentioned halogenated hydrocarbons such as methyl chloride, dichloromethane, chloroform, ethyl chloride, dichloroethane, n-propyl chloride, n-butyl chloride and chlorobenzene; benzene and alkylbenzenes such as toluene, xylene, ethylbenzene, propylbenzene and butylbenzene; straight-chain aliphatic hydrocarbons such as ethane, propane, butane, pentane, hexane, heptane, octane, nonane and decane; branched aliphatic hydrocarbons such as 2-methylpropane, 2-methylbutane, 2,3,3-trimethylpentane and 2,2,5-trimethylhexane; alicyclic hydrocarbons such as cyclohexane, methylcyclohexane and ethylcyclohexane; and paraffin oils derived from petroleum fractions by hydrogenation purification, among others. Among these, toluene-based mixed solvents are preferred from the viewpoint of environmental safety and physical properties of polymers, etc. Also suited for use are primarily and/or secondarily monohalogenated hydrocarbons containing 3 to 8 carbon atoms. Specific examples that can be used are, for example, 1-chloropropane, 1-chloro-2-methylpropane, 1-chlorobutane, 1-chloro-2-methylbutane, 1-chloro-3-methylbutane, 1-chloro-2,2-dimethylbutane, 1-chloro-3,3-dimethylbutane, 1-chloro-2,3-dimethylbutane, 1-chloropentane, 1-chloro-2-methylpentane, 1-chloro-3-methylpentane, 1-chloro-4-methylpentane, 1-chlorohexane, 1-chloro-2-methylhexane, 1-chloro-3-methylhexane, 1-chloro-4-methylhexane, 1-chloro-5-methylhexane, 1-chloroheptane, 1-chlorooctane, 2-chloropropane, 2-chlorobutane, 2-chloropentane, 2-chloropentane, 2-chlorohexane, 2-chloroheptane, 2-chlorooctane and chlorobenzene, and these may be used singly or two or more of them may be used in combination. Among these, 1-chlorobutane can be used favorably from the viewpoint of balance among solubility of polymer, ease of rendering harmless by decomposition, cost and so forth.

These solvents are used either singly or in combination of two or more considering the balance among the polymerization characteristics of the monomer or monomers constituting the polymer and the solubility of the polymers formed, among others. The amount of the solvent to be used is selected so that the polymer concentration may amount to 1 to 50% by weight, preferably 5 to 35% by weight, considering the viscosity of the polymer solution to be obtained and the ease of removing heat.

In actually carrying out the polymerization, the components are mixed up under cooling, for example at a temperature not lower than -100°C but lower than 0°C. For balancing the energy cost against the stability of polymerization, a particularly preferred temperature range is within the range of -30°C to -80°C.

### <Crosslinkable silyl group>

How to introduce a crosslinkable silyl group into a polyisobutylene polymer is now described.

In the following, how to produce crosslinkable silyl group-containing saturated hydrocarbon polymers is described. Among the crosslinkable silyl group-containing saturated hydrocarbon polymers, saturated hydrocarbon polymers having at least one crosslinkable silyl group at a molecular chain terminus can be produced by using terminally functional, preferably wholly terminally functional, saturated hydrocarbon polymers obtained by a polymerization method called inifer method (cationic polymerization using a specific compound called inifer which serves as both an initiator and a chain transfer agent). As for a method of producing crosslinkable silyl group-containing saturated hydrocarbon polymers, an unsaturated group-terminated polyisobutylene is obtained, for example, by terminal dehydrohalogenation of a tertiary carbon-chlorine bond-containing polymer obtained by polymerization or by reaction of the terminus or termini of a tertiary carbon-chlorine bond-containing polymer with an allyltrimethylsilane and then the compound represented by the general formula (13):

H-[Si(R¹)_{2-b}(Y)_{b}O]ₘ-Si(R²)₃₋ₐ(Y)ₐ (13)

{wherein, R¹ and R² each is an alkyl group containing 1 to 20 carbon atoms, an aryl group containing 6 to 20 carbon atoms, an aralkyl group containing 7 to 20 carbon atoms or a triorganosiloxy group represented by (R')₃SiO- (in which R' is a univalent hydrocarbon group containing 1 to 20 carbon atoms and the three R' groups may be the same or different) and, when there are two or more R¹ or R² groups, they may be the same or different; Y represents a hydroxyl group or a hydrolyzable group and, when there are two or more Y groups, they may be the same or different; a represents 0, 1, 2 or 3, b represents 0, 1 or 2, and m is an integer of 0 to 19, provided that the relation a + mb ≥ 1 should be satisfied.}: is provided.

Among those hydrosilane compounds, a hydrosilane compound represented by the general formula (14):

H-Si(R²)₃₋ₐ(Y)ₐ (14)

(wherein R² and Y are as defined above; and a is an integer of 1 to 3) : can be obtained by an addition reaction using a platinum catalyst (hydrosilylation reaction). Examples of the hydroxysilane compound include, for example, halogenated silanes such as trichlorosilane, methyldichlorosilane, dimethylchlorosilane, and phenyldichlorosilane; alkoxysilanes such as trimethoxysilane, triethoxysilane, methyldiethoxysilane, methyldimethoxysilane, and phenyldimethoxysilane; acyloxysialnes such as methyldiacetoxysilane and phenyldiacetoxysilane; ketoximatosilanes such as bis(dimethylketoximato)methylsilane and bis(cyclohexylketoximato) methylsilane; and the like, but the examples thereof are not limited to them. Among them, halogenated silanes and alkoxysilanes are preferable.

Such production methods are described in Japanese Patent Publications Hei-04-69659 and Hei-07-108928, Japanese Kokai Publications Sho-63-254149 and Sho-64-22904 and Japanese Patent No. 2539445, among others. Isobutylene polymers having internal crosslinkable silyl groups on the molecular chain are produced by adding a crosslinkable silyl group-containing vinylsilane or allylsilane to the isobutylene monomer composition for copolymerization.

Further, when, on the occasion of the polymerization reaction for producing a crosslinkable silyl group-terminated isobutylene polymer, a crosslinkable silyl group-containing vinylsilane or allylsilane or the like is copolymerized with the main component isobutylene monomer and then a crosslinkable silyl group is introduced into the terminus or termini of the copolymer obtained, an isobutylene polymer having crosslinkable silyl groups at the terminus or termini and internally on the molecular chain is produced.

As the crosslinkable silyl group-containing vinylsilane and allylsilane, there may be mentioned, for example, vinyltrichlorosilane, vinylmethyldichlorosilane, vinyldimethylchlorosilane, vinyldimethylmethoxysilane, divinyldichlorosilane, divinyldimethoxysilane, allyltrichlorosilane, allylmethyldichlorosilane, allyldimethylchlorosilane, allyldimethylmethoxysilane, diallyldichlorosilane, diallyldimethoxysilane, γ-methacryloyloxypropyltrimethoxysilane and γ-methacryloyloxypropylmethyldimethoxysilane.

As the crosslinkable silyl group-containing saturated hydrocarbon polymer to be used in the practice of the invention, there may also be mentioned crosslinkable silyl group-containing hydrogenated polybutadiene polymers. The crosslinkable silyl group-containing hydrogenated polybutadiene polymers can be obtained by subjecting olefinic group-containing hydrogenated polybutadiene polymers to hydrosilylation. The olefinic group-terminated hydrogenated polybutadiene polymers can be obtained by first converting the hydroxyl groups of a hydroxyl-terminated hydrogenated polybutadiene polymer to oxymetal groups such as -ONa or -OK groups and then reacting the oxymetal group with an organohalogen compound represented by the general formula (33) :

CH₂=CH-R⁴¹-Y (33)

[wherein Y is a halogen atom such as a chlorine atom, bromine atom or iodine atom and R⁴¹ is a divalent organic group represented by -R⁴²-, -R⁴²-OCO- or -R⁴²-CO- (wherein R⁴² is a divalent hydrocarbon group containing 1 to 20 carbon atoms, preferably an alkylene, cycloalkylene, arylene or aralkylene group), particularly preferably a divalent group selected from among -CH₂- and -R⁴³-C₆H₄-CH₂- (R⁴³ being a hydrocarbon group containing 1 to 10 carbon atoms)].

As a method of converting the terminal hydroxyl groups of a hydroxyl-terminated hydrogenated polybutadiene polymer to oxymetal groups, there may be mentioned the method comprising reacting the hydroxyl groups with an alkali metal such as Na or K; a metal hydride such as NaH; a metal alkoxide such as NaOCH₃; or an alkali metal hydroxide such as NaOH or KOH. This method gives an olefin-terminated hydrogenated polybutadiene polymer almost identical in molecular weight to the hydroxyl-terminated hydrogenated polybutadiene polymer used as the starting material. In cases where a polymer higher in molecular weight is desired, the molecular weight can be increased by reacting, prior to reaction with the organohalogen compound of general formula (33), the starting polymer with a polyvalent organohalogen compound containing two or more halogen atoms in each molecule such as methylene chloride, bis(chloromethyl)benzene or bis(chloromethyl) ether. The subsequent reaction with an organohalogen compound of general formula (33) can give an olefin group-terminated hydrogenated polybutadiene polymer having a higher molecular weight.

Specific examples of the organohalogen compound represented by the general formula (33) given above include, but are not limited to, allyl chloride, allyl bromide, vinyl(chloromethyl)benzene, allyl(chloromethyl)benzene, allyl(bromomethyl)benzene, allyl (chloromethyl) ether, allyl(chloromethoxy)benzene, 1-butenyl (chloromethyl) ether, 1-hexenyl(chloromethoxy)benzene and allyloxy(chloromethyl)benzene, among others. Among these, allyl chloride is preferred since it is inexpensive and readily reactive.

### «Polyether polymer (III) containing crosslinkable silyl group»

The curable composition of the invention may further contain a polyether polymer (III) containing a crosslinkable silyl group.

### Main chain

The main chain of the polyether polymer is not particularly limited and polyethylene oxide, polypropylene oxide, polybutylene oxide, and polyphenylene oxide can be exemplified, for example. Among them, substantially polyoxyalkylene is preferable and polypropylene oxide is more preferable and other than propylene oxide, ethylene oxide, butylene oxide, phenylene oxide and/or the like may be contained. Further, the polyether polymer may or may not contain an urethane bond in the main chain. Herein, the phrase, "the main chain is substantially polypropylene oxide" means that propylene oxide unit exists at a ratio of 50% or higher, preferably 70% or higher, and more preferably 90% or higher, in the repeating units composing the main chain. If the viscosity is lower, the handling property becomes better, and therefore the polypropylene oxide polymer is more preferable to have a molecular weight distribution (Mw/Mn) of 1.5 or lower.

### Molecular weight

The polyether polymer containing at least one crosslinkable functional group preferably has a number average molecular weight of 7, 500 or higher, and it may be 7, 500 or lower. Particularly, it is preferable to use the oragnic polymer having a number average molecular weight of 7,500 to 25,000. In the case where the number average molecular weight of the polyether polymer is lower than 7, 500, the cured product becomes hard and becomes to have low elongation. On the other hand, in the case where the number average molecular weight exceeds 25,000, although the flexibility and elongation of the cured product are satisfactory, the adhesiveness of the polymer itself is considerably lowered and the practical applicability becomes low. However, even if the molecular weight is low, in the case where the number of the crosslinkable functional group is low, the flexibility and elongation are sometimes improved and even if the molecular weight is high, in the case where the number of the crosslinkable functional group is high, the adhesiveness is sometimes increased. The number average molecular weight is particularly preferably 8, 000 to 20, 000, and it may be 8, 000 or lower or 20,000 or higher.

### Use amount of polyether polymer

The use amount of the polyether polymer to be used may be optional, and it is preferably at a ratio of (100/1) to (1/100) by weight, more preferably (100/5) to (5/100) by weight, and further preferably (100/10) to (10/100) by weight, per the vinyl polymer (I) containing at least one crosslinkable silyl group. The addition amount may be set in accordance with the uses and purposes. In this connection, if the addition amount is too much, one of the effects of the invention that the excellent heat resistance and weather resistance may be sometimes lowered.

The above-mentioned polyether polymer may be previously mixed with a (meth) acrylic polymer produced by general radical polymerization, or a high temperature- and continuously-polymerized bulk polymer (e.g. SGO oligomer manufactured by Toagosei Co., Ltd.), or the silylated product thereof for mixing with the vinyl polymer.

### <Polyether polymer containing crosslinkable silyl group>

Hereinafter, the polyether polymer containing a crosslinkable silyl group will be described.

### Main chain

The main chain structure of the polyether polymer containing a crosslinkable silyl group is same as described above. The main chain may be linear or branched or mixture of both. Among them, particularly preferable examples of the main chain are polyoxypropylene diol, polyoxypropylene triol, and their mixtures. Further, other monomer units etc. may be contained, and the monomer units represented by the above-mentioned formulae preferably exist at a ratio of 50% by weight or more, preferably 80% by weight or more, in the polymer.

The main chain may or may not contain an urethane bond or an urea bond.

The molecular structure of the polyether polymer differs in accordance with the uses and the desired properties thereof and those described in Japanese Kokai Publication Sho-63-112642 can be used, for example. These polyoxyalkylenes may be obtained by common polymerization methods (anion polymerization using caustic alkali), methods using cesium metal catalysts, porphyrin/aluminum complex catalysts (such methods are exemplified in Japanese Kokai Publication Sho-61-197631, Sho-61-215622, Sho-61-215623, Sho-61-218632 and the like), composite metal cyanide complex catalysts (such methods are exemplified in Japanese Kokoku Publication Sho-46-27250, Sho-59-15336 and the like), and catalysts of polyphosphazene salts (such methods are exemplified in Japanese Kokai Publication Hei-10-273512), and the like methods.

The methods using porphyrin/aluminum complex catalysts, composite metal cyanide complex catalysts, or catalysts of polyphosphazene salts are suitable for obtaining oxyalkylene polymers with as narrow molecular weight distribution (Mw/Mn) as 1.6 or lower, preferably 1.5 or lower, and in the case where the molecular weight distribution is narrow, it is advantageous for keeping low modulus and high elongation of the cured product and keeping low viscosity for the composition.

### Crosslinkable silyl group

Similarly to the vinyl polymer, groups represented by the general formula (1) may be used as the crosslinkable silyl group and groups represented by the general formula (6) are preferable. The description of the groups represented by the general formulae (1) and (6) is also applied to the polyether polymer containing the crosslinkable silyl group. The crosslinkable silyl group in the polyether polymer may have the same structure as or a different structure from that of the crosslinkable silyl group in the vinyl polymer containing the crosslinkable silyl group.

Since the bonding part of the crosslinkable silyl group and the polyether part has resistance to hydrolysis, the bonding part is preferably an alkylene group such as trimethylene and tetramethylene so as to have at least 3 carbon atoms existing between the silicon atom of the silyl group and the ether oxygen atom of the polyether parts.

### Number and position of crosslinkable silyl group

The number of the crosslinkable silyl group is preferably at least 1.2 or higher, more preferably 1.2 or higher and 4.0 or lower, and still more preferably 1.5 to 2.5 or lower, from the curability of the composition and/or the like viewpoints. In terms of the rubber elasticity of the cured product, the crosslinkable silyl group in the polyether polymer is preferably at a terminus of the molecular chain and more preferably at both termini of the polymer.

Even a polyether polymer containing 1.2 or less crosslinkable silyl groups on average may be used. In this case, the cured product with high elongation at break, low bleeding property, low surface staining property, and excellent adhesiveness to a coating material can be obtained. Further, if the molecular weight of the polymer is set to be low, the viscosity of the composition may be lowered. The lower limit of the number of the crosslinkable silyl group is preferably at least 0.1 or higher, more preferably 0.3 or higher, and further preferably 0.5 or higher. The crosslinkable silyl group is preferably at a terminus of a molecular chain. The crosslinkable silyl group of the polyether polymer preferably exists at only one terminus but not at the other terminus, however it is not particularly limited as long as the number of the crosslinkable silyl group is 1.2 or lower on average. In the case where the viscosity is lowered by using the polyether polymer containing less than 1.2 crosslinkable silyl groups on average, the molecular weight is preferably lower than 10, 000 and more preferably lower than 5,000.

### Crosslinkable silyl group introduction method

The crosslinkable silyl group may be introduced by a conventionally known method. That is, the following methods can be exemplified. For example, in the case of oxyalkylene polymers obtained by using a composite metal cyanide complex catalyst, a method is described in Japanese Kokai Publication Hei-3-72527 and in the case of oxyalkylene polymers obtained by using a polyphosphazene salt and active hydrogen as catalysts, a method is described in Japanese Kokai Publication Hei-11-60723.
(1) An unsaturated group-containing oxyalkylene polymer is obtained by reacting an oxyalkylene polymer having a functional group such as hydroxyl group at a terminus with an organic compound having an active group and an unsaturated group reactive on the functional group, or copolymerizing the oxyalkylene polymer with an unsaturated group-containing epoxy compound. Next, the obtained reaction product is reacted with a hydrosilane containing a crosslinkable silyl group to carry out hydrosilylation.
(2) The unsaturated group-containing oxyalkylene polymer obtained in the same manner as described in (1) is reacted with a compound having a mercapto group and the crosslinkable silyl group.
(3) An oxyalkylene polymer having a functional group (hereinafter, referred to as Y functional group) such as a hydroxyl group, an epoxy group, and an isocyanato group at a terminus is reacted with a compound having a functional group (hereinafter, referred to as Y' functional group) reactive on the Y functional group and the crosslinkable silyl group.

Examples of a silicon compound having the Y' functional group may be amino group-containing silanes such as γ-(2-aminoethyl)aminopropyltrimethoxysilane, γ-(2-aminoethyl)aminopropylmethyldimethoxysilane, γ-aminopropyltriethoxysilane, 3-amino-2-methylpropyltrimethoxysilane, N-ethyl-3-amino-2-methylpropyltrimethoxysilane, 4-amino-3-methylpropyltrimethoxysialne, 4-amino-3-methylpropylmethyldimethoxysialne, N-phenl-3-aminopropyltrimethoxylsilane, and partially Michael addition reaction products of various kinds of amino group-containing silane with maleic acid esters and acrylate compounds; mercapto-containing silanes such as γ-mercaptopropyltrimethoxysilane and γ-mercaptopropylmethyldimethoxysilane; epoxy silanes such as γ-glycidoxypropyltrimethoxysilane and β-(3,4-epoxycyclohexyl)ethyltrimethoxysilane; vinyl unsaturated group-containing silanes such as vinyltriethoxysilane, γ-methacryloyloxypropyltrimethoxysilane, and γ-acryloyloxypropylmethyldimethoxysilane; chlorine atom-containing silanes such as γ-chloropropyltrimethoxysilane; isocyanato group-containing silanes such as γ-isocyanatopropyltriethoxysilane, γ-isocyanatopropylmethyldimethoxysilane, and γ-isocyanatopropyltrimethoxysilane; hydrosilanes such as methyldimethoxysilane, trimethoxysilane, methyldiethoxysilane and triethoxysilane; and the like, without any purpose of particular restriction.

In the case of producing the polymer containing 1.2 or less crosslinkable silyl groups on average, at the time of introducing the crosslinkable silyl group, the following methods may be used; a method of obtaining the polyether polymer containing 1.2 or less crosslinkable silyl groups on average by reacting a polyether polymer containing only one functional group in the molecule and a compound containing crosslinkable silyl group (s) in an equivalent or less amount to the functional group; and a method of obtaining the polyether polymer containing 1.2 or less crosslinkable silyl groups on average by reacting a polyether polymer containing one or more functional groups in the molecule on average and a compound containing crosslinkable silyl group at a less ratio to the functional groups.

### Use amount of polyether polymer containing a crosslinkable silyl group

The use amount of the polyether polymer (III) containing a crosslinkable silyl group may be optional, and it is preferably (100/1) to (1/100) by weight, more preferably (100/5) to (5/100) by weight, and further preferably (100/10) to (10/100) by weight, per the vinyl polymer (I) containing at least one crosslinkable silyl group. The addition amount may be set in accordance with the uses and purposes. However, if the addition amount is too much, excellent heat resistance or weather resistance, which is one of the excellent effects of the invention, may be possibly lowered.

In the case of using the polyether polymer containing 1.2 or less crosslinkable silyl groups on average, the use amount thereof is preferably at least 1 part by weight and at highest 200 parts by weight, more preferably at least 3 parts by weight and at highest 100 parts by weight, and further preferably at least 5 parts by weight and at highest 80 parts by weight, per 100 parts by weight of the vinyl polymer. If it is lower than 1 part by weight, the addition effect is hardly caused and if it exceeds 200 parts by weight, the physical properties of the cured product tend to be unstable.

The mixing manner may be the following without any purpose of restriction: [1] adding the polyether polymer containing a crosslinkable silyl group and also the polyether polymer containing 1.2 or less crosslinkable silyl groups on average to the vinyl polymer containing a crosslinkable silyl group represented by the general formula (1); [2] adding the polyether polymer containing a crosslinkable silyl group and the vinyl polymer containing a crosslinkable silyl group at one terminus; [3] in the case of adding the polyether polymer containing a crosslinkable silyl group and the vinyl polymer having a crosslinkable functional group and 1.8 or higher molecular weight distribution, adding the polyether polymer containing 1.2 or less crosslinkable silyl groups on average and also the vinyl polymer containing a crosslinkable silyl group at one terminus; and [4] adding the polyether polymer containing 1.2 or less crosslinkable silyl groups on average and also the vinyl polymer having a crosslinkable functional group and 1.8 or higher molecular weight distribution.

### Compatibilization

When used in combination, a polyether polymer and a vinyl polymer are sometimes by themselves compatible with each other and examples of such combination are shown in the above-given detailed description of the (meth) acrylic polymer. When they themselves are not compatible with each other, they can often be compatibilized by addition of a plasticizer.

### «Epoxy compound and/or oxetane compound (IV)»

In the curable composition of the invention, there may be incorporated an epoxy compound and/or oxetane compound (IV) . These compounds can be cured by a photo acid generator to give a hybrid cured product with the vinyl polymer.

The epoxy compound serves to reduce the viscosity of the curable composition and thereby improve the workability and, in addition, improve the strength of cured products.

The epoxy compound may be any epoxy group-containing compound. For example, there may be mentioned bisphenol-based epoxy resins and alicyclic epoxy resins.

Specific examples of bisphenol epoxy resins include a bisphenol A epoxy resin, a bisphenol F epoxy resin, a bisphenol AD epoxy resin, hydrogenated bisphenol A epoxy resin, hydrogenated bisphenol F epoxy resin, a bisphenol S epoxy resin, a glycidyl ester epoxy resin, a glycidyl amine epoxy resin, a novolak epoxy resin, a glycidyl ether epoxy resin of a bisphenol A propylene oxide adduct, hydrogenated bisphenol A epoxy resin, a fluoro epoxy resin, a rubber-modified epoxy resin containing polybutadiene or NBR, a flame-retardant epoxy resin such as tetrabromobisphenol A glycidyl ether, a p-oxybenzoic acid glycidyl ether ester epoxy resin, an m-aminophenol epoxy resin, a diaminodiphenylmethane epoxy resin, an urethane-modified epoxy resin having an urethane bond, various kinds of alcyclic epoxy resins, N,N-diglycidylaniline, N,N-diglycidyl-o-toluidine, triglycidyl isocyanurate, polyalkylene glycol diglycidyl ether, glycidyl ether of polyhydric alcohol such as glycerin, a hydantoin epoxy resin, and an epoxide of an unsaturated polymer such as a petroleum resin.

The term "hydrogenated" as used hereinabove refers to the hydrogenation of the benzene ring moiety to the cyclohexyl ring.

The alicyclic epoxy resins are typically compounds having a cyclohexene oxide group, tricyclodecene oxide group or cyclopentene oxide group, for instance. Specifically, there may be mentioned vinylcyclohexene diepoxide, vinylcyclohexene monoepoxide, 3,4-epoxycyclohexylmethyl 3,4-epoxycyclohexancarboxylate, 2-(3,4-epoxycyclohexyl-5,5-spiro-3,4-epoxy)cyclohexane-m-dioxane, bis(3,4-epoxycyclohexyl) adipate and bis(3,4-epoxycyclohexylmethylene) adipate, without any purpose of restriction, and commonly used epoxy resins may be used. These epoxy resins may be used alone or two or more of them may be used in combination..

Preferably, the epoxy compound has no aromatic ring so that inhibition of curing by light absorbed and discoloration after curing may be avoided.

Among these epoxy resins, those having at least two epoxy groups in one molecule are preferable since, for example, they have high reactivity and the cured product to be obtained tends to form three-dimensional mesh structure at the time of curing.

To make the cured product of the invention transparent which is obtained when the mixture of the vinyl polymer and the epoxy resin is cured, the epoxy resin is preferably compatible with the vinyl polymer. For example, a hydrogenated bisphenol A epoxy resin is easily compatible with various vinyl polymer in order to make it easy to obtain a transparent cured product.

A curable composition comprising a combination of a vinyl polymer and an epoxy resin which show good compatibility, when cured, can take a modulated structure with ease and, as a result, readily gives transparent cured products. Furthermore, the mechanical physical properties are markedly improved in some instances.

For example, there may be mentioned such preferred combinations as combinations of a vinyl polymer or vinyl copolymer whose main chain is higher in polarity then butyl acrylate homopolymers and an aromatic ring-containing epoxy resin, and combinations of a vinyl polymer or vinyl copolymer and an aromatic ring-free epoxy resin.

Preferred examples of the aromatic ring-free epoxy resin include, but are not particularly limited to, alicyclic epoxy resins, more preferably epoxy resins in which each glycidyl group is not directly bound to the alicyclic ring.

Preferred examples of the vinyl polymer or vinyl copolymer whose main chain is higher in polarity than butyl acrylate homopolymers include, but are not limited to, polymers or copolymers represented by the general formula (a):

- [CH₂-CR (COOR')]ₘ- (a)

(wherein R is a hydrogen atom or a methyl group, R's are the same or different and each is an alkoxyalkyl group or an alkyl group containing 1 to 3 carbon atoms).

Specific combinations include, but are not limited to, combinations of an ethyl acrylate/butyl acrylate/2-methoxyethyl acrylate (in a mole ratio of 40 to 50/20 to 30/30 to 20) copolymer and a bisphenol A epoxy resin or bisphenol F epoxy resin or hydrogenated bisphenol A epoxy resin etc., and combinations of a butyl acrylate homopolymer and a hydrogenated bisphenol A epoxy resin or diglycidyl hexahydrophthalate, and so forth.

The oxetane compound reduces the viscosity of the curable composition and thereby improves the workability and, in addition, plays a role in improving the strength of cured products.

The oxetane compound is not particularly restricted but specifically includes 3-ethyl-3-hydroxymethyloxetane, 3-(meth)allyloxymethyl-3-ethyloxetane, (3-ethyl-3-oxetanylmethoxy)methylbenzene, 4-fluoro-[1-(3-ethyl-3-oxetanylmethoxy)methyl]benzene, 4-methoxy-[1-(3-ethyl-3-oxetanylmethoxy)methyl]benzene, [1-(3-ethyl-3-oxetanylmethoxy)ethyl] phenyl ether, isobutoxymetyl (3-ethyl-3-oxetanylmethyl) ether, isobornyloxyethyl (3-ethyl-3-oxetanylmethyl) ether, isobornyl (3-ethyl-3-oxetanylmethyl) ether, 2-ethylhexyl (3-ethyl-3-oxetanylmethyl) ether, ethyl diethylene glycol (3-ethyl-3-oxetanylmethyl) ether, dicyclopentadiene (3-ethyl-3-oxetanylmethyl) ether, dicyclopentenyloxyethyl (3-ethyl-3-oxetanylmethyl) ether, dicyclopentenylethyl (3-ethyl-3-oxetanylmethyl) ether, tetrahydrofurfuryl (3-ethyl-3-oxetanylmethyl) ether, tetrabromophenyl (3-ethyl-3-oxetanylmethyl) ether, 2-tetrabromophenoxyethyl (3-ethyl-3-oxetanylmethyl) ether, tribromophenyl (3-ethyl-3-oxetanylmethyl) ether, 2-tribromophenoxyethyl (3-ethyl-3-oxetanylmethyl) ether, 2-hydroxyethyl (3-ethyl-3-oxetanylmethyl) ether, 2-hydroxypropyl (3-ethyl-3-oxetanylmethyl) ether, butoxyethyl (3-ethyl-3-oxetanylmethyl) ether, pentachlorophenyl (3-ethyl-3-oxetanylmethyl) ether, pentabromophenyl (3-ethyl-3-oxetanylmethyl) ether, bornyl (3-ethyl-3-oxetanylmethyl) ether, 3,7-bis(3-oxetanyl)-5-oxanonane, 1,4-bis[(3-ethyl-3-oxetanylmethoxy)methyl]benzene, 1,2-bis[(3-ethyl-3-oxetanylmethoxy)methyl]ethane, 1,2-bis[(3-ethyl-3-oxetanylmethoxy)methyl]propane, ethylene glycol bis(3-ethyl-3-oxetanylmethyl) ether, dicyclopentenyl bis(3-ethyl-3-oxetanylmethyl) ether, triethylene glycol bis(3-ethyl-3-oxetanylmethyl) ether, tetraethylene glycol bis(3-ethyl-3-oxetanylmethyl) ether, tricyclodecanediyldimethylene bis(3-ethyl-3-oxetanylmethyl) ether, 1,4-bis[(3-ethyl-3-oxetanylmethoxy)methyl]butane, 1,6-bis[(3-ethyl-3-oxetanylmethoxy)methyl]hexane, polyethylene glycol bis(3-ethyl-3-oxetanylmethyl) ether, EO-modified bisphenol A bis(3-ethyl-3-oxetanylmethyl) ether, PO-modified bisphenol A bis(3-ethyl-3-oxetanylmethyl) ether, EO-modified hydrogenated bisphenol A bis(3-ethyl-3-oxetanylmethyl) ether, PO-modified hydrogenated bisphenol A bis(3-ethyl-3-oxetanylmethyl) ether, EO-modified bisphenol F bis(3-ethyl-3-oxetanylmethyl) ether, trimethylolpropane tris(3-ethyl-3-oxetanylmethyl) ether, pentaerythritol tris(3-ethyl-3-oxetanylmethyl) ether, pentaerythritol tetrakis(3-ethyl-3-oxetanylmethyl) ether, dipentaerythritol hexakis(3-ethyl-3-oxetanylmethyl) ether, dipentaerythritol pentakis(3-ethyl-3-oxetanylmethyl) ether, dipentaerythritol tetrakis(3-ethyl-3-oxetanylmethyl) ether, caprolactone-modified dipentaerythritol hexakis(3-ethyl-3-oxetanylmethyl) ether, ditrimethylolpropane tetrakis(3-ethyl-3-oxetanylmethyl) ether, and the like.

Preferably, the oxetane compound has no aromatic ring so that inhibition of curing by light absorbed and discoloration after curing may be avoided.

### Use amount of epoxy compound and/or oxetane compound (IV)

Use amount of an epoxy compound and/or oxetane compound (IV), as the mixing ratio of the vinyl polymer (I) containing at least one crosslinkable silyl group and the epoxy compound and/or oxetane compound (IV) is preferably (100/1) to (1/100) by weight, more preferably (100/5) to (5/100) by weight, and further preferably (100/10) to (10/100) by weight, however the mixing ratio is not particularly limited and may be set in accordance with the uses and purposes. Owing to the properties, the curable composition can be used, for example, as an elastic adhesive for adhesion of a material having a considerably different linear expansion coefficient or for a member that receives repetitive displacements by heat cycles and/or, when the cured product obtained is transparent, the curable composition can be used as a coating material for making an under-layer material seen through due to its transparency. For example, in the case of using the composition for the elastic adhesive, if the mixing ratio of the epoxy resin is too high, the cured product becomes hard and peeling strength is lowered. On the other hand, if it is too low, the adhesion strength and water-proof property are lowered. Therefore, the epoxy resin is used generally in 10 to 150 parts by weight and preferably in 20 to 100 parts by weight per 100 parts by weight of the vinyl polymer (I).

### «Photo acid generator»

The photo acid generator (II) is a compound which when irradiated with active energy rays such as visible light, ultraviolet rays, infrared rays, X rays, α rays, β rays or γ rays, can release an acidic active substance capable of crosslinking crosslinkable silyl groups.

The pKa of the acid generated by the photo acid generator is not restricted but preferably is about 3 or lower, more preferably about 1 or lower.

The photo acid generator that can be used in the curable composition of the invention may be any of those photo acid generators known in the art. For example, mention may be made of various compounds alleged to be suited in Japanese Kokai Publication 2000-1648, Japanese Kohyo Publication 2001-515533 and WO 2002/83764. The photo acid generator to be used in the practice of the invention is not particularly restricted to those. Thus, sulfonate esters, onium salts and carboxylate esters may be made as photo acid generators to be preferably used in the practice of the invention.

Specific examples are as follows.

Sulfonic acid derivatives can be used in the practice of the invention. For example, mention may be made of disulfonic acids, disulfonyldiazomethanes, disulfonylmethanes, sulfonylbenzoylmethanes, trifluoromethylsulfonates and like imidosulfonates, benzoin sulfonates, 1-oxy-2-hydroxy-3-propyl alcohol sulfonates, pyrogallol trisulfonates and benzyl sulfonates.

More specifically, mention may be made of diphenyl disulfone, ditosyl disulfone, bis(phenylsulfonyl)diazomethane, bis(chlorophenylsulfonyl)diazomethane, bis(xylylsulfonyl)diazomethane, phenylsulfonylbenzoyldiazomethane, bis(cyclohexylsulfonyl)methane, 1,8-naphthalenedicarboximide methylsulfonate, 1,8-naphthalenedicarboximide tosylsulfonate, 1,8-naphthalenedicarboximide trifluoromethylsulfonate, 1,8-naphthalenedicarboximide camphorsulfonate, succinimide phenylsulfonate, succinimide tosylsulfonate, succinimide trifluoromethylsulfonate, succinimide camphorsulfonate, phthalimide trifluoromethylsulfonate, cis-5-norbornene-endo-2,3-dicarboximide trifluoromethylsulfonate, benzoin tosylate, 1,2-diphenyl-2-hydroxypropyl tosylate, 1,2-di(4-methylmercaptophenyl)-2-hydroxypropyl tosylate, pyrogallol methylsulfonate, pyrogallol ethylsulfonate, 2,6-dinitrophenylmethyl tosylate, ortho-nitrophenylmethyl tosylate, para-nitrophenyl tosylate and the like. These may be used singly or two or more of them may be used in combination.

In the practice of the invention, sulfonate esters are preferred among others. For example, sulfonate esters represented by the following general structure. 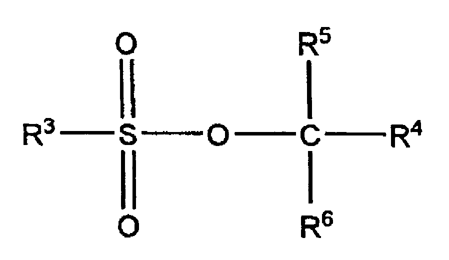 (In the above formula, R³ is an alkyl or fluoroalkyl group, R⁴ is a hydrogen atom or an alkyl group, R⁵ and R⁶ are the same or different and each is an alkyl group or a hydrocarbon-containing group cooperating in forming a ring structure (e.g. R⁵ and R⁶, together with the carbon atom to which they are bound, forming a cyclohexane ring).)

In the practice of the invention, carboxylate esters can preferably be used. For example, carboxylate esters having the following structure can be used. 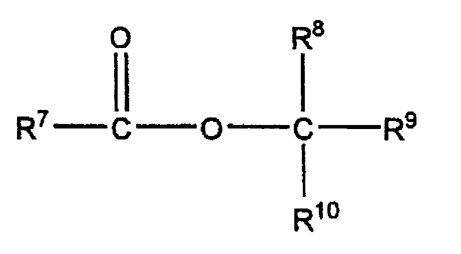 (In the above formula, R⁷ is a fluoroalkyl group, preferably a perfluoroalkyl group containing 2 to 7 carbon atoms, R⁸ to R¹⁰ may be the same or different and each is an alkyl group or a hydrocarbon-containing group cooperating in forming a ring structure (e.g. R⁸ and R⁹, together with the carbon atom to which they are bound, form a cyclohexane ring).) Generally, sulfonate esters and carboxylate esters require a heating step (50°C to 100°C) for acid releasing.

In the practice of the invention, onium salts can preferably be used.

Usable as the onium salt in the practice of the invention are sulfonium salts or iodonium salts having such an anion as tetrafluoroborate (BF₄⁻), hexafluorophosphate (PF₆⁻), hexafluoroantimonate (SbF₆⁻), hexafluoroarsenate (AsF₆⁻), hexachloroantimonate (SbCl₆⁻), tetraphenylborate, tetrakis(trifluoromethylphenyl)borate, tetrakis(pentafluoromethylphenyl)borate, perchlorate ion (ClO₄⁻), trifluoromethanesulfonate ion (CF₃SO₃⁻), fluorosulfonate ion (FSO₃⁻), toluenesulfonate ion, trinitrobenzenesulfonate anion or trinitrotoluenesulfonate anion.

As the sulfonium salts, there may be mentioned, for example, triphenylsulfonium hexafluoroacylnate, triphenylsulfonium hexafluoroborate, triphenylsulfonium tetrafluoroborate, triphenylsulfonium tetrakis(pentafluorobenzyl)borate, methyldiphenylsulfonium tetrafluoroborate, methyldiphenylsulfonium tetrakis(pentafluorobenzyl)borate, dimethylphenylsulfonium hexafluorophosphate, triphenylsulfonium hexafluorophosphate, triphenylsulfonium hexafluoroantimonate, diphenylnaphthylsulfonium hexafluoroarsenate, tritolylsulfonium hexafluorophosphate, anisyldiphenylsulfonium hexafluoroantimonate, 4-butoxyphenyldiphenylsulfonium tetrafluoroborate, 4-butoxyphenyldiphenylsulfonium tetrakis(pentafluorobenzyl)borate, 4-chlorophenyldiphenylsulfonium hexafluoroantimonate, tris(4-phenoxyphenyl)sulfonium hexafluorophosphate, di(4-ethoxyphenyl)methylsulfonium hexafluoroarsenate, 4-acetylphenyldiphenylsulfonium tetrafluoroborate, 4-acetylphenyldiphenylsulfonium tetrakis(pentafluorobenzyl)borate, tris(4-thiomethoxyphenyl)sulfonium hexafluorophosphate, di(methoxysulfonylphenyl)methylsulfonium hexafluoroantimonate, di(methoxynaphthyl)methylsulfonium tetrafluoroborate, di(methoxynaphthyl)methylsulfonium tetrakis(pentafluorobenzyl)borate, di(carbomethoxyphenyl)methylsulfonium hexafluorophosphate, (4-octyloxyphenyl)diphenylsulfonium tetrakis(3,5-bis-trifluoromethylphenyl)borate, tris(dodecylphenyl)sulfonium tetrakis(3,5-bis-trifluoromethylphenyl)borate, 4-acetamidophenyldiphenylsulfonium tetrafluoroborate, 4-acetamidophenyldiphenylsulfonium tetrakis(pentafluorobenzyl)borate, dimethylnaphthylsulfonium hexafluorophosphate, trifluoromethyldiphenylsulfonium tetrafluoroborate, trifluoromethyldiphenylsulfonium tetrakis(pentafluorobenzyl)borate, phenylmethylbenzylsulfonium hexafluorophosphate, 10-methylphenoxathiinium hexafluorophosphate, 5-methylthianthrenium hexafluorophosphate, 10-phenyl-9,9-dimethylthioxanthenium hexafluorophosphate, 10-phenyl-9-oxothioxanthenium tetrafluoroborate, 10-phenyl-9-oxothioxantheium tetrakis(pentafluorobenzyl)borate, 5-methyl-10-oxothiathrenium tetrafluoroborate, 5-methyl-10-oxothianthrenium tetrafluoroborate, 5-methyl-10-oxothianthrenium tetrakis(pentafluorobenzyl)borate and 5-methyl-10,10-dioxothianthrenium hexafluorophosphate. These may be used singly or two or more of them may be used in combination.

As the iodonium salts which can be used in the practice of the invention, there may be mentioned (4-n-decyloxyphenyl)phenyliodonium hexafluoroantimonate, [4-(2-hydroxy-n-tetradecyloxy)phenyl]phenyliodonium hexafluoroantimonate, [4-(2-hydroxy-n-tetradecyloxy)phenyl]phenyliodonium trifluorosulfonate, [4-(2-hydroxy-n-tetradecyloxy)phenyl]phenyliodonium hexafluorophosphate, [4-(2-hydroxy-n-tetradecyloxy)phenyl]phenyliodonium tetrakis(pentafluorophenyl)borate, bis(4-tert-butylphenyl)iodonium hexafluoroantimonate, bis(4-tert-butylphenyl)iodonium hexafluorophosphate, bis(4-tert-butylphenyl)iodonium trifluorosulfonate, bis(4-tert-butylphenyl)iodonium tetrafluoroborate, bis(dodecylphenyl)iodonium hexafluoroantimonate, bis (dodecylphenyl) iodonium tetrafluoroborate, bis(dodecylphenyl)iodonium hexafluorophosphate, bis(dodecylphenyl)iodonium trifluorosulfonate, di(dodecylphenyl)iodonium hexafluoroantimonate, di(dodecylphenyl)iodonium triflate, diphenyliodonium bisulfate, 4,4'-dichlorodiphenyliodonium bisulfate, 4,4'-dibromodiphenyliodonium bisulfate, 3,3'-dinitrodiphenyliodonium bisulfate, 4,4'-dimethyldiphenyliodonium bisulfate, 4,4'-bisuccinimidodiphenyliodonium bisulfate, 3-nitrodiphenyliododium bisulfate, 4,4'-dimethoxydiphenyliodonium bisulfate, bis(dodecylphenyl)iodonium tetrakis(pentafluorophenyl)borate, (4-octyloxyphenyl)phenyliodonium tetrakis(3,5-bis-trifluoromethylphenyl)borate, (tolylcumyl)iodonium tetrakis(pentafluorophenyl)borate (CH₃C₆H₄)₂I-(SO₂CF₃)3 disclosed in United States Patent No. 5,554, 664, (C₆H₅)₂I-B(C₆F₅)₄ disclosed in United States Patent No. 5,514,728 and those disclosed in United States Patent No. 5,340,898, among others. These may be used singly or two or more of them may be used in combination.

Also usable as other onium salts are aromatic diazonium salts. For example, p-methoxybenzenediazonium hexafluoroantimonate can be used.

As commercially available onium salts which can be used in the practice of the invention, there may be mentioned San-Aid SI-60, SI-80, SI-100, SI-60L, SI-80L, SI-100L, SI-L145, SI-L150, DI-L160, SI-L110 and SI-L147 (all being products of Sanshin Chemical Industry), UVI-6950, UVI-6970, UVI-6974 and UVI-6990 (these four being products of Union Carbide), Adeka Optomer SP-150, SP-151, SP-170, SP-171 and SP-172 (these five being products of Asahi Denka Kogyo), Irgacure 261 (product of Ciba Specialty Chemicals), CI-2481, CI-2624, CI-2639 and CI-2064 (these four being products of Nippon Soda), CD-1010, CD-1011 and CD-1012 (these three being products of Sartomer), DS-100, DS-101, DAM-101, DAM-102, DAM-105, DAM-201, DSM-301, NAI-100, NAI-101, NAI-105, NAI-106, SI-100, SI-101, SI-105, SI-106, PI-105, NDI-105, Benzoin Tosylate, MBZ-101, MBZ-301, PYR-100, PYR-200, DNB-101, NB-101, NB-201, BBI-101, BBI-102, BBI-103 and BBI-109 (these twenty-eight being products of Midori Kagaku), PCI-061T, PCI-062T, PCI-020T and PCI-022T (these four being products of Nippon Kayaku), IBPF and IBCF (products of Sanwa Chemical), CD 1012 (product of Sartomer), IBPF and IBCF (both being products of Sanwa Chemical), BBI-101, BBI-102, BBI-103 and BBI-109 (these four being products of Midori Kagaku) and UVE 1014 (product of General Electronics), among others.

Use may also be made of those diaryliodonium salts which can be produced by the methods described in J. Polymer Science: Part A: Polymer Chemistry, Vol. 31, 1473-1482 (1993) and J. Polymer Science; Part A: Polymer Chemistry, Vol. 31, 1483-1491 (1993).

When the curable composition of the invention is used in preparing a composition to be used in a field where electric conductivity is required, for example a composition applicable for coating through electrostatic assistance, use is preferably made of (4-octyloxyphenyl)diphenylsulfonium tetrakis(3,5-bis-trifluoromethylphenyl) borate, tris(dodecylphenyl)sulfonium tetrakis(3,5-bis-trifluoromethylphenyl) borate, bis(dodecylphenyl)iodonium tetrakis(pentafluorophenyl)borate, (4-octyloxyphenyl)phenyliodonium tetrakis(3,5-bis-trifluoromethylphenyl) borate, (tolylcumyl)iodonium tetrakis(pentafluorophenyl)borate or the like. A composition in which such a salt is used can provide paint compositions to be applied through electrostatic assistance with a sufficient level of electric conductivity, rendering the compositions suited for application by electrostatic spraying, electrospraying, or continuous liquid application (e.g. in the manner of roll coating) through electrostatic assistance. When such a salt is used, a conductivity enhancer may be used in addition to such a preferred salt as mentioned above although any further conductivity enhancer is generally not required.

The curable composition of the invention, in which a photo acid generator is used, is suited for use in those fields of application in which heat-sensitive substrates are involved. For promoting the acid release, a sensitizer may be used supplementally. The sensitizer addition level is not particularly restricted but preferably is about 0.03 to about 0.1 part by weight per 100 parts by weight of the crosslinkable silyl group-containing vinyl polymer (I). Appropriate examples of the sensitizer are, among others, those described in Chapter 13 of Radiation Curing in Polymer Science and Technology, Vol. 2, edited by Fouassier and Rabek, Elsevier Science Publishers Ltd., 1993. 2-Isopropylthioxanthone is a particularly preferred sensitizer for use in combination with di(dodecylphenyl)iodonium hexafluoroantimonate.

The content of the photo acid generator in the curable composition of the invention is not particularly restricted but, from the curability viewpoint, it is preferably 0. 1 to 15 parts by weight per 100 parts by weight of the vinyl polymer (I) having, on an average, at least one crosslinkable silyl group at its termini and, from the balanced physical properties viewpoint, it is more preferably 0.3 to 8.0 parts by weight.

### «Radical-polymerizable carbon-carbon double bond-containing compound»

With the increase in the viscosity of the composition in question, the workability thereof markedly decreases in every field of application. For the purpose of surface hardness improvement, toughness provision, or workability improvement resulting from viscosity reduction, however, a compound having a radical-polymerizable carbon-carbon double bond, namely a polymerizable monomer and/or oligomer, is preferably added, although such compound is not an essential component and is not restricted to a particular species.

As the polymerizable monomer and/or oligomer, a monomer and/or oligomer having a radical polymerizable group or a monomer and/or oligomer having an anionic polymerizable group is preferred in terms of curability.

Examples of the radical polymerizable group include (meth)acryloyl type groups, such as a (meth)acryl group, a styrene group, an acrylonitrile group, a vinylester group, an N-vinylpyrrolidone group, an acrylamide group, a conjugated diene group, a vinyl ketone group, a vinyl chloride group, and the like. In particular, a monomer and/or oligomer having a (meth)acryl group similar to the polymer used in the present invention is preferred.

Examples of the anionic polymerizable group include (meth)acryloyl type groups, such as a (meth)acryl group, a styrene group, an acrylonitrile group, an N-vinylpyrrolidone group, an acrylamide group, a conjugated diene group, a vinyl ketone group, and the like. In particular, a monomer and/or oligomer having a (meth)acryloyl type group similar to the polymer used in the present invention is preferred.

As specific examples of the above-mentioned monomers, there may be mentioned (meth)acrylate monomers, cyclic acrylates, N-vinylpyrrolidone, styrenic monomers, acrylonitrile, N-vinylpyrrolidone, acrylamide monomers, conjugated diene monomers, vinyl ketone monomers and polyfunctional monomers, among others.

As the (meth)acrylate monomers, there may be mentioned methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, isooctyl (meth)acrylate, 2-ethylhexyl (meth)acrylate, nonyl (meth)acrylate, isononyl (meth) acrylate, decyl (meth) acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, (meth)acrylic acid-ethylene oxide adducts, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth) acrylate and so forth. The compounds represented by the following formulae may also be mentioned. In the following formulae, n represents an integer of 0 to 20.

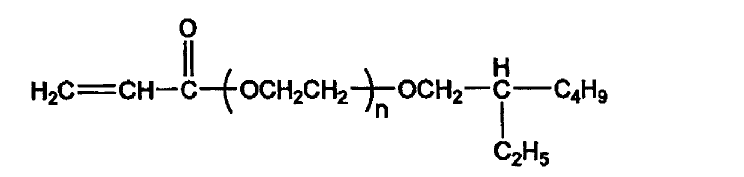

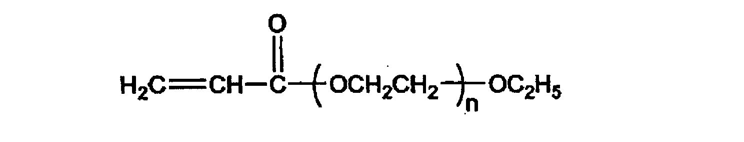

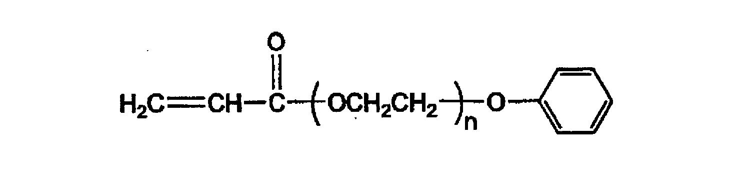

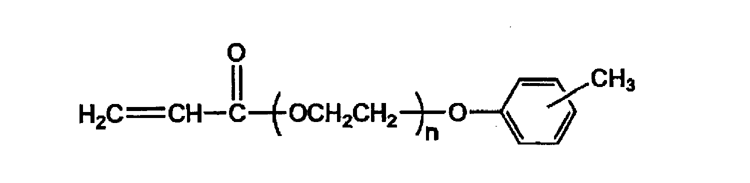

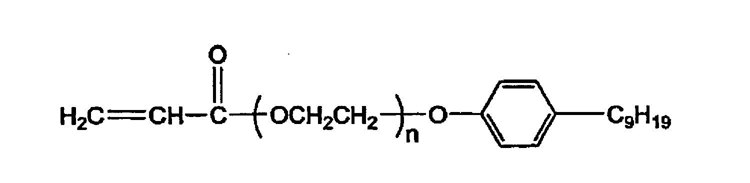

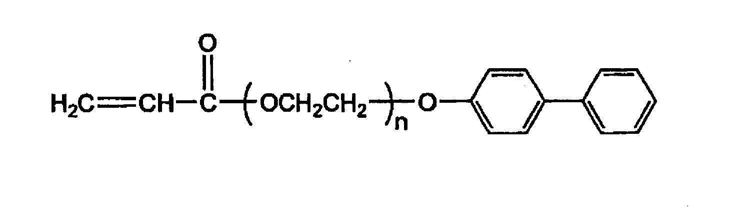

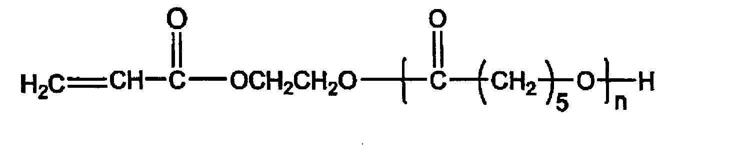

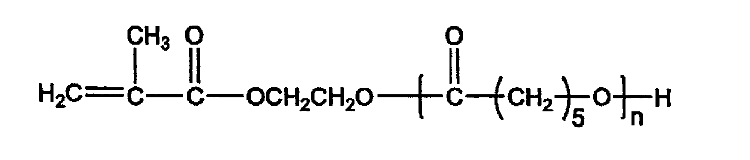

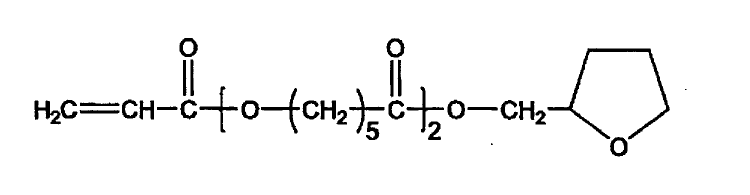

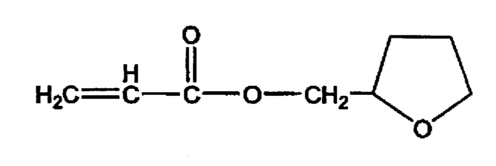

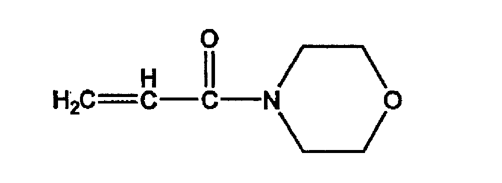

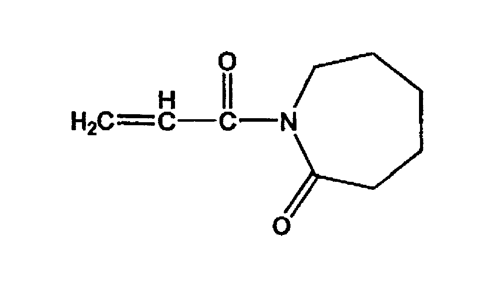

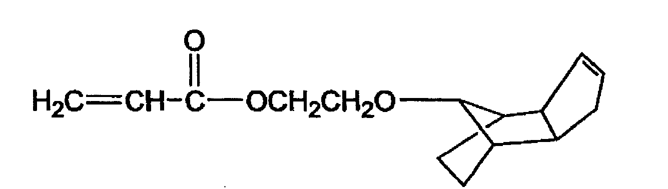

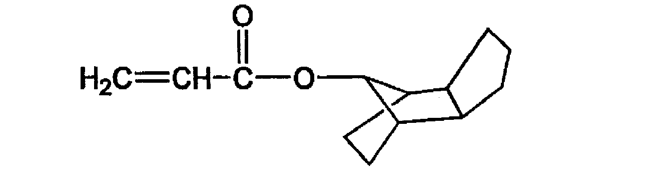

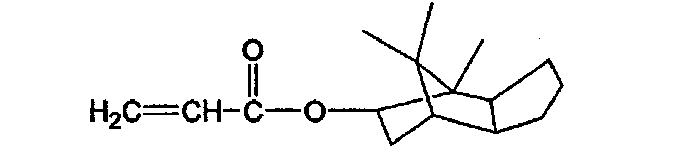

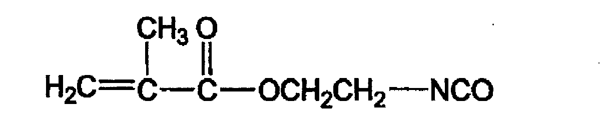

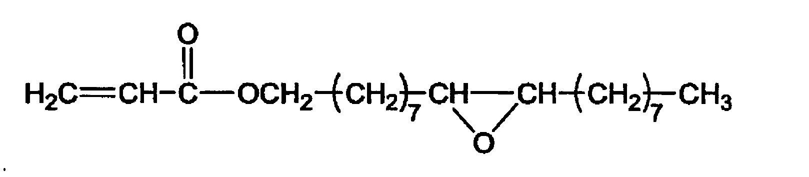

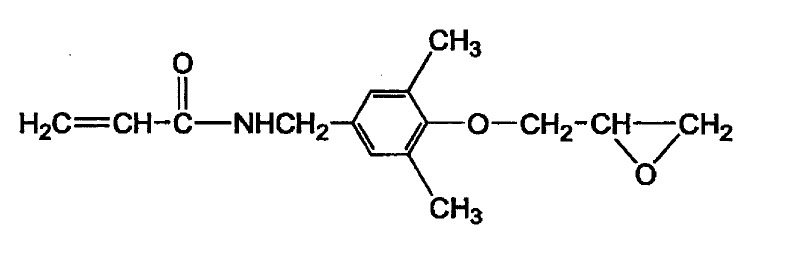

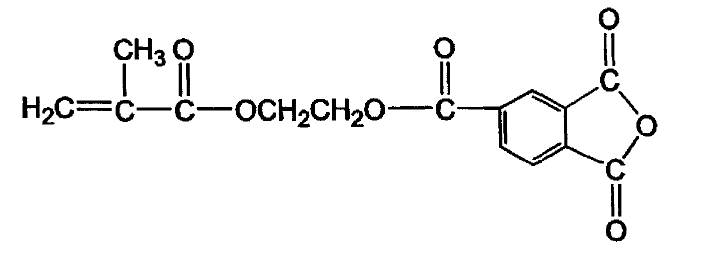

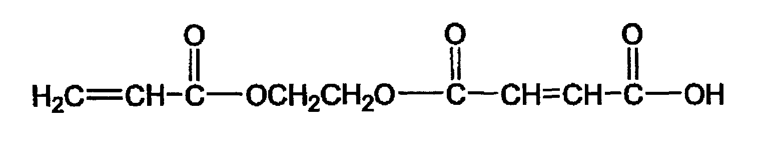

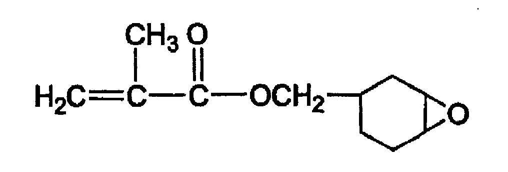

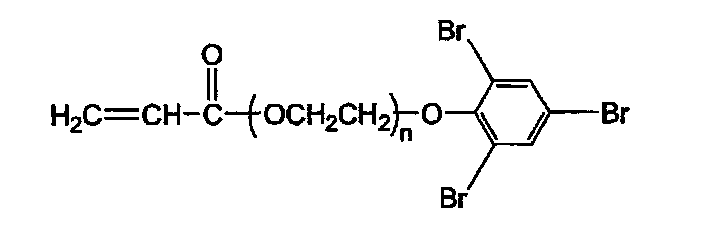

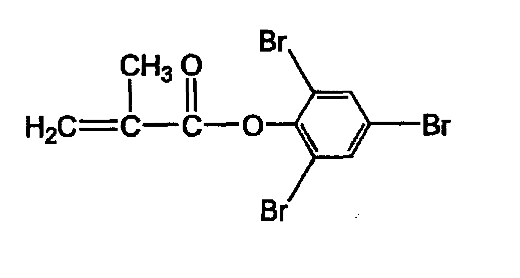

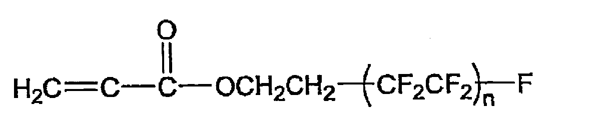

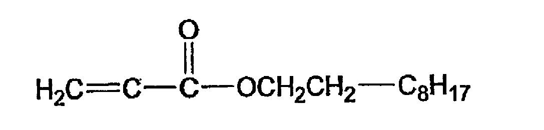

Examples of the styrene monomers include styrene and α-methylstyrene, among others. Examples of the acrylamide monomers include acrylamide and N,N-dimethylacrylamide, among others. Examples of the conjugated diene monomers include butadiene and isoprene, among others. Example of the vinyl ketone monomers include methyl vinyl ketone, among others.

Examples of polyfunctional monomers include trimethylolpropane triacrylate, neopentylglycol polypropoxydiacrylate, trimethylolpropane polyethoxytriacrylate, bisphenol F polyethoxydiacrylate, bisphenol A polyethoxydiacrylate, dipentaerythritol polyhexanolide hexacrylate, tris(hydroxyethyl)isocyanurate polyhexanolide triacrylate, tricyclodecanedimethylol diacrylate 2-(2-acryloyloxy-1,1-dimethyl)-5-ethyl-5-acryloyloxymethyl-1,3-dioxane, tetrabromobisphenol A diethoxydiacrylate, 4,4-dimercaptodiphenyl sulfide dimethacrylate, polytetraethylene glycol diacrylate, 1,9-nonanediol diacrylate, and ditrimethylolpropane tetraacrylate.

Examples of the oligomer include epoxy acrylate resins, such as bisphenol A epoxy acrylate resins, phenol novolac epoxy acrylate resins, and cresol novolac epoxy acrylate resins; COOH-modified epoxy acrylate resins, urethane acrylate resins prepared by reacting urethane resins with a hydroxyl group-containing (meth)acrylate [hydroxyethyl (meth)acrylate, hydroxypropyl (meth)acrylate, hydroxylbutyl (meth)acrylate, pentaerythritol triacrylate, or the like], the urethane resins being prepared from polyols (polytetramethylene glycol, polyester diol of ethylene glycol and adipic acid, ε-caprolactone-modified polyester diol, polypropylene glycol, polyethylene glycol, polycarbonate diol, hydroxyl group-terminated hydrogenated polyisoprene, hydroxyl group-terminated polybutadiene, hydroxyl group-terminated polyisobutylene, and the like) and organic isocyanates
(tolylene diisocyanate, isophorone diisocyanate, diphenylmethane diisocyanate, hexamethylene diisocyanate, xylylene diisocyanate, and the like); resins prepared by introducing (meth)acryl groups in the polyols through ester bonds; polyester acrylate resins; poly(meth)acryl acrylate resins (poly(meth)acrylate resins containing a polymerizable reactive group).

The number-average molecular weight of the monomer and/or oligomer having a (meth) acryloyl type group is preferably 5, 000 or less. In order to improve surface curability and decrease viscosity for improving workability, the molecular weight of the monomer used is more preferably 1,000 or less because of high compatibility.

The level of addition of the monomer and/or oligomer mentioned above is preferably 1 to 200 parts, more preferably 5 to 100 parts, per 100 parts of the vinyl polymer (I). In cases where the composition in the instant application further contains the component (III) or (IV), the addition level is preferably 1 to 200 parts, more preferably 5 to 100 parts, per 100 parts of the sum of the vinyl polymer (I) and the component (III) or (IV). In cases where the curable composition in the instant application further contains the components (III) and (IV), the addition level is preferably 1 to 200 parts, more preferably 5 to 100 parts, per 100 parts of the sum of the vinyl polymer (I) and the components (III) and (IV).

In general, an organic solvent having a boiling point of 50 to 180°C is preferred in view of excellent workability in coating and excellent drying property before and after curing. Specific examples of the solvent include alcohol solvents, such as methanol, ethanol, isopropanol, n-butanol, and isobutanol; ester solvents, such as methyl acetate, ethyl acetate, butyl acetate, ethylene glycol monoethyl ether, ethylene glycol monoethyl ether acetate, and ethylene glycol monobutyl ether; ketone solvents, such as acetone, methyl ethyl ketone, and methyl isobutyl ketone; aromatic solvents, such as toluene and xylene; and cyclic ether solvents, such as dioxane. These solvents can be used alone or as a mixture of at least two.

### «Vinyl polymer (V) »

It is also possible to incorporate, in the curable composition of the invention, a vinyl polymer having, on an average, at least one crosslinkable acryloyl group at its termini.

### <Introduction of functional group of vinyl polymer (V)>

The process is not particularly limited, but polymer (I) can be produced by, for example, preparing a vinyl polymer having at least one highly reactive carbon-halogen bond by the above-described method, and then substituting the reactive functional group with a substituent having a (meth)acryloyl type group.

The conversion of a terminal group of a vinyl polymer having a reactive functional group to a group represented by the general formula (1) will be described below.

The process for introducing a (meth) acryloyl type group to an end of the vinyl polymer is not limited, but the following process can be used, for example:
Process of reacting a vinyl polymer having a halogen group (a halogen atom) at an end with a compound represented by the general formula (2):

M⁺⁻OC(O)C(R^{a})=CH₂ (2)

(wherein R^{a} represents hydrogen or an organic group having 1 to 20 carbon atoms, and M⁺ represents an alkali metal ion or quaternary ammonium ion).

As the vinyl polymer having a halogen group at an end, a polymer having a terminal structure represented by the general formula (3) is preferred:

-CR¹R²X (3)

(wherein R¹ and R² each represent a group bonded to an ethylenically unsaturated group of a vinyl monomer, and X represents a chlorine atom, a bromine atom, or an iodine atom) .

Each of these processes will be described in detail below.

The introduction process includes reacting a vinyl polymer having a halogen group at a terminus with a compound represented by the general formula (2).

Although the vinyl polymer having a halogen group at a terminus is not particularly limited, a polymer having a terminal group represented by the general formula (3).

As the groups represented by R¹ and R² in the general formula (3) and bound to the ethylenically unsaturated bond of the vinyl monomer, there may be mentioned a hydrogen atom and such groups as methyl, carbonyl, carboxylate, toluyl, fluoro, chloro, trialkoxysilyl, phenylsulfonic acid, carboxylic acid imide and cyano groups.

The vinyl polymer having a halogen group at a terminus, particularly the vinyl polymer having the terminal group represented by the general formula (3), can be produced by a process of polymerizing a vinyl monomer using the organic halide or halogenated sulfonyl compound as the initiator and the transition metal complex as the catalyst, or a process of polymerizing a vinyl monomer using a halide as the chain transfer agent. However, the former process is preferred.

The compound represented by the general formula (2) is not particularly limited. Organic group R^{a} having 1 to 20 carbon atoms, which is in the general formula (2), is exemplified by the same as the above, and specific examples of R^{a} include those exemplified by the same as the above.

M⁺ in the general formula (2) is a counter cation of oxyanion, and examples of these include an alkali metal ion, a quaternary ammonium ion, and the like.

Examples of the alkali metal ion include lithium ion, sodium ion, and potassium ion.

Examples of a quaternary ammonium ion include tetramethylammonium ion, tetraethylammonium ion, tetrabenzylammonium ion, trimethyldodecylammonium ion, tetrabutylammonium ion, and dimethylpiperidiniuum ion. Among these, there may be mentioned preferably an alkali metal ion, and more preferably sodium ion or potassium ion.

The compound represented by the general formula (2) is preferably used in an amount of 1 to 5 equivalents and more preferably 1.0 to 1. 2 equivalents relative to the terminal group represented by the general formula (3).

The solvent used for carrying out the reaction is not particularly limited, but a polar solvent is preferred because the reaction is nucleophilic substitution reaction. Preferably used are tetrahydrofuran, dioxane, diethyl ether, acetone, dimethylsulfoxide, dimethylformamide, dimethylacetamide, hexamethylphosphoric triamide, and acetonitrile, etc.

The reaction temperature is not particularly limited, but it is preferably 0 to 150°C and more preferably 10°C to 100°C.

### <Photoradical polymerization initiator>

In cases where the above-mentioned compound having a radical-polymerizable carbon-carbon double bond is added, a photoradical polymerization initiator is preferably added to photo-polymerize that compound.

The photoradical polymerization initiator is not particularly restricted but includes, as specific examples, acetophenone, propiophenone, benzophenone, xanthol, fluoreine, benzaldehyde, anthraquinone, triphenylamine, carbozole, 3-methylacetophenone, 4-methylacetophenone, 3-pentylacetophenone, 2,2-diethoxyacetophenone, 4-methoxyacetopohenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoyl, benzoin methyl ether, benzoin butyl ether, bis(4-dimethylaminophenyl) ketone, benzylmethoxyketal, 2-chlorothioxanthone, and the like.

These photoradical polymerization initiators can be used alone, or in combination with another compound. As specific example, the initiator may be combined with an amine, such as diethanolmethylamine, dimethylethanolamine, or triethanolamine, and further combined with an iodonium salt such as diphenyl iodonium chloride, or a dye, such as methylene blue, and an amine.

When the photoradical polymerization initiator is used, if required, a polymerization inhibitor, such as hydroquinone, hydroquinone monomethyl ether, benzoquinone, para-tert-butyl catechol may be added.

Furthermore, a near-infrared light absorbing cationic dye may be used as a near-infrared photopolymerization initiator.

As the near-infrared light absorbing cationic dye, a dye which is excited with light energy in a range of 650 nm to 1, 500 nm, for example, the near-infrared light absorbing cationic dye-borate anion complex disclosed in Japanese Kokai Publication Hei-03-111402 and Hei-05-194619, is preferably used. A boron-based sensitizing agent is more preferably combined.

The level of addition of photoradical polymerization initiators is not particularly restricted but is only required to be sufficient to photofunctionalize the system to a slight extent; thus, it is preferably 0.001 to 10 parts per 100 parts of the vinyl polymer (I).

### «Trialkoxysilane compound or tetraalkoxysilane compound»

For improving cured product physical properties and/or storage stability, a trialkoxysilane compound or tetraalkoxysilane compound, which is not limited to any particular species, is preferably added to the curable composition of the invention; the addition of a trialkoxysilane compound is particularly preferred. As the trialkoxysilane compound or tetraalkoxysilane compound, there may be mentioned hydrolyzable organosilicon compounds represented by the formula R₄₋ₙSiYₙ (in which Y is a hydrolyzable group, R is an organic group which may optionally contain a functional group, and n is 3 or 4) and, as specific examples, there may be mentioned vinyltrimethoxysilane, vinyltriethoxysilane, methyltrimethoxysilane, methyltriethoxysilane, ethyltriethoxysilane, phenyltriethoxysilane, methyltriacetoxysilane, tetramethyl orthosilicate (tetramethoxysilane or methyl silicate), tetraethyl orthosilicate (tetraethoxysilane or ethyl silicate), tetrapropyl orthosilicate, tetrabutyl orthosilicate and like silane compounds, or partial hydrolysis condensates thereof, γ-aminopropyltrimethoxysilane, γ-glycidoxypropyltriethoxysilane, N-(β-aminoethyl)-γ-aminopropyltrimethoxysilane, γ-acryloxypropyltrimethoxysilane, γ-methacryloxypropyltrimethoxysilane, γ-glycidoxypropyltrimethoxysilane, γ-mercaptopropyltrimethoxysilane, N-(β-aminoethyl)-γ-aminopropylmethyldimethoxysilane and like silane coupling agents, and partial hydrolysis condensates thereof. One or two or more species selected from among these can be used singly or in combination.

The level of addition of the trialkoxysilane compound or tetraalkoxysilane compound is 0.1 to 30 parts by weight, preferably 0.3 to 20 parts by weight, more preferably 0.5 to 10 parts by weight, per 100 parts by weight of the vinyl polymer.

The addition of such a trialkoxysilane compound or tetraalkoxysilane compound is preferably made in such a condition that the curable composition is in an anhydrous state, although the addition may be made in a condition that the composition contains moisture.

### «Curable composition»

In the curable composition of the invention, there may be incorporated therein one or more of various compounding ingredients according to the desired physical characteristics.

### <Curing catalyst>

Although, in the practice of the invention, the crosslinkable silyl group-containing vinyl polymer can be cured by means of the photo acid generator, one or more of those various other condensation catalysts known in the art may be added. On the occasion of preparing one-pack compounds by adding such catalysts, however, it is necessary that the moisture should be sufficiently removed from the compositions.

As examples of the condensation catalyst, there may be mentioned, for example, dialkyltin diacarboxylates such as dibutyltin dilaulate, dibutyltin diacetate, dibutyltin diethylhexanoate, dibutyltin dioctate, dibutyltin dimethylmaleate, dibutyltin diethylmaleate, dibutyltin dibutylmaleate, dibutyltin diisooctylmaleate, dibutyltin ditridecylmaleate, dibutyltin dibenzylmaleate, dibutyltin maleate, dioctyltin diacetate, dioctyltin distearate, dioctyltin dilaurate, dioctyltin diethylmaleate, dioctyltin diisooctylate and the like, dialkyltin alkoxides such as dibutyltin dimethoxide, dibutyltin diphenoxide and the like, intermolecular coordination derivatives of dialkyltin such as dibutyltin diacetylacetonate, dibutyltin diethylacetoacetate and the like, reaction products of a dialkyltin oxide such as dibutyltin oxide and dioctyltin oxide with an ester compound such as dioctyl phthalate, diisodecyl phthalate and methyl maleate, reaction products of a dialkyltin oxide such as dibutyltin bistriethoxysilicate and dioctyltin bistriethoxysilicate with a silicate compound, oxy derivatives (stannoxane compounds) of these dialkyltin compounds, and the like stannic compounds; stannous compounds such as stannous ocylate, stannous naphthanate, stannous stearate, stannous versatate and the like, and reaction products and mixtures of these with an amine compound such as laurylamine, which will be described later; monobutyltin compounds such as monobutyltin trisoctoate and monobutyltin triisopropoxide, monooctyltin compounds, and the like monoalkyl tins; titanate esters such as tetrabutyl titanate, tetrapropyl titanate, tetra(2-ethylhexyl)titanate and isopropoxytitanium bis(ethylacetoacetate); organoaluminum compounds such as aluminum trisacetylacetonate and aluminum trisethylacetoacetate and diisopropoxyaluminum ethylacetoacetate; carboxylic acid (e.g. 2-ethylhexanoic acid, neodecanoic acid, versatic acid, oleic acid, and naphthenic acid) metal salts such as bismuth carbonate, iron carbonate, titanium carbonate, lead carbonate, vanadium carbonate, zirconium carbonate, calcium carbonate, potassium carbonate, barium carbonate, manganese carbonate, cerium carbonate, nickel carbonate, cobalt carbonate, zinc carbonate and aluminum carbonate, and reaction products and mixtures of these with an amine compound such as laurylamine, which will be described later; chelate compounds such as zirconium tetraacetylacetonate, zirconium tributoxyacetylacetonate, dibutoxyzirconium diacetylacetonate, zirconium acetylacetonate-bis(ethylacetoacetate) and titanium tetraacetylacetonate; aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine and cyclohexylamine; aliphatic secondary amines such as dimethylamine, diethylamine, dipropylamine, diisopropylamine, dibutylamine, diamylamine, dioctylamine, di(2-ethylhexyl)amine, didecylamine, dilaurylamine, dicetylamine, distearylamine, methylstearylamine, ethylstearylamine and butylstearylamine; aliphatic tertiary amines such as tiramylamine, trihexylamine and trioctylamine; aliphatic unsaturated amines such as triallyamine and oleylamine; aromatic amines such as laurylaniline, stearylaniline, and triphenylamine; other amines, that is amine compounds such as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole and 1,8-diazabicyclo(5,4,0)undecene-7 (DBU), and salts of these amine compounds and carboxylic acids etc.; reaction products and mixtures of an amine compound and an organic tin compound such as reaction products or mixtures of laurylamine and tin octylate; low molecular weight polyamide resins obtained from excess polyamines and polybasic acids; reaction products of excess polyamines and epoxy compounds; and γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(β-aminoethyl)aminopropyltrimethoxysilane, N-(β-aminoethyl)aminopropylmethyldimethoxysilane, N-(β-aminoethyl)aminopropyltriethoxysilane, N-(β-aminoethyl)aminopropylmethyldithoxysilane, N-(β-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbnezyl-γ-aminopropyltriethoxysilane. Further, examples of the catalysts may include modified derivatives of the above-mentioned compounds such as amino-modified silyl polymers, silylated aminopolymers, unsaturated aminosilane complexes, amino group-containing silane coupling agents such as phenylamino-long chain alkylsilane and aminosilylated silicones, and the like silanol condensation catalysts; fatty acids such as versatic acid, organic acid-type phosphate ester compounds and the like acidic catalysts, basic catalysts, and the like conventionally known silanol condensation catalysts; and the like.

Examples of the organic acid-type phosphate ester compound, as an acidic catalyst, may include (CH₃O)₂-P(=O) (-OH), (CH₃O)-P(=O) (-OH)₂, (C₂H₅O)₂-P(=O) (-OH), (C₂H₅O)-P(=O) (-OH)₂, (C₃H₇O)₂-P(=O) (-OH), (C₃H₇O)-P(=O)(-OH)₂, (C₄H₉O)₂-P(=O) (-OH), (C₄H₉O)-P(=O) (-OH)₂, (C₈H₁₇O)₂-P(=O) (-OH), (C₈H₁₇O)-P(=O) (-OH)₂, (C₁₀H₂₁O) ₂-P (=O) (-OH), (C₁₀H₂₁O) -P (=O) (-OH) ₂, (C₁₃H₂₇O) ₂-P(=O) (-OH), (C₁₃H₂₇O) -P (=O) (-OH) ₂, (C₁₆H₃₃O)₂-P(=O) (-OH), (C₁₆H₃₃O) -P (=O) (-OH) ₂, (HO-C₆H₁₂O) ₂-P (=O) (-OH), (HO-C₆H₁₂O)-P(=O)(-OH)₂, (HO-C₈H₁₆O)-P(=O) (-OH), (HO-C₈H₁₆O)-P(=O) (-OH)₂, [(CH₂OH) (CHOH) O] ₂-P (=O) (-OH), [(CH₂OH) (CHOH) O] -P (=O) (-OH) ₂, [(CH₂OH)(CHOH)C₂H₄O]₂-P(=O) (-OH), and [(CH₂OH)(CHOH)C₂H₄O]-P(=O)(-OH)₂, without any purpose of particular restriction.

The combination systems of these organic acids and amines are preferable since the catalytic activity becomes high and therefore the use amount can be saved. Among the combination systems of the organic acids and amines, a combination of an acidic phosphate ester with an amine and a combination of an organic carboxylic acid with an amine; particularly a combination of an organic acid-type phosphate ester with an amine and a combination of an aliphatic carboxylic acid with an amine are more preferable in terms of the higher catalytic activity and quick curability.

These catalysts may be used alone or two or more of them may be used in combination. The addition amount of the condensation catalyst is preferably in a range of 0.01 to 20 parts (parts by weight, hereinafter the same) and more preferably in a range of 0.5 to 5 parts per 100 parts of the polymer containing a crosslinkable silyl group. If the addition amount of the silanol condensation catalyst is lower than the above-mentioned range, the curing rate may be possibly retarded and it becomes hard to promote the curing reaction sufficiently sometimes. On the other hand, the addition amount of the silanol condensation catalyst exceeding the above-mentioned range is unfavorable, since heat generation and foaming occurs locally at the time of curing to make it difficult to obtain a good cured product, and the pot-life becomes too short to exhibit good workability. In addition, although it is not particularly limited, a tin curing catalyst may exhibit a preferable effect since it can make it easy to control the curability.

Although it is not particularly limited, in the case of obtaining the following one package composition, in terms of the curing rate and the storage stability of the composition, tin (IV) is preferable for the tin curing catalyst, however a combination of tin (II) with an organic amine or a tin-free compound is also usable.

Further, although it is not particularly limited, in the case of using the composition of the invention for a sealant for a siding board, or the like, regardless of being one-component or two-pack type, tin (IV) is preferable since, for example, use of tin (IV) makes it easy to moderate the stress of the cured product and thus causes no damage to the adherend and also suppresses peeling at the adhesion interface.

In recent years, environmental issue has been brought into focus and use of the tin catalyst tends to be avoided, in such a case, a tin-free catalyst, e.g. bismuth carboxylate and titanium carboxylate, may be selected.

In the curable composition of the invention, to further increase the activity of the condensation catalyst, similarly to the amine compound, it is also possible to use the above-mentioned amino group-containing silane coupling agent as a promoter. The amino group-containing silane coupling agent is a compound having a group containing a silicon atom to which a hydrolysable group is bonded (hereinafter, referred to as hydrolysable silyl group) and an amino group. Examples of the hydrolysable group may be those exemplified above and methoxy, ethoxy and the like groups are preferable in terms of the hydrolysis rate. The number of the hydrolysable group is preferably two or higher and particularly preferably three or higher.

The addition amount of the amine compound is preferably about 0.01 to 50 parts by weight and more preferably 0.1 to 20 parts by weight per 100 parts of the polymer containing a crosslinkable silyl group. If the addition amount of the amine compound is lower than 0.01 parts by weight, the curing rate may be possibly retarded and the curing reaction hardly proceed sufficiently in some cases. On the other hand, the addition amount of the amine compound exceeding 30 parts by weight is unfavorable, since the pot-life is too shortened to exhibit good workability in some cases.

These amine compounds may be used alone or two or more of them may be used as a mixture.

Further, a silicon compound having no amino group or silanol group may be added as a promoter. Examples of the silane compound are not particularly limited and phenyltrimethoxysilane, phenylmethyldimethoxysilane, phenyldimethylmethoxysilane, diphenyldimethoxysilane, diphenyldiethoxysilane, triphenylmethoxysilane and the like are preferable. Particularly, diphenyldimethoxysilane and diphenyldiethoxysilane are most preferable since they are cheep and easily available.

The addition amount of the silicon compound is preferably about 0.01 to 20 parts and more preferably 0.1 to 10 parts per 100 parts of the polymer containing a crosslinkable silyl group. If the addition amount of the silicon compound is lower than the above-mentioned range, the effect of accelerating the curing reaction may be possibly lowered. On the other hand, if the addition amount of the silicon compound is higher than the above-mentioned range, the hardness and tensile strength of the cured product may be possibly lowered.

The type and the addition amount of the curing catalyst and curing agent make it possible to control the curability and mechanical property in the invention in accordance with the uses and purposes. Further, the type and the addition amount of the curing catalyst and curing agent may be changed in accordance with reactivity of the silyl group of the polymer containing a crosslinkable silyl group and in the case where the reactivity is high, curing can be carried out sufficiently with an amount as small as 0.01 to 1 part.

The type and the addition amount of the curing catalyst and curing agent may be selected in accordance with the type of Y and the number for a of the vinyl polymer of the invention and thus the curability, mechanical property and the like in the invention may be controlled in accordance with the uses and purposes. In the case where Y is an alkoxy group, the reactivity is higher as the number of carbon atoms is low. On the other hand, the number for a is higher, the reactivity is higher and therefore curing can be carried out sufficiently with a small addition amount.

### <Dehydration agent>

During storage, the curable composition sometimes becomes sticky and gelled due to the moisture etc. entrained at the time of production to result in deterioration of the workability at the time of use. Further, due to the increased viscosity and gelation of the curable composition, the physical properties of the cured product obtained using the curable composition are deteriorated after curing and thus there occurs a problem of deterioration of the sealing property etc., which is the aim of the invention. That is, the curable composition sometimes has a problem in the storage stability.

To improve the storage stability of the curable composition, there is a method for decreasing the moisture content of the curable composition by azeotropic dehydration. For example, there is a method that about 0.1 to 10 parts by weight of a volatile organic compound having a very low azeotropic boiling point to water is added to and evenly mixed with water in order to take out an azeotropic composition of water-organic compound with sucking by a vacuum pump under a condition of heating at about 50 to 90°C. Examples of the volatile organic compound having a very low azeotropic boiling point to water are halides such as methylene chloride, chloroform, carbon tetrachloride and trichloroethylene; alcohols such as ethanol, allyl alcohol, 1-propanol and butanol; esters such as ethyl acetate and methyl propionate; ketones such as methyl ethyl ketone and 3-methyl-2-butanone; ethers such as ethyl ether and isopropyl ether; hydrocarbons such as benzene, toluene, xylene and hexane; and the like. However, since this method involves an evaporation step, it is required to add other volatile addition agents or carry out a treatment and/or recovery etc. of the volatile organic compound used for azeotropic boiling. Therefore, it is sometimes more preferable to add the following dehydration agent in some cases.

As described above, the composition of the invention may contain the dehydration agent for removing moisture from the composition in order to improve the storage stability. Examples of the dehydration agent are, for example, inorganic solids such as phosphorus pentoxide, sodium hydrogen carbonate, sodium sulfate (anhydrous sodium sulfate) and molecular sieves. These solid dehydration agents may be used, however after addition of the agent, the pH of the composition sometimes tends to be acidic or basic to cause condensation, resulting in adverse deterioration of the storage stability in some cases or deterioration of the workability because of requirement for solid removal thereafter. Therefore, the following liquid-state hydrolysable ester compound is preferable. Examples of the hydrolysable ester compound are selected from the group consisting of trialkyl orthoformate such as trimethyl orthoformate, triethyl orthoformate, tripropyl orthoformate and tributyl orthoformate; trialkyl orthoacetate such as trimethyl orthoacetate, triethyl orthoacetate, tripropyl orthoacetate and tributyl orthoacetate; and the like.

The use amount of the dehydration agent is not restiricted, and is 0.1 to 30 parts by weight, preferably 0.3 to 20 parts by weight, and more preferably 0.5 to 10 parts by weight, per 100 parts by weight of the vinyl polymer.

At the time of adding the dehydration agent, it is preferable to add the agent after the curable composition is dehydrated, however it may be added in the state the composition contains moisture as it does.

### <Adhesion promoter>

The composition of the invention may contain an aminosilane compound and other silane coupling agents, and an adhesion promoter other than the silane coupling agent. If adhesion promoter is added, the risk of peeling off of a sealant from an adherend such as a siding board may be decreased due to alteration of jointing width or the like by external power. In some cases, a primer for improving the adhesiveness is not required so as to simplify the processing work. Examples of the silane coupling agent are silane coupling agents having a functional group such as an amino group, mercapto group, epoxy group, carboxyl group, vinyl group, isocyanato group, isocyanurate group, and a halogen and specific examples of them are isocyanato group-containing silanes such as γ-isocyanateopropyltrimethoxysilane, γ-isocyanateopropyltriethoxysilane, γ-isocyanateopropylmethyldiethoxysilane, and γ-isocyanateopropylmethyldimethoxysilane; amino-containing silanes such as γ-aminopropyltrimethoxysilane, γ-aminopropyltriethoxysilane, γ-aminopropyltripropoxysilane, γ-aminopropylmethyldiimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-ureidopropyltrimethoxysilane, N-phenyl-γ-aminopropyltrimethoxysialne, N-benzyl-γ-aminopropyltrimethoxysilane and N-vinylbenzyl-γ-aminopropyltriethoxysilane; mercapto group-containing silanes such as γ-mercaptopropyltrimethoxysilane, γ-mercaptopropyltriethoxysilane, γ-mercaptopropylmethyldimethoxysilane and γ-mercaptopropylmethyldiethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane and β-(3,4-epoxycyclohexyl)ethyltriethoxysilane; carboxysilanes such as β-carboxyethyltriethoxysilane, β-carboxyethylphenylbis(2-methoxyethoxy)silane and N-β-(carboxymethyl)aminoethyl-γ-aminopropyltrimethoxysilane ; vinyl unsaturated group-containing silanes such as vinyltrimethoxysilane, vinyltriethoxysilane, γ-methacryloyloxypropylmethyldimethoxysilane and γ-acryloyloxypropylmethyltriethoxysilane; halogen-containing silanes such as γ-chloropropyltrimethoxysilane; isocyanurate silanes such as tris(trimethoxysilyl)isocyanurate; polysulfanes such as bis(3-triethoxysilylpropyl)tetrasulfane; and the like. Further, reaction products of the above-mentioned amino group-containing silane and epoxy group-containing silane, reaction products of an amino group-containing silane and an acryloyloxy group-containing silane, and reaction products of an amino group-containing silane and an isocyanato group-containing silane are also usable. Further, derivatives obtained by modifying the above-mentioned silane, for example, amino-modified silyl polymers, silylated aminopolymers, unsaturated aminosilane complexes, phenylamino long-chain alkylsilanes, amino-silylated silicones, block isocyanato silanes, silylated polyesters and the like may be usable as the silane coupling agent. Further, ketimine compounds obtained by reaction of the above-mentioned amino group-containing silane and a ketone compound such as methyl isobutyl ketone, and the like may be usable as the silane coupling agent.

In general, the silane coupling agent to be used in the present invention is used in 0.1 to 20 parts per 100 parts of the polymer containing a crosslinkable silyl group. Particularly, it is preferable to be used in 0.5 to 10 parts. The effect of the addition of the silane coupling agent to the curable composition of the invention is a remarkable adhesiveness improvement in the case of using the curable composition for various kinds of adherends, that is inorganic substrates such as glass, aluminum, stainless steel, zinc, copper and mortar and organic substrates such as vinyl chloride, acrylic compounds, polyesters, polyethylene, polypropylene and polycarbonate under non-primer condition or primer treatment condition. In the case of use under non-primer condition, the effect of improving the adhesiveness to various kinds of adherends is particularly substantial. Further, if the use amount is about 1 part per 100 parts of the polymer containing a crosslinkable silyl group, the use scarcely affects the transparency of the cured product.

Specific examples of the adhesion promoter other than the silane coupling agents are not particularly limited and may include epoxy resin, phenol resin, linear or branched block copolymers such as polystyrene-polybutadiene-polystyrene, polystyrene-polyisoprene-polystyrene, polystyrene-polyisoprene/butadiene copolymer-polystyrene, polystyrene-polyethylene/propylene copolymer-polystyrene, polystyrene-polyethylene/butylene copolymer-polystyrene and polystyrene-polyisobutene-polystyrene, alkyl sulfonate esters, sulfur, alkyl titanates, aromatic polyisocyanates, and the like. The epoxy resin may be used being reacted with the amino group-containing silane.

The above-mentioned adhesion promoters may be used alone or two or more of them may be used as a mixture. The adhesiveness to the adherend may be improved by addition of the adhesion promoters. Although it is not particularly limited, to improve the adhesiveness, particularly the adhesiveness to a metal face such as an oil pan, it is preferable to use 0.1 to 20 parts by weight of the silane coupling agent among the above-mentioned adhesion promoters in combination.

The type and the addition amount of the adhesion promoter may be selected in accordance with the type of Y and the number for a of the vinyl polymer of the invention and thus the curability, mechanical property and the like in the invention may be controlled in accordance with the uses and purposes. The above-mentioned selection requires attention since it affects the curability and elongation in particular.

### <Plasticizer>

Various kinds of plasticizers may be used for the curable composition of the invention according to need. If a plasticizer is used in combination with a filler, which will be described later, the elongation of the cured product can be increased and a large amount of filler can be advantageously added, however it is not necessarily indispensable agent. The plasticizers are not particularly limited and may be selected from the following in accordance with the purpose such as adjustment of the physical property, adjustment of the material state and the like: phthalic acid esters such as dibutyl phthalate, diheptyl phthalate, di(2-ethylhexyl)phthalate, diisodecyl phthalate, butyl benzyl phthalate; non-aromatic dibasic acid esters such as dioctyl adipate, dioctyl sebacate, dibutyl sebacate and isodecyl succinate; aliphatic esters such as butyl oleate and methyl acetyl ricinoleate; polyalkylene glycol esters such as diethylene glycol dibenzoate, triethylene glycol dibenzoate and pentaerythritol ester; phosphoric acid esters such as tricresyl phosphate and tributyl phosphate; trimellitic acid esters; polystyrenes such as polystyrene and poly-α-methylstyrene; polybutadiene, polybutene, polyisobutylene, butadiene-acrylonitrile, polychloroprene; chloro paraffins; hydrocarbon oils such as alkyl diphenyl and partially-hydrogenated tarphenyl; process oils; polyether polyols such as polyethylene glycol, polypropylene glycol, ethylene oxide-propylene oxide copolymer and polytetramethylene glycol, polyether alkyl-derivatives obtained by converting the hydroxyl groups at one terminus, both termini or all termini of the above-mentioned polyether polyols to alkyl ester group or alkyl ether group etc., and the like polyethers; epoxy group-containing plasticizers such as epoxylated soybean oil, benzyl epoxystearate and E-PS; polyester plasticizers obtained from a dibasic acid such as sebacic acid, adipic acid, azelaic acid and phthalic acid and a dihydric alcohol such as ethylene glycol, diethylene glycol, triethylene glycol, propylene glycol and dipropylene glycol; vinyl polymers obtained by polymerizing vinyl monomers by various methods, e.g. acrylic plasticizers; and the like.

Among them, a polymer plasticizer with a number average molecular weight of 500 to 15,000 is capable of adjusting the viscosity and slump property of the curable composition and the mechanical properties such as tensile strength and elongation of the cured product obtained by curing the composition while being added to the composition, and as compared with the case a low molecular plasticizer, that is, a plasticizer containing no polymer component in the molecule, is used, the polymer plasticizer keeps the initial physical properties for a long duration and improves the quick drying property (also called as coatability) in the case where an alkyd paint is applied to the cured product. Additionally, although it is not limited, the polymer plasticizer may or may not have functional groups.

The number average molecular weight of the above-mentioned polymer plasticizer is 500 to 15, 000 and it is preferably 800 to 10,000 and more preferably 1,000 to 8,000. If the molecular weight is too low, the plasticizer is eluted by heat or rain fall with the lapse of time or the initial physical properties cannot be maintained for a long duration and the alkyd coatability improvement becomes impossible. On the other hand, if the molecular weight is too high, the viscosity becomes high and the workability is worsened.

Among the exemplified polymer plasticizers, the polyether plasticizers and (meth) acrylic polymer plasticizers are preferable in terms of the high elongation and high weather resistance. A synthetic method of the acrylic polymers may be, for example, conventional methods for carrying out solution polymerization and non-solvent acrylic polymer production methods. The latter acrylic plasticizer is produced by high temperature continuous polymerization manner using no solvent or chain transfer agent (reference to U.S. Patent No. 4414370, Japanese Kokai Publication Sho-59-6207, Japanese Kokoku Publication Hei-5-58005, Japanese Kokai Publication Hei-1-313522, U.S. Patent No. 5010166) and these plasticizers are more preferable for the purposes of the invention. Examples of them are not particularly limited and may include, for example, ARUFON UP series (UP-1000, UP-1110, UP-2000, and UP-2130 (called as SGO) manufactured by Toagosei Co., Ltd. (reference to Bosui Journal (Water-proof property Journal), June 2002). Living radical polymerization method can be exemplified as another synthesis method. According to this method, a preferable polymer with a narrow molecular weight distribution and a low viscosity can be produced and therefore this method is preferable and an atom transfer radical polymerization method is more preferable. However, the methods are not limited to these exemplified methods.

The molecular weight distribution of the polymer plasticizer is not particularly limited, and in terms of the viscosity, it is preferable to be narrow and it is preferably lower than 1.8. It is more preferably 1.7 or lower, further preferably 1.6 or lower, furthermore preferably 1.5 or lower, even more preferably 1.4 or lower, and most preferably 1.3 or lower.

In terms of the viscosity, the plasticizer preferably has a branched structure in the main chain for the same molecular weight since the viscosity is lowered more. The above-mentioned high temperature continuous polymerization method is an example of methods which give such a plasticizer.

The plasticizers including the above-mentioned polymer plasticizers may be used alone or two or more of them may be used in combination, however addition is not necessarily indispensable. Further, if necessary, the polymer plasticizer may be used in combination with a low molecular weight plasticizer to an extent that the physical property is not adversely affected. Further, for example, in the case where the composition contains the vinyl polymer of the invention and a polyether polymer as one optional polymer component having a crosslinkable functional group, phthalic acid esters and acrylic polymers are particularly preferable in terms of the compatibility of the mixture.

The plasticizer may be added at the time of polymer production.

When the plasticizer is used, the use amount of the plasticizer is not particularly limited and is 5 to 150 parts by weight, preferably 10 to 120 parts by weight, and more preferably 20 to 100 parts by weight, per 100 parts by weight of the polymer containing a crosslinkable silyl group. If it is lower than 5 parts by weight, the effect as a plasticizer is not efficiently caused and if it exceeds 150 parts by weight, the mechanical strength of the cured product tends to become insufficient.

### <Filler>

The curable composition of the invention may contain various kinds of fillers, according to need, to an extent that the curing is not inhibited by active energy rays. The fillers are not particularly limited and may include reinforcing fillers such as wood flour, pulp, cotton chips, asbestos, glass fiber, carbon fiber, mica, walnut shell flour, rice hull flour, graphite, china clay, kaolin, silica (e.g. fumed silica, precipitated silica, crystalline silica, fused silica, dolomite, silicic anhydride, hydrous silicic acid and amorphous spherical silica), and carbon black; fillers such as ground calcium carbonate, precipitated calcium carbonate, magnesium carbonate, china clay, calcined clay, clay, talc, titanium oxide, bentonite, organic bentonite, ferric oxide, aluminum fine powder, flint powder, zinc oxide, activated zinc white, zinc powder, zinc carbonate, shirasu balloon, glass microballoon, organic microballoon of a phenol resin and/or a vinylidene chloride resin, resin powder such as PVC powder and PMMA powder, and the like fillers; fibrous fillers such as asbestos, glass fibers and glass filaments, carbon fibers, Kevlar fibers and polyethylene fibers; and the like.

Preferable fillers among them are precipitated silica, fumed silica, crystalline silica, fused silica, dolomite, carbon black, calcium carbonate, titanium oxide, talc and the like.

In the case where it is aimed to obtain the cured product with high transparency or strength in order for facilitating curing by active energy rays, the filler to be added may be selected frommainly fumed silica, precipitated silica, silicic anhydride, hydrous silicic acid, carbon black, surface treated fine calcium carbonate, crystalline silica, fused silica, calcined clay, clay and activated zinc white. These fillers are suitable for a sealant for transparent construction and adhesive for transparent DIY. Above all, ultrafine powder silica with a specific surface area of 10 m²/g or higher, generally 50 to 400 m²/g and preferably about 100 to 300 m²/g (measured by BET absorption method) is preferable. Further, silica previously surface-treated for hydrophobic treatment with an organosilicon compound such as an organosilane, an organosilazane, and a diorganocyclopolysiloxane is more preferable.

Specific examples of the silica filler with high reinforcing property are not particularly limited and may include Aerosil (fumed silica) manufactured by Nippon Aerosil Co., Ltd., Nipsil (precipitated silica) manufactured by Nippon Silica Industrial, and the like. Silica with an average particle diameter of 1 nm to 30 µm can be used. With respect to fumed silica, if fumed silica with an average particle diameter of primary particles in a range from 1 nm to 50 nm is used, the reinforcing effect is particularly efficient and therefore it is more preferable. In this connection, the average particle diameter in the invention is measured by sieving method. In particular, the average particle diameter is measured by classifying a powder by sieves (micro sieves or the like) with various mesh sizes and measuring the value (weight average particle diameter) corresponding to the mesh size of the sieve through which 50% by weight of the total amount of the powder subjected to the measurement is passed. The composition reinforced by the filler is excellent in the prompt fixation and suitable for automotive glass grading adhesion.

The transparency can also be obtained by using a resin powder such as PMMA powder as the filler.

In particular when low-strength, high-elongation cured products are to be obtained using such fillers, one or more fillers selected from among titanium oxide, calcium carbonate, talc, ferric oxide, zinc oxide, shirasu balloons and the like may be added. Generally, calcium carbonate, when small in specific surface area, may be insufficiently effective at improving the strength at break, elongation at break, adhesion and weather-resistant adhesion of cured products. As the specific surface area value increases, the effects of improving the strength at break, elongation at break, adhesion and weather-resistant adhesion become better. As the calcium carbonate, cubic, noncubic, amorphous, and the like shape ones may be used.

Furthermore, calcium carbonate is more preferably surface-treated with a surface treating agent. When surface-treated calcium carbonate is used, it is expected that the workability of the composition of the invention be improved and the effects of improving the adhesion and weather-resistant adhesion of the curable composition be more improved as compared with the use of non-surface-treated calcium carbonate. Useful as the surface treating agent are organic substances such as fatty acids, fatty acid soaps and fatty acid esters, various surfactants, and various coupling agents such as silane coupling agents and titanate coupling agents. Specific examples include, but are not limited to, fatty acids such as caproic acid, caprylic acid, pelargonic acid, capric acid, undecanoic acid, lauric acid, myristic acid, palmitic acid, stearic acid, behenic acid and oleic acid, sodium, potassium and other salts of such fatty acids, and alkyl esters of such fatty acids. As specific examples of the surfactants, there may be mentioned sulfate ester type anionic surfactants such as polyoxyethylene alkyl ether sulfate esters and long-chain alcohol sulfate esters, and sodium, potassium and other salts thereof, sulfonic acid type anionic surfactants such as alkylbenzenesulfonic acids, alkylnaphthalenesulfonic acids, paraffinsulfonic acids, α-olefinsulfonic acids and alkylsulfosuccinic acid, and sodium, potassium and other salts thereof, and the like. In the surface treatment, the surface treating agent is used in an amount preferably within the range of 0.1 to 20% by weight, more preferably within the range of 1 to 5% by weight, relative to calcium carbonate. When the amount for treatment is smaller than 0.1% by weight, the effects of improving the workability, adhesion and weather-resistant adhesion may be insufficient and, when it exceeds 20% by weight, the storage stability of the curable composition may decrease.

When calcium carbonate is used in expectation of producing the effects of improving the thixotropic properties of the formulations and the strength at break, elongation at break, adhesion, weather-resistant adhesion and the like of the cured product, in particular, precipitated calcium carbonate is preferably used, although this does not mean any particular restriction.

On the other hand, ground calcium carbonate is sometimes added for the purpose of reducing the viscosity of the formulations, increasing the weight thereof and reducing the cost, for example. When ground calcium carbonate is used, such species as mentioned below can be used.

Ground calcium carbonate is prepared from natural chalk, marble, limestone or the like by mechanical grinding/processing. The method of grinding includes the dry method and wet method. Wet ground products are unfavorable in many cases since they often deteriorate the storage stability of the curable composition of the invention. Upon classification, ground calcium carbonate gives various products differing in average particle size. In cases where the effects of improving the strength at break, elongation at break, adhesion and weather-resistant adhesion are expected, the specific surface area value is preferably not less than 1.5 m²/g and not more than 50 m²/g, more preferably not less than 2 m²/g and not more than 50 m²/g, still more preferably not less than 2.4 m²/g and not more than 50 m²/g, most preferably not less than 3m²/g and not more than 50 m²/g, although this does not mean any particular restriction. When the specific surface area is smaller than 1.5 m²/g, those improving effects may be insufficient. Of course, the above does not apply to the cases where it is only intended to reduce the viscosity and/or increase the weight.

The specific surface area value is the measured value obtained by using, as the measurement method, the air permeation method (method for specific surface area determination based on the permeability of a powder-packed layer to air) carried out according to JIS K 5101. Preferred for use as the measuring instrument is a Shimadzu model SS-100 specific surface area measuring apparatus.

Those fillers may be used singly or two or more of them may be used in combination according to the intended purpose or necessity. For example, the combined use, according to need, of ground calcium carbonate having a specific surface area value of not smaller than 1.5 m²/g and precipitated calcium carbonate is fully expected to suppress the viscosity increase in the formulations to a moderate level and produce the effects of improving the strength at break, elongation at break, adhesion and weather-resistant adhesion of cured products, although this does not mean any particular restriction.

When a filler is used, the filler is preferably used in an amount within the range of 5 to 1,000 parts by weight, more preferably within the range of 20 to 500 parts by weight, particularly preferably within the range of 40 to 300 parts by weight, per 100 parts by weight of the crosslinkable silyl group-containing polymer. When the addition level is lower than 5 parts by weight, the effects of improving the strength at break, elongation at break, adhesion and weather-resistant adhesion may be insufficient and, when the amount exceeds 1, 000 parts by weight, the workability of the curable composition may deteriorate. Those fillers may be used singly or two or more of them may be used in combination.

Here, addition of large amount of dolomite, carbon black, calcium carbonate, titanium oxide, talc and the like sometimes deteriorates the transparency of the present invention and results in producing an opaque cured product of the invention, and attentions are therefore required.

### <Hollow microsphere>

Furthermore, for the purpose of reducing the weight and cost without causing significant deteriorations in physical properties, hollow microspheres may be used in combination with such a reinforcing filler as mentioned above.

Such hollow microspheres (hereinafter referred to as "balloons") are not particularly restricted but include, for example, hollow spheres constituted of an inorganic or organic material and having a diameter of not greater than 1 mm, preferably not greater than 500 µm, and more preferably not greater than 200 µm, as described in "Kinosei Fira no Saishin Gijutsu (Latest Technology of Functional Fillers)" (CMC Publishing CO., LTD). In particular, hollow microspheres having a true specific gravity of not higher than 1.0 g/cm³ are preferably used and, more preferably, hollow microspheres having a true specific gravity of not higher than 0.5 g/cm³ are used.

The inorganic balloons include silicic balloons and non-silicic balloons. Examples of the silicic balloons are shirasu balloons, perlite, glass (silica) balloons, fly ash balloons and the like, and examples of the non-silicic balloons are alumina balloons, zirconia balloons, carbon balloons and the like. Commercially available as specific examples of such inorganic balloons are Idichi Kasei's Winlite and Sanki Kogyo Co., Ltd.'s Sankilite (shirasu balloons), FUJI SILYSIA CHEMICAL LTD.'s Fuji Balloon, Nippon Sheet Glass Co., Ltd.'s Calloon, Sumitomo 3M Limited' s Cel-Star Z-28, Emerson & Cuming Company' s Micro Balloon, Pittsburgh Corning Corporation's Celamic Glassmodules and Sumitomo 3M Limited's Glass Bubbles, Asahi Glass Co., Ltd.' Q-Cel and Taiheiyo Cement Corporation's E-Spheres (glass (silica) balloons), Pfamarketing's Cerospheres and Fillite U.S.A.'s Fillite (fly ash balloons), Showa Denko K.K.'s BW (alumina balloons), Zircoa Inc.'s Hollow Zirconium Spheres (zirconia balloons), and Kureha Chemical Industry's Kurekasphere and General Technologies Inc.' Carbosphere (carbon balloons).

The organic balloons include thermosetting resin balloons and thermoplastic resin balloons. Examples of the thermosetting resin balloons are phenol balloons, epoxy balloons and urea balloons, and examples of the thermoplastic balloons are Saran balloons, polystyrene balloons, polymethacrylate balloons, polyvinyl alcohol balloons and styrene-acrylic type balloons. Crosslinked thermoplastic resin balloons can also be used. The balloons so referred to herein may be balloons after expansion or balloons produced by expansion following incorporation of a blowing agent-containing resin.

As specific examples of such organic balloons which are commercially available, there may be mentioned Union Carbide Corporation's Ucar and Phenolic Microballoons (phenol balloons), Emerson & Cuming Company's Eccospheres (epoxy balloons), Emerson & Cuming Company's Eccospheres VF-O (urea balloons), Dow Chemical Company's Saran Microspheres, Janan Fillite Co., Ltd.' s Expancel and Matsumoto Yushi Seiyaku Co., Ltd.'s Matsumoto Microspheres (Saran balloons), Arco Polymers Inc.'s Dylite Expandable Polystyrene and BASF-Wyandotte's Expandable Polystyrene Beads (polystyrene balloons), and JSR Corporation's SX863(P) (crosslinked styrene-acrylic balloons) .

The above-mentioned balloon species may be used singly or two or more of them may be used in admixture. Furthermore, those balloons surface-treated with a fatty acid, a fatty acid ester, rosin, rosin acid lignin, a silane coupling agent, a titan coupling agent, an aluminum coupling agent, polypropylene glycol or the like for improving the dispersibility and the workability of the formulations may also be used. These balloons are used for making the curable composition cotaining them lightweight for cost down, delustering the surface, optional designing by sputtering etc., or the like without deteriorating the iomprovement in the workability such as antisagging property before curing and flexibility, expansion and strength after curing.

The balloon content is not particularly restricted but the balloons can be used preferably in an amount within the range of 0.1 to 50 parts, more preferably 0.1 to 30 parts, per 100 parts by weight of the crosslinkable silyl group-containing polymer. When this amount is smaller than 0.1 parts, the weight-reducing effect is slight and, when it exceeds 50 parts, decreases in tensile strength, among the mechanical properties after curing of the balloon-containing formulations, are observed in some instances. When the balloons have a specific gravity of not lower than 0.1, the amount is preferably 3 to 50 parts, more preferably 5 to 30 parts.

### <Physical property modifier>

In the curable composition of the invention, there may be incorporated a physical property modifier capable of adjusting the tensile properties of the resulting cured products, according to need.

The physical property modifiers are not particularly restricted but include, for example, alkylakoxysilanes such as methyltrimethoxysilane, dimethyldimethoxysilane, trimethylmethoxysilane and n-propyltrimethoxysilane; alkylisopropenoxysilanes such as dimethyldiisopropenoxysilane, methyltriisopropenoxysilane, γ-glycidoxypropylmethyldiisopropenoxysilane, functional group-containing alkoxysilanes such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane and γ-mercaptopropylmethyldimethoxysilane; silicone varnishes; polysiloxanes; and the like. By using such as a physical property modifier, it is possible to increase the hardness of the cured products after curing of the curable composition of the invention or decrease such hardness and attain extensibility. Such physical property modifiers as mentioned above may be used singly or two or more of them may be used in combination.

### <Silanol-containing compound>

A silanol-containing compound may optionally be added into the curable composition of the present invention for modifying the physical property of the cured product to be obtained, and the like purpose. The term "silanol-containing compound" as used herein means a compound having one silanol group in a molecule and/or a compound capable of forming a compound having one silanol group in a molecule by a reaction with moisture. When these compounds are used, only one of the above two compounds may be used, or both of them may be used simultaneously.

The compounds having one silanol group in a molecule, which is one of the silanol-containing compounds, is not particularly restricted. Among others, there may be mentioned compounds which can be represented by the formula (R")₃SiOH (wherein R"s are the same or different kind of substituted or non-substituted alkyl or aryl group), for example, the following compounds:
(CH₃)₃SiOH, (CH₃CH₂)₃SiOH, (CH₃CH₂CH₂)₃SiOH, (n-Bu)₃SiOH, (sec-Bu)₃SiOH, (t-Bu)₃SiOH, (t-Bu)Si(CH₃)₂OH, (C₅H₁₁)₃SiOH, (C₆H₁₃)₃SiOH, (C₆H₅)₃SiOH, (C₆H₅)₂Si(CH₃)OH, (C₆H₅)Si(CH₃)₂OH, (C₆H₅)₂Si (C₂H₅) OH, C₆H₅Si (C₂H₅)₂OH, C₆H₅CH₂Si (C₂H₅)₂OH, C₁₀H₇Si (CH₃)₂OH,
(wherein C₆H₅ represents a phenyl group and C₁₀H₇ represents a naphthyl group);
silanol group-containing cyclic polysiloxanes compounds, for example, the following compounds; 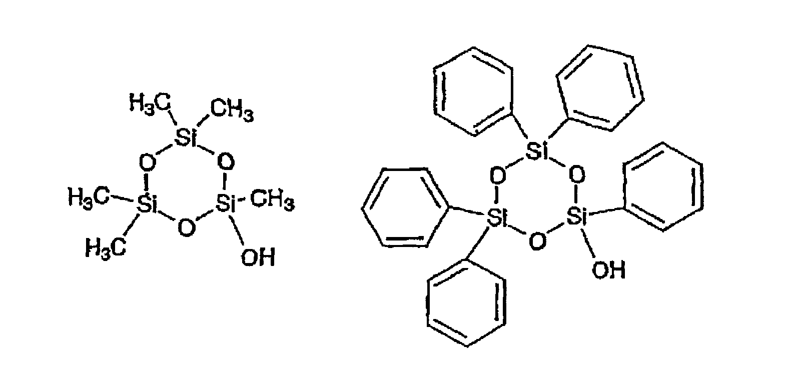 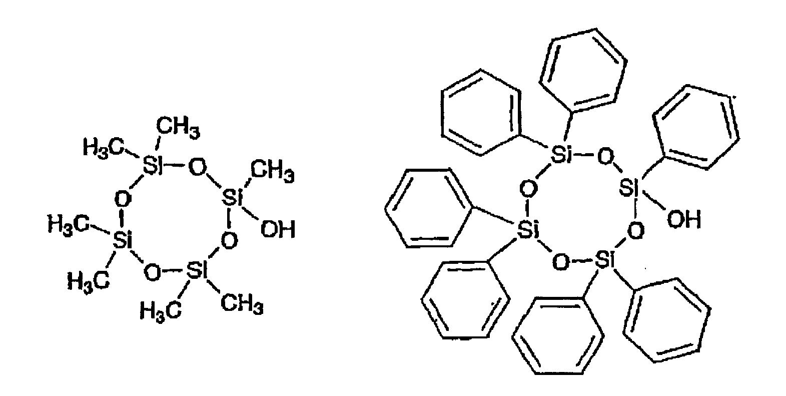 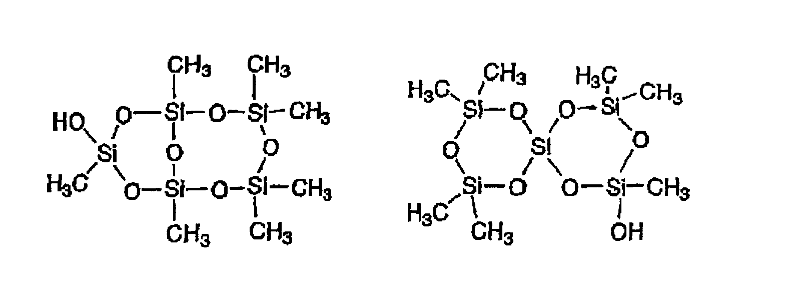 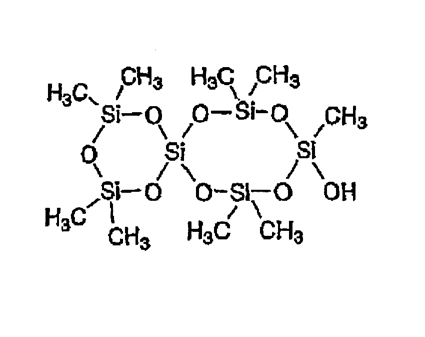 silanol group-containing chain polysiloxanes compounds, for example, the following compounds: 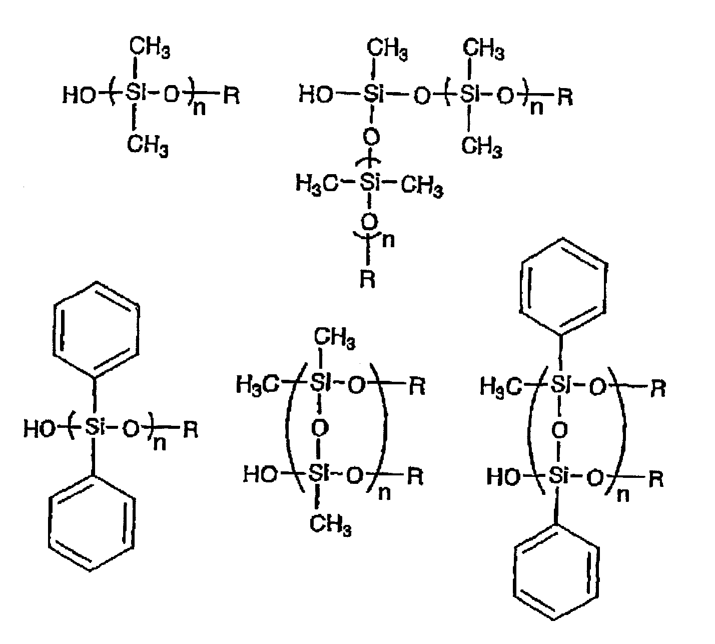 (wherein R represents a hydrocarbon group containing 1 to 10 carbon atom; and n represents an integer of 1 to 20): compounds the polymer main chain of which is composed of silicon and carbon atoms and in which a silanol group is bonded at the molecular terminus, for example, the following compounds: 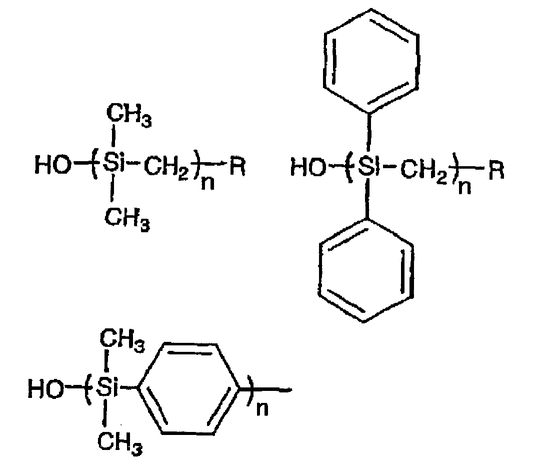 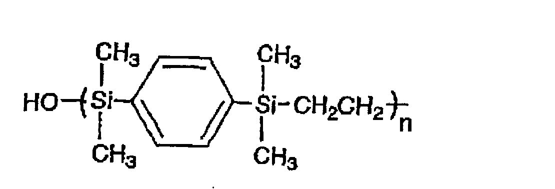 (wherein R represents a hydrocarbon group containing 1 to 10 carbon atom; and n represents an integer of 1 to 20): compounds in which silanol group is bonded to the main chain of polysilane at a molecular terminus, for example, the following compounds: 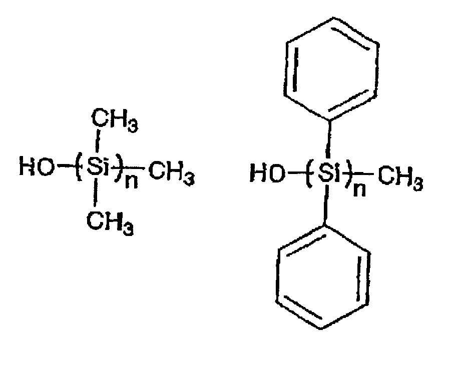 (wherein R represents a hydrocarbon group containing 1 to 10 carbon atoms; n represents an integer of 1 to 20): and compounds the polymer main chain of which is composed of silicon, carbon and oxygen atoms and in which a silanol group is bonded at the molecular terminus, for example, the following compounds: 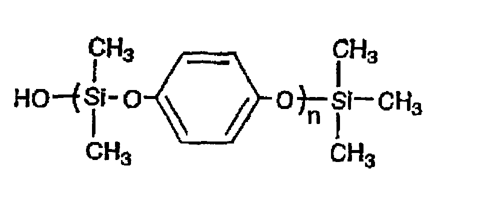 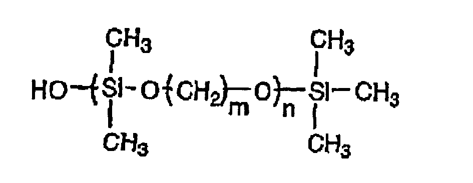 (wherein n represents an integer of 1 to 20; and m represents an integer of 1 to 20) : and the like. Among them, from the ready availability and effect viewpoint, (CH₃)₃SiOH and the like are preferred because they are low-molecular-weignt compounds.

Flexibility of a cured product is given by a reaction of a compound having one silanol group in one molecule with a crosslinkable silyl group of the crosslinkable silyl group-containing polymer or a siloxane bond formed by crosslinking, to thereby reduce crosslinking points. Further, compositions low in surface tack and excellent in dust adhesion preventing effect are thus obtained.

The compounds capable of forming a compound having one silanol group in a molecule by a reaction with moisture, which is a component of the present invention, are not particularly restricted. Such compounds which may be suitably used are N,O-bis(trimethylsilyl)acetamide, N-(trimethylsilyl)acetamide, bis(trimethylsilyl)trifluoroacetamide, N-methyl-N-trimethylsilyltrifluoroacetamide, bis(trimethylsilyl)urea, N-(t-butyldimethylsilyl)N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyltrifluoromethanesulfonate, trimethylsilylphenoxide, trimethylsilylated product of n-octanol, trimethylsilylated product of 2-ethylhexanol, tris(trimethylsilyl)ated product of glycerin, tris(trimethylsilyl)ated product of trimethylolpropane, tris(trimethylsilyl)ated product of pentaerythritol, tetra(trimethylsilyl)ated product of pentaerythritol, (CH₃)₃SiNHSi(CH₃)₃, (CH₃)₃SiNSi(CH₃)₂, allyloxytrimethylsilane, N,O-bis(trimethylsilyl)acetamide, N-(trimethylsilyl)acetamide, bis(trimethylsilyl)trifluoroacetamide, N-methyl-N-trimethylsilyltrifluoroacetamide, bis(trimethylsilyl)urea, N-(t-butyldimethylsilyl)N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyltrifluoromethanesulfonate, trimethylsilylphenoxide, trimethylsilylated product of n-octanol, trimethylsilylated product of 2-ethylhexanol, tris(trimethylsilyl)ated product of glycerin, tris(trimethylsilyl)ated product of trimethylolpropane, tris(trimethylsilyl)ated product of pentaerythritol, tetra(trimethylsilyl)ated product of pentaerythritol, (CH₃)₃SiNHSi(CH₃)₃, (CH₃)₃SiNSi(CH₃)₂, and the following compounds: 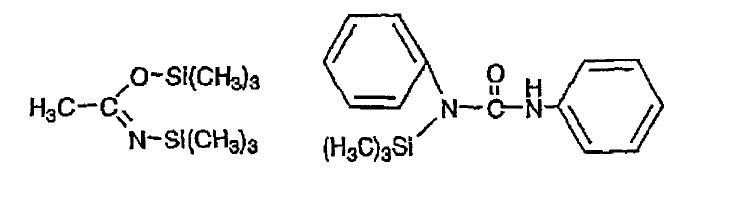 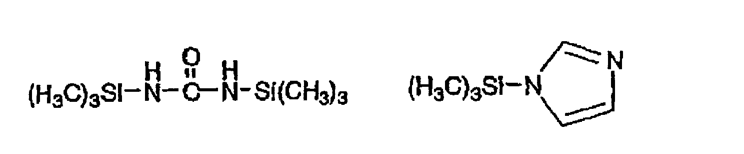 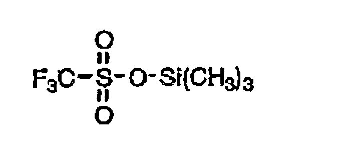 Among them, (CH₃)₃SiNHSi(CH₃)₃ is particularly preferred in view of an amount of contained silanol group in a hydrolysis product.

Furthermore, compounds capable of forming a compound having one silanol group in a molecule by a reaction with moisture, which is a component of the present invention, are not particularly restricted, but the compounds represented by the following general formula (46) are preferred in addition to the above compounds:

((R⁵⁸)₃SiO)ₙR⁵⁹ (46)

(wherein R⁵⁸ is as defined above; n represents a positive number; and R⁵⁹ represents a group exclusive of a part of or all of the active hydrogen from an active hydrogen-containing compound) .

R⁵⁸ is preferably methyl, ethyl, vinyl, t-butyl, or phenyl group, and more preferably methyl group.

(R⁵⁸)₃SiO group is preferably trimethylsilyl group in which all three R⁵⁸s are methyl group, and n is preferably 1 to 5.

Active hydrogen-containing compounds, which are origins of the above R⁵⁹, are not particularly restricted, but includes, among others, alcohols such as methanol, ethanol, n-butanol, i-butanol, t-butanol, n-octanol, 2-ethylhexanol, benzyl alcohol, ethylene glycol, diethylene glycol, polyethylene glycol, propylene glycol, dipropylene glycol, polypropylene glycol, propanediol, tetramethylene glycol, polytetramethylene glycol, glycerin, trimethylolpropane and pentaerythritol; phenols such as phenol, cresol, bisphenol A and hydroquinone; carboxylic acids such as formic acid, acetic acid, propionic acid, lauric acid, palmitic acid, stearic acid, behenic acid, acrylic acid, methacrylic acid, oleic acid, linolic acid, linolenic acid, sorbic acid, oxalic acid, malonic acid, succinic acid, adipic acid, maleic acid, benzoic acid, phthalic acid, terephthalic acid and trimellitic acid; ammonia; amines such as methylamine, dimethylamine, ethylamine, diethylamine, n-butylamine and imidazole; acid amides such as acetamide and benzamide; ureas such as urea and N,N'-diphenylurea; and ketones such as acetone, acetylketone and 2,4-heptadione.

Although it is not particularly limited, a compound capable of forming a compound having one silanol group in a molecule by a reaction with moisture, represented by the above general formula (46), is obtainable by, for example, subjecting the above-mentioned active hydrogen-containing compound or the like to the reaction with the compound having a group capable of reacting with the active hydrogen, such as halogen group, together with a (R⁵⁸)₃Si group, which is sometimes referred to as "silylating agent", such as trimethylsilyl chloride or dimethyl(t-butyl)chloride. In the above description, R⁵⁸ is the same one as defined above.

The compounds represented by the general formula (46) includes allyloxytrimethylsilane, N,O-bis (trimethylsilyl) acetamide, N-(trimethylsilyl)acetamide, bis(trimethylsilyl)trifluoroacetamide, N-methyl-N-trimethylsilyltrifluoroacetamide, bis(trimethylsilyl)urea, N-(t-butyldimethylsilyl)N-methyltrifluoroacetamide, (N,N-dimethylamino)trimethylsilane, (N,N-diethylamino)trimethylsilane, hexamethyldisilazane, 1,1,3,3,-tetramethyldisilazane, N-(trimethylsilyl)imidazole, trimethylsilyltrifluoromethanesulfonate, trimethylsilylphenoxide, trimethylsilylated product of n-octanol, trimethylsilylated product of 2-ethylhexanol, tris(trimethylsilyl)ated product of glycerin, tris(trimethylsilyl)ated product of trimethylolpropane, tris(trimethylsilyl)ated product of pentaerythritol, tetra(trimethylsilyl)ated product of pentaerythritol, trimethylsilylated product of polypropyleneglycol, trimethylsilylated product of polypropylenetriol and the like trimethylsilylated product of polyether polyol, trimethylsilylated product of polypropylenetetraol, trimethylsilylated product of acrylpolyol, and the like. These may be used singly or in combination of two or more.

Additionally, the compounds which may be represented by the general formula ((R⁶⁰)₃SiO) (R⁶¹O)ₛ)ₜZ, CH₃O(CH₂CH (CH₃) O)₅Si (CH₃)₃, CH₂=CHCH₂(CH₂CH (CH₃) O)₅Si (CH₃)₃, (CH₃)₃SiO (CH₂CH (CH₃) O)₅Si (CH₃) ₃, and
(CH₃)₃SiO (CH₂CH (CH₃) O)₇Si (CH₃) ₃
(wherein R⁶⁰ represents the same or different kind of substituted or unsubstituted univalent hydrocarbon group; R⁶¹ is an bivalent hydrocarbon group containing 1 to 8 carbon atoms; s and t are positive numbers, s is 1 to 6 and s times t is not less than 5; and Z is an mono- to hexa-valent organic group), are also suitably used. These may be used singly or in combination of two or more.

Among the compounds capable of forming a compound having one silanol group in a molecule by a reaction with moisture, the active hydrogen compounds which is formed after hydrolysis are preferably phenols, acid amides and alcohols since there are no adverse affects on storage stability, weatherability or the like. More preferred are phenols and alcohols, in which the active hydrogen compound is a hydroxyl group.

Among the above compounds, preferred are N,O-bis(trimethylsilyl)acetamide, N-(trimethylsilyl)acetamide, trimethylsilylphenoxide, trimethylsilylated product of n-octanol, trimethylsilylated product of 2-ethylhexanol, tris(trimethylsilyl)ated product of trimethylolpropane, tris(trimethylsilyl)ated product of pentaerythritol, tetra(trimethylsilyl)ated product of pentaerythritol, and the like.

The compounds capable of forming a compound having one silanol group in a molecule by a reaction with moisture produces the compound having one silanol group in a molecule by reacting with moisture during storage, at the time of curing, or after curing. It is presumed that flexibility of a cured product is given by a reaction of the thus-formed compound having one silanol group in a molecule with a crosslinkable silyl group of the vinyl polymer or a siloxane bond formed by crosslinking, to thereby reduce crosslinking points.

The structure of the silanol-containing compound may be selected in accordance with the type of Y and the number for a of the vinyl polymer of the invention and thus the curability, mechanical property and the like in the invention may be controlled in accordance with the uses and purposes.

The silanol-containing compound may be used in combination with an air oxidation-curable substance, which will be described later, and combination use is preferable to keep the modulus of the cured product low and to improve the curability of the alkyd paint applied to the surface and dust adhesion preventing property.

The addition level of the silanol-containing compound can be properly adjusted depending on the expected physical properties. The addition level of the silanol-containing compound is 0. 1 to 50 parts by weight, preferably 0.3 to 20 parts by weight and more preferably 0.5 to 10 parts by weight, per 100 parts by weight of the crosslinkable silyl group-containing polymer. When the level is below 0.1 parts by weight, the effects caused by addition may not appear, and on the contrary, when it exceeds 50 parts by weight, crosslinking may be insufficient and strength or gel fraction ratio of the cured product are excessively deteriorated.

The time to add the silanol compound is not particularly restricted, but it may be added in the production process of the polymer, or may be added in the preparation process of a curable composition.

### <Thixotropic agent (antisagging agent)>

If necessary, a thixotropic agent (antisagging agent) may be added to the curable composition of the invention to prevent sagging and improve the workability.

The thixotropic agent (antisagging agent) may also be called as a thixotropy-providing agent. The term "providing thixotropy" means supplying something with fluidity when a strong power is applied at the time being extruded in bead-like state from a cartridge, being applied by a spatula etc., or being sprayed by a spray etc. and supplying something with the property of not dripping during the curing after coating or application.

The thixotropic agent (antisagging agent) is not particularly limited but includes, for example, amide waxes such as DISPARON (manufactured by Kusumoto Chemicals, Ltd.), hydrogenated castor oil, hydrogenated castor oil derivatives, fatty acid derivatives, metal soaps such as calcium stearate, aluminum stearate and barium stearate, organic compounds such as 1,3,5-tris(trialkoxysilylalkyl)isocyanurate, and inorganic compounds such as calcium carbonate, micronized silica and carbon black which are surface-treated with fatty acids or resin acids.

The micronized silica means a natural or artificial inorganic filler containing silicon dioxide as a main component. In particular, examples include kaolin, clay, activated kaolin, silica sand, silicic stone, china clay, aluminum silicate anhydride, hydrous magnesium silicate, talc, pearlite, white carbon, mica fine flour, bentonite, organic bentonite and the like.

Especially, ultrafine granular silica anhydride and organic bentonite obtained by vapor phase reaction of a silicon-containing volatile compound are preferable. They preferably have a specific surface area of at least 50 m²/g, more preferably 50 to 400 m²/g. Both of a hydrophilic silica and a hydrophobic silica may be used. The surface treatment may or may not be carried out, however preferred is a hydrophobic silica obtained by a hydrophobic surface treatment with silazanes, chlorosilanes, alkoxysialnes or polysiloxanes which contain, as an organic substituent bonded to a silicon atom, only a methyl group.

Specific examples of the above-mentioned surface treatment agents are silazanes such as hexamethyldisilazane; halo silanes such as trimethylchlorosilane, dimethyldichlorosilane and methyltrichlorosilane; alkoxysilanes such as trimethylalkoxysilane, dimethyldialkoxysilane and methytrialkoxysilane (herein, an alkoxy group may include a methoxy, ethoxy, propoxy, butoxy and the like groups); siloxanes such as cyclic and linear polydimethylsiloxane; and the like, and they may be used alone or two or more of them may be used in combination. Among them, a micronized hydrophobic silica surface-treated with siloxanes (dimethylsilicone oil) is preferable in terms of the thixotropy-providing effect.

Further, in the case where the micronized silica is used in combination with polyether compounds such as diethylene glycol, triethylene glycol and polyethylene glycol, reaction products of a polyether compound with a functional silane, and nonionic surfactants having an ethylene oxide chain, the thixotropy is increased. One or more kinds of nonionic surfactants may be used.

Specific examples of the micronized silica may be commercialized products such as Aerosil R974, R972, R972V, R972CF, R805, R812, R812S, RY200, RX200, RY200S, #130, #200, #300, and R202 manufactured by Nippon Aerosil Co., Ltd.; Nipsil SS series manufactured by Nippon Silica Industrial; Rheorosil MT-10, MT-30, QS-102, and QS-108 manufactured by Tokuyama Soda Co., Ltd., Cabosil TS-720, MS-5, andMS-7 manufactured by Cabot Corporation, and S-BEN and ORGANITE manufactured by HOJUN Co., Ltd.

Organic bentonite means powder-like substances mainly obtained from montmorillonite mineral finely milled and then surface-treated with various organic substances. Examples of the organic substances are aliphatic primary amines and aliphatic quaternary amines (each of them is preferred to have 20 or less carbon atoms). Specific examples of the organic bentonite are Orben D and New D Orben manufactured by Shiraishi Kogyo Kaisha, Ltd., Hardsil manufactured Tsuchiya Kaolin Co., Clay #30 manufactured by Burgess Pigment Company, #33 manufactured by Southern Clay Products, Inc., Bentone 34 (dimethyloctadecylammonium bentonite) manufactured by National Lead Company, and the like.

The thixotropy index means the ratio of the apparent viscosity at a low rotation rate (e.g. 0.5 to 12 rpm) and a high rotation rate (e.g. 2.5 to 60 rpm) in viscosity measurement by a rotation viscometer (herein, the ratio of the high rotation rate and low rotation rate is preferably at least 5 and more preferably 5 to 10.

These thixotropic agents (antisagging agents) may be used alone or two or more of them may be used in combination.

### <Photocurable substance>

To the curable composition of the invention, there may be added a photocurable substance, according to need. The photocurable substance is a substance whose molecular structure undergoes a chemical change in a short time under the action of light and which thus causes changes of physical properties such as curing. By adding such photocurable substance, it becomes possible to reduce the tackiness (residual tack) of the cured product surface after curing of the curable composition. This photocurable substance is a substance capable of curing upon irradiation with light. A typical photocurable substance is a substance capable of curing when allowed to stand at an indoor place in the sun (near a window) at room temperature for 1 day, for example. A large number of compounds of this type are known, including organic monomers, oligomers, resins, and compositions containing them, and they are not particularly restricted in kind but include, for example, unsaturated acrylic compounds, vinyl cinnamate polymers, azidated resins, epoxy compounds, vinylether compounds and the like.

As the unsaturated acrylic compounds, there may be specifically mentioned, for example, (meth) acrylate esters of low-molecular-weight alcohols (oligoester acrylate) such as ethylene glycol, glycerol, trimethylolpropane, pentaerythritol and neopentyl alcohol; (meth) acrylate esters of alcohols derived from acids such as bisphenol A, acids such as isocyanuric acid or such low-molecular-weight alcohols as mentioned above by modification with ethylene oxide and/or propylene oxide; (meth) acrylate esters of hydroxyl-terminated polyether polyols whose main chain is a polyether, polymer polyols obtained by radical polymerization of a vinyl monomer(s) in a polyol whose main chain is a polyether, hydroxyl-terminated polyester polyols whose main chain is a polyester, polyols whose main chain is a vinyl or (meth) acrylic polymer and which have hydroxyl groups in the main chain, and like polyols; (meth) acrylate esters whose main chain is a vinyl or (meth)acrylic polymer and which is obtained by copolymerization of a polyfunctional acrylate (s) into the main chain thereof; epoxy acrylate oligomers obtained by reacting a bisphenol A-based, novolak type or other epoxy resin with (meth)acrylic acid; urethane acrylate type oligomers containing urethane bonds and (meth)acryl groups within the molecular chain as obtained by reacting a polyol, a polyisocyanate and a hydroxyl group-containing (meth)acrylate; and the like.

The vinyl cinnamate polymers are photosensitive resins whose cinnamoyl groups function as photosensitive groups and include cinnamic acid-esterified polyvinyl alcohol species and various other polyvinyl cinnamate derivatives.

The azidated resins are known as photosensitive resins with the azido group serving as a photosensitive group and generally include photosensitive rubber solutions with an azide compound added as a photosensitive substance and, further, detailed examples are found in "Kankosei Jushi (Photosensitive Resins) " (published March 17, 1972 by Insatsu Gakkai Shuppanbu, pages 93 ff, 106 ff, 117 ff) . These can be used either singly or in admixture, with a sensitizer added, if necessary.

The epoxy compounds and vinyl ether compounds may be, for example, polyisobutyrenes terminated with epoxy group and vinyl ether group, respectively.

Among the photocurable substances mentioned above, unsaturated acrylic compounds are preferred in view of their easy handleability.

The photocurable substance is preferably added in an amount of 0.01 to 20 parts by weight per 100 parts by weight of the crosslinkable silyl group-containing polymer. At addition levels below 0.01 part by weight, the effects will be insignificant and, at levels exceeding 20 parts by weight, the physical properties may be adversely affected. The addition of a sensitizer such as a ketone or nitro compound or a promoter such as an amine can enhance the effects in some instances.

### <Air oxidation-curable substance>

In the curable composition of the invention, there may be incorporated an air oxidation-curable substance, if necessary. The air oxidation-curable substance is a compound containing an unsaturated group capable of being crosslinked for curing by oxygen in the air. By adding such air oxidation-curable substance, it becomes possible to reduce the tack (also referred as residual tack) of the cured product surface on the occasion of curing of the curable composition. The air oxidation-curable substance according to the present invention is a substance capable of curing upon contacting with air and, more specifically, has a property such that it cures as a result of reaction with oxygen in the air. A typical air oxidation-curable substance can be cured upon allowing it to stand in the air in a room for 1 day, for example.

As specific examples of the air oxidation-curable substance, there may be mentioned, for example, drying oils such as tung oil and linseed oil; various alkyd resins obtained by modification of such drying oils; drying oil-modified acrylic polymers, epoxy resins, silicone resins, urethane resins; 1,2-polybutadiene, 1,4-polybutadiene, C5-C8 diene polymers and copolymers and, further, various modifications of such polymers and copolymers (e.g. maleinated modifications, boiled oil modifications) ; and the like. Among these, tung oil, liquid ones among the diene polymers (liquid diene polymers) and modifications thereof are particularly preferred.

As specific examples of the liquid diene polymers, there may be mentioned, for example, liquid polymers obtained by polymerization or copolymerization of diene compounds such as butadiene, chloroprene, isoprene and 1,3-pentadiene, NBR, SBR and like polymers obtained by copolymerization of such diene compounds (as main components) with a monomer copolymerizable therewith, such as acrylonitrile or styrene, and, further, various modification thereof (e.g. maleinated modifications, boiled oil modifications). These may be used singly or two or more of them may be used in combination. Among these liquid diene compounds, liquid polybutadiene species are preferred.

The air oxidation-curable substances may be used singly or two or more of them may be used in combination. The use of a catalyst capable of promoting the oxidation curing or a metal drier in combination with the air oxidation-curable substance can enhance the effects in certain instances. As such catalysts or metal driers, there may be mentioned, for example, metal salts such as cobalt naphthenate, lead naphthenate, zirconium naphthenate, cobalt octylate and zirconium octylate, amine compounds, and the like.

The air oxidation-curable substance may be used in combination with the above-mentioned photocurable substances and further with the above-mentioned silanol-containing compound. The combination use of these two components or three components provides further effect and it is particularly preferable since the combination use remarkably causes, in some cases, the stain-preventing effect in the case of exposure for a long duration and even in the area where pollution with dust and micropowder-like sand is severe.

The air oxidation-curable substance is preferably added in an amount of 0. 01 to 20 parts by weight per 100 parts by weight of the crosslinkable silyl group-containing polymer. At levels below 0.01 part by weight, the effects will be insignificant and, at levels exceeding 20 parts by weight, the physical properties may be adversely affected.

### <Antioxidant>

In the curable composition of the invention, there may be incorporated an antioxidant, if necessary. Various antioxidants are known and mention may be made of various species described, for example, in "Sankaboshizai Handbook (Handbook of Antioxidants)" published by Taiseisha LTD. and "Kobunshi Zairyo no Rekka to Anteika (Degradation and Stabilization of Polymer Materials)" (pp. 235-242) published by CMC Chemical Publishing CO., LTD. The antioxidants which can be used are not limited to these, however. There may be mentioned, for example, thioethers such as MARK PEP-36 and MARK AO-23 (both being products of Asahi Denka Co., Ltd.), phosphorus-containing antioxidants such as IRGAFOS 38, IRGAFOS 168 and IRGAFOS P-EPQ (the three being products of Ciba Specialty Chemicals). For example, such hindered phenol compounds as enumerated below are preferred.

As specific examples of the hindered phenol compounds, the following can be mentioned. 2,6-Di-tert-butyl-4-methylphenol, 2,6-di-tert-butyl-4-ethylphenol, mono(or di or tri)(α-methylbenzyl)phenol, 2,2'-methylenebis(4-ethyl-6-tert-butylphenol), 2,2'-methylenebis(4-methyl-6-tert-butylphenol), 4,4'-butylidenebis(3-methyl-6-tert-butylphenol), 4,4'-thiobis(3-methyl-6-tert-butylphenol), 2,5-di-tert-butylhydroquinone, 2,5-di-tert-amylhydroquinone, triethylene glycol bis[3-(3-tert-butyl-5-methyl-4-hydroxyphenyl)propionate], 1,6-hexanediol bis[3-(3,5-di-tert-butyl-4-hydroxyphenyl)propionate], 2,4-bis(n-octylthio)-6-(4-hydroxy-3,5-di-tert-butylanilino) -1,3,5-triazine, pentaerythrityl tetrakis[3-(3,5-di-tert-butyl-4-hydroxyphenyl)propionate], 2,2-thiodiethylenebis[3-(3,5-di-tert-butyl-4-hydroxyphenyl) propionate], octadecyl-3-(3,5-di-tert-butyl-4-hydroxyphenyl)propionate, N,N'-hexamethylenebis (3,5-di-tert-butyl-4-hydroxyhydrocinnamide), diethyl 3,5-di-tert-butyl-4-hydroxybenzylphosphonate, 1,3,5-trimethyl-2,4,6-tris (3,5-di-tert-butyl-4-hydroxybenzyl)benzene, bis(ethyl 3,5-di-tert-butyl-4-hydroxybenzylphosphonato)calcium, tris(3,5-di-tert-butyl-4-hydroxybenzyl)isocyanurate, 2,4-2,4-bis[(octylthio)methyl]-o-cresol, N,N'-bis[3-(3,5-di-tert-butyl-4-hydroxyphenyl)propionyl] hydrazine, tris(2,4-di-tert-butylphenyl)phosphite, 2-(5-methyl-2-hydroxyphenyl)benzotriazole, 2-[2-hydroxy-3,5-bis(a,a-dimethylbenzyl)phenyl] -2H-benzotriazole, 2-(3,5-di-tert-butyl-2-hydroxyphenyl)benzotriazole, 2-(3-tert-butyl-5-methyl-2-hydroxyphenyl) -5-chlorobenzotriazole, 2-(3,5-di-tert-butyl-2-hydroxyphenyl)-5-chlorobenzotriazole, 2-(3,5-di-tert-amyl-2-hydroxyphenyl)benzotriazole, 2-(2'-hydroxy-5'-tert-octylphenyl)benzotriazole, methyl 3-[3-tert-butyl-5-(2H-benzotriazol-2-yl)-4-hydroxyphenyl] propionate-polyethylene glycol (molecular weight about 300) condensate, hydroxyphenylbenzotriazole derivatives, bis(1,2,2,6,6-pentamethyl-4-piperidyl) 2-(3,5-di-tert-butyl-4-hydroxybenzyl)-2-n-butylmalonate, 2,4-di-tert-butylphenyl-3,5-di-tert-butyl-4-hydroxybenzoate, and the like.

Examples of the relevant product names include, but are not limited to, Nocrac 200, Nocrac M-17, Nocrac SP, Nocrac SP-N, Nocrac NS-5, Nocrac NS-6, Nocrac NS-30, Nocrac 300, Nocrac NS-7 and Nocrac DAH (all being products of Ouchi Shinko Chemical Industrial Co., Ltd.), MARK AO-30, MARK AO-40, MARK AO-50, MARK AO-60, MARKAO-616, MARK AO-635, MARK AO-658, MARK AO-80, MARK AO-15, MARK AO-18, MARK 328 and MARK AO-37 (all being products of Asahi Denka Co., Ltd.), IRGANOX 245, IRGANOX 259, IRGANOX 565, IRGANOX 1010, IRGANOX 1024, IRGANOX 1035, IRGANOX 1076, IRGANOX 1081, IRGANOX 1098, IRGANOX 1222, IRGANOX 1330 and IRGANOX 1425WL (all being products of Ciba Specialty Chemicals), and Sumilizer GM and Sumilizer GA-80 (both being products of Sumitomo Chemical Co., Ltd.).

The antioxidant may be used in combination with the light stabilizer mentioned below, and such combined use enhances the effects thereof and may improve the heat resistance in particular, hence is particularly preferred. Such ready-made mixtures of an antioxidant and a light stabilizer as TINUVIN C353 and TINUVIN B75 (both being products of Ciba Specialty Chemicals) and the like may also be used.

The addition level of the antioxidant is preferably within the range of 0.1 to 10 parts by weight per 100 parts by weight of the crosslinkable silyl group-containing polymer. At levels below 0.1 part by weight, the weather resistance-improving effect is insignificant, while levels exceeding 10 parts by weight make no great difference in effect any longer, hence are economically disadvantageous.

### <Light stabilizer>

In the curable composition of the invention, there may be incorporated a light stabilizer, if necessary. Various light stabilizers are known and mention may be made of various species described, for example, in "Sankaboshizai Handbook (Handbook of Antioxidants)" published by Taiseisha LTD. and "Kobunshi Zairyo no Rekka to Anteika (Degradation and Stabilization of Polymer Materials)" (pp. 235-242) published by CMC Chemical Publishing CO., LTD. The light stabilizers which can be used are not limited to these, however, and ultraviolet absorbers and hindered amine-type light stabilizing compounds are preferred among these light stabilizers. As specific examples, there may be mentioned, for example, benzotriazole compounds such as TINUVIN P, TINUVIN 234, TINUVIN 320, TINUVIN 326, TINUVIN 327, TINUVIN 329 and TINUVIN 213 (all being products of Ciba Specialty Chemicals), triazines such as TINUVIN 1577, benzophenones such as CHIMASSORB 81, benzoate compounds such as TINUVIN 120 (all being products of Ciba Specialty Chemicals), and the like.

Additionally, hindered amine compounds are preferred, and such compounds are the following; dimethyl succinate-1-(2-hydroxyethyl)-4-hydroxy-2,2,6,6-tetramethylpiperidine polycondensate, poly[{6-(1,1,3,3-tetramethylbutyl)amino-1,3,5-triazine-2,4-diyl}{(2,2,6,6-tetramethyl-4-piperidyl)imino}], N,N'-bis(3-aminopropyl)ethylenediamine-2,4-bis [N-butyl-N-(1,2,2,6,6-pentamethyl-4-piperidyl)amino]-6-chloro-1,3,5-triazine condensate, bis(2,2,6,6-tetramethyl-4-piperidyl) sebacate, bis(2,2,6,6-tetramethyl-4-piperidinyl)succinate and the like.

Examples of the relevant product names include, but are not limited to, TINUVIN 622LD, TINUVIN 144 and CHIMASSORB 944LD, CHIMASSORB 119FL, Irganofos 168 (all being products of Ciba Specialty Chemicals), MARK LA-52, MARK LA-57, MARK LA-62, MARK LA-67, MARK LA-63, MARK LA-68, MARK LA-82 and MARK LA-87 (all being products of Asahi Denka Co., Ltd.), and Sanol LS-770, Sanol LS-765, Sanol LS-292, Sanol LS-2626, Sanol LS-1114, Sanol LS-744 and Sanol LS-440 (all being products of Sankyo Organic Chemicals Co., Ltd.), and the like.

The light stabilizer may be used in combination with the antioxidant mentioned above, and such combined use enhances the effects thereof and may improve the weather resistance in particular, hence is particularly preferred. The combination is not particularly limited and preferably a combination of the above-mentioned hindered phenol-type antioxidant with a benzotriazole-type ultraviolet absorber etc. and a combination of the above-mentioned hindered phenol-type antioxidant with a hindered amine-type light stabilizer compound. Further, a combination of the above-mentioned hindered phenol-type antioxidant with the benzotriazole-type ultraviolet absorber and the hindered amine-type light stabilizer compound is also preferable. Such ready-made mixtures of a light stabilizer and an antioxidant as TINUVIN C353 and TINUVIN B75 (both being products of Ciba Specialty Chemicals) and the like may also be used.

The hindered amine-type light stabilizer may be used in combination with the photocurable substance mentioned above, and such combined use enhances the effects thereof and may improve the weather resistance in particular, hence is particularly preferred. Although the combination is not particularly limited, however a tertiary amine-containing hindered amine-type light stabilizer is preferable since the viscosity increase during storage is slight and the storage stability is excellent.

The addition level of the light stabilizer is preferably within the range of 0.1 to 10 parts by weight per 100 parts by weight of the crosslinkable silyl group-containing polymer. At levels below 0.1 part by weight, the weather resistance-improving effect is insignificant, while levels exceeding 10 parts by weight make no great difference in effect any longer, hence are economically disadvantageous.

### <Compatibility-improving agent>

The curable composition of the invention may contain a compatibility-improving agent. Specific examples of the agent are copolymers of a plurality of vinyl monomers described in Japanese Kokai Publication 2001-329025, and the like.

### <Compound having α,β-diol structure or α,γ-diol structure in molecule>

The curable composition of the invention may contain a compound having α,β-diol structure or α,γ-diol structure in molecule. Compounds conventionally known well may be used as the compound having the α,β-diol structure or α,γ-diol structure in molecule. In this specification, the above-mentioned α,β-diol structure means the structure in which mutually neighboring carbon atoms have two hydroxyl groups and the above-mentioned α,γ-diol structure means the structure in which neighboring every another carbon atom have two hydroxyl groups. As represented by glycerin etc., polyols such as triols and tetraols having both or either one of the α,β-diol structure and the α,γ-diol structure are also included.

Examples of the compound having the α,β-diol structure or the α,γ-diol structure in the molecule are not particularly limited and may include diols such as ethylene glycol, propylene glycol, 1,3-propanediol, 1,2-butandiol, 1,3-butanediol, 2,3-butandiol, pinacol, 2,2-dimethyl-1,3-propanediol, and 2-methyl-2-hydoxymethyl-1,3-propanediol; triols such as glycerin, 1,2,6-hexanetriol, 1,1,1-tris(hydroxymethyl)propane, 2,2-bis (hydroxymethyl) butanol; tetra or higher hydric polyols such as pentaerythritol, D-sorbitol, D-mannitol, diglycerin, and polyglycerin; glycerin monocarboxylic acid esters such as glycerin monostearate, glycerin monoisostearate, glycerin monooleate, glycerin monolaurate, glycerin monopalmitate, glycerin monocaprylate, glycerin monoacetate, and glycerin monobehenate; polyglycerin carboxylic acid esters such as diglycerin monostearate, diglycerin monooleate, diglycerin monolaurate, tetraglycerin monostearate, tetraglycerin monooleate, tetraglycerin monolaurate, tetraglycerin distearate, tetraglycerin dioleate, tetraglycerin dilaurate, decaglycerin monostearate, decaglycerin monooleate, decaglycerin monolaurate, decaglycerin distearate, decaglycerin dioleate, and decaglycerin dilaurate; pentaerythritol monocarboxylic acid esters such as pentaerythritol monostearate, pentaerythritol monoisostearate, pentaerythritol monooleate, and pentaerythritol monolaurate; pentaerythritol dicarboxylic acid esters such as pentaerythritol distearate, pentaerythritol dioleate, and pentaerythritol dilaurate; sorbitan monocarboxylic acid esters such as sorbitan monostearate, sorbitan monooleate, sorbitan monolaurate, sorbitan monopalmitate, and sorbitan monobehenate; sorbitan dicarboxylic acid esters such as sorbitan distearate, sorbitan dioleate, sorbitan dilaurate, sorbitan dipalmitate, and sorbitan dibehenate; glycerin monoalkyl ethers such as glycerin monostearyl ether, glycerin monooleyl ether, glycerin monolauryl ether, and glycerin mono-2-ethylhexyl ether; polyglycerin alkyl ethers such as diglycerin monostearyl ether, diglycerin monooleyl ether, diglycerin monolauryl ether, tetraglycerin monostearyl ether, tetraglycerin monooleyl ether, tetraglycerin monolauryl ether, tetraglycerin distearyl ether, tetraglycerin dioleyl ether, tetraglycerin dilauryl ether, decaglycerin monostearyl ether, decaglycerin monooleyl ether, decaglycerin monolauryl ether, decaglycerin distearyl ether, decaglycerin dioleyl ether, and decaglycerin dilauryl ether; pentaerythritol monoalkyl ethers such as pentaerythritol monostearyl ether, pentaerythritol monooleyl ether, and pentaerythritol monolauryl ether; pentaerythritol dialkyl ethers such as pentaerythritol distearyl ether, pentaerythritol dioleyl ether, and pentaerythritol dilauryl ether; sorbitan monoalkyl ethers such as sorbitan monostearyl ether, sorbitan monooleyl ether, and sorbitan monolauryl ether; sorbitan dialkyl ethers such as sorbitan distearyl ether, sorbitan dioleyl ether, and sorbitan dilauryl ether; and the like.

Many of the above-mentioned compounds are widely used as emulsifiers, surfactants, dispersants, defoaming agents, anti-clouding agents, solubilizers, thickening agents, and lubricants and easily available.

The above-mentioned compounds may be used alone or two or more of them may be used in combination. The use amount of the compounds is preferably 0.01 to 100 parts by weight per 100 parts by weight of the vinyl polymer (I). If it is lower than 0.01 parts by weight, the aimed effect cannot be caused and if it exceeds 100 parts by weight, it results in occurrence of a problem that the mechanical strength of the cured product becomes insufficient and therefore it is not preferable. The amount is more preferably 0.1 to 20 parts by weight.

### <Other additives>

If necessary, one or more of various additives maybe added to the curable composition of the invention for the purpose of adjusting various physical properties of the curable composition or cured products. Such additives include, for example, flame retardants, curability modifiers, metal deactivators, antiozonants, phosphorus-containing peroxide decomposers, lubricants, pigments, blowing agents and the like. These various additives may be used singly or two or more of them may be used in combination.

Specific examples of such additives are described, for example in Japanese Kokoku Publication Hei-04-69659, Japanese Kokoku Publication Hei-07-108928, Japanese Kokai Publication Sho-63-254149 and Japanese Kokai Publication Sho-64-22904.

The curable composition of the invention may be used practically without a solvent. In terms of the workability etc., a solvent may be used, however it is desirable to use no solvent from a viewpoint of the adverse effect on the environments.

### <<Form of compound>>

The curable composition of the invention is not particularly restricted in its form but may be prepared as a one-pack form containing all the components/ingredients mixed up in advance and stored in a hermetically closed container or as a two-pack form in which the vinyl polymer (I) is separated from the photo acid generator and such other optional ingredients as a curing agent and a curing catalyst for those components/ingredients to be mixed up before application. While, in the case of one-pack forms comprising a general crosslinkable silyl group-containing polymer, sufficient physical and/or chemical dehydration is necessary, as described hereinabove, strict dehydration is sometimes unnecessary in the case of the curable composition of the invention since the photo acid generator does not function as a curing catalyst until photoirradiation.

### <<Method of curing>>

The curable composition of the invention can be cured by irradiation with active energy rays. The active energy ray source is not particularly restricted but, according to the properties of the photopolymerization initiator, mention may be made of light or electron beam irradiation using, for example, a high-pressure mercury lamp, low-pressure mercury lamp, electron beam irradiation apparatus, halogen lamp, light-emitting diode or semiconductor laser.

### «Uses»

Although not being particularly limited, the curable composition of the invention is usable for various uses, for example sealants for construction and industries such as elastic sealants for building and construction, sealants for siding boards, sealants for pair glass, and sealants for vehicles; electric and electronic parts such as sealants for rear faces of solar cells; insulating materials such as insulating coating materials for electric wires and cables; pressure sensitive adhesives, adhesives, elastic adhesives, contact adhesives, adhesives for tiles, reactive hot melt adhesives, painting materials, powdery coating materials, coating materials, foams, seal materials for can covers etc., heat-releasing sheet, electric and electronic potting agents, films, gaskets, marine deck coatings, casting materials, various kinds of molding materials, artificial marble, rustproof and waterproof sealants for end faces (cut sections) of net glass or laminated glass, materials for vibration absorption/vibration suppression/noise reduction/seismic isolation used in an automobile, a vessel, a household electrical appliance and the like, liquid sealants used in automobile parts, electric parts, various kinds of machine parts and the like, and the like.

The molded article showing rubber elasticity and obtained from the curable composition of the invention can be used widely and mainly for gaskets and packing. For example, in an automobile filed, it can be used for seal materials for keeping air-tightness, vibration-absorption materials for glass, vibration-absorption materials for vehicle body parts, and especially for window seal gaskets and gaskets for door glass. For chassis parts, it can be used as engine and suspension rubber for vibration absorption/noise reduction, particularly for engine mounting rubber. For engine parts, it can be used for hoses for cooling, fuel supply, exhaust control or the like, sealing materials for engine oil, and the like. Further, it can be used for parts of exhaust gas-cleaning apparatus and brake parts. In a household electrical appliance field, it can be used for packing, O-rings, belts and the like. More particularly, it can be used ornaments, water-proof packing, vibration-absorption rubber and anti-insect packing for lighting and illuminating appliances, vibration absorption/noise reduction/air seal materials for cleaners, dripping covers, water-proof packing, heater packing, electrode part packing and safety valve diaphragms for electric water heating apparatus, hoses, water-proof packing and electromagnetic valves for sake-heating apparatus, water-proof packing, water supply tank-packing, water-absorbing valves, water-receiving packing, connection hose, belts, heat-insulating heater-packing, steam outlet-sealants and the like for steam oven microwave and jar-type rice cookers, oil packing, O-rings, drain packing, pressure tubes, air blow-tubes, air suction-/blow-packing, vibration-absorption rubber, oil supply port-packing, oil meter-packing, oil sending-pipes, diaphragm valves, gas tubes and the like for combustion apparatuses, speaker gaskets, speaker edge, turn table sheets, belts, pulleys and the like for acoustic appliances, and the like. In a building and construction field, it can be used for gaskets for structures (zipper gaskets), pneumatic-structure roofings, water-proof materials, shaped sealants, vibration-absorption materials, noise-reduction materials, setting blocks, slide member and the like. In a sporting field, it can be used for all-weather paving materials, gymnasium floor materials and the like sport floor applications, shoe bottom materials, bottom inserts and the like sport shoes applications, golf balls and the like balls for ball games applications, and the like. In a field of vibration-absorption rubber, it can be used for vibration-absorption rubber for automobiles, vibration-absorption rubber for railway cars, vibration-absorption rubber for aircrafts, fenders and the like. In a marine and civil engineering field, it can be used for construction materials such as rubber expansive joints, journals, water-stopping plates, water-proof sheets, rubber dams, elastic paving materials, vibration-absorption pads, and protectors; for sub-materials for working such as rubber frames, rubber packers, rubber skirts, sponge mats, mortar hoses, and mortar strainers; for auxiliary materials for working such as rubber sheets and air hoses; for safety products such as rubber buoyant and wave-absorbing materials; for environment preservation products such as oil fences, silt fences, anti-pollution materials, marine hoses, dredging hoses, and oil skimmers; and the like. Further, it may be used as rubber plates, mats, foam plates and the like.

The curable composition of the present invention is useful as or in a pressure-sensitive adhesive/adhesive composition, useful as a sealant, adhesive, pressure-sensitive adhesive, potting agent or coating agent, and is particularly useful for uses for which weather resistance and/or heat resistance are required and uses for which transparency is required. Since the curable composition of the invention is excellent in weather resistance and adhesiveness, it can be used for adhesion work for outer wall tiles without work of embedding in jointing. Further, it is useful as an elastic adhesive for adhesion of a material having a considerably different linear expansion coefficient or for a member that receives repetitive displacements by heat cycles, and/or as a coating material for making an under-layer material seen through due to its transparency, and/or as an adhesive for adhering transparent materials such as glass, polycarbonates and polyacrylic resins, and/or the like applications.

### BEST MODE FOR CARRYING OUT THE INVENTION

Hereinafter, the invention will be described more in detail with reference to practical Examples and Comparative Examples, however the invention should not be limited to the following Examples.

"Part" and "%" in the following Synthesis Examples, Examples, and Comparative Examples respectively mean "part by weight" and "% by weight".

Synthesis Examples of polymers of the invention are shown below.

In Synthesis Examples below, phrases "number average molecular weight" and "molecular weight distribution (ratio of the weight average molecular weight and number average molecular weight)" were calculated by conversion into standardized polystyrene method using gel permeation chromatography (GPC). As GPC columns were used polystyrene-crosslinked gel-packed columns (Shodex GPC K-804, manufactured by Showa Denko K.K.) and as GPC solvent was used chloroform.

### (Synthesis Example 1)

### Synthesis Example of crosslinkable silyl group-containing poly(n-butyl acrylate/ethyl acrylate/2-methoxyethyl acrylate) copolymer

Under nitrogen atmosphere, CuBr (1.21 kg), acetonitrile (10.8 kg), butyl acrylate (7.19 kg), ethyl acrylate (10.3 kg), 2-methoxyethyl acrylate (8.47 kg) and diethyl 2,5-dibromoadipate (3.37 kg) were added to a 250 L-reactor and stirred at 70 to 80°C for about 30 minutes. Pentamethyldiethylenetriamine was added in order to start the reaction. A mixture of butyl acrylate (28.8 kg), ethyl acrylate (41.3 kg) and 2-methoxyethyl acrylate (33.9 kg) was continuously supplemented for 2 hours after 30 minutes from the start of the reaction. During the reaction, pentamethyldiethylenetriamine was properly added and the inner temperature was kept at 70 to 90°C. The total amount of the pentamethyldiethylenetriamine consumed by that time was 243 g. After 4 hours from the start of the reaction, the reaction system was stirred under heating condition and reduced pressure at 80°C for removing volatile components. Acetonitrile (32.5 kg), 1,7-octadiene (30.9 kg), and pentamethyldiethylenetriamine (486 g) were added to the resulting reaction system and continuously stirred for 4 hours. The mixture was stirred under heating condition and reduced pressure at 80°C for removing volatile components.

Toluene was added to the resulting condensed product for dissolving the polymer, followed by addition of china clay as a filtration aid and aluminum silicate and hydrotalcite as adsorbents, and then the resulting system was stirred under heating condition and oxygen-nitrogen mixed gas atmosphere (oxygen concentration 6%). Solid matter in the mixed solution was removed by filtration and the filtrate was stirred under heating condition and reduced pressure at an inner temperature of 100°C for removing volatile components.

Aluminum silicate and hydrotalcite as adsorbents, and a heat deterioration-preventing agent were further added to the condensed product, and the product was successively stirred under heating condition and reduced pressure (average temperature; about 175°C, and degree of reduced pressure; 10 Torr or lower).

Aluminum silicate and hydrotalcite as adsorbents were further added and an antioxidant was also added, and the product was successively stirred under heating condition and oxygen-nitrogen mixed gas atmosphere (oxygen concentration 6%).

Toluene was added to the resulting condensed product for dissolving the polymer, followed by removing of the solid matter in the mixed solution by filtration, and the filtrate was stirred under heating condition and reduced pressure for removing volatile components so as to give an alkenyl group-containing polymer.

The alkenyl group-containing polymer, dimethoxymethylsilane (2.0 mole equivalents per one alkenyl group), methyl orthoformate (1.0 mole equivalent per one alkenyl group), and a platinum catalyst [xylene solution of bis(1,3-divinyl-1,1,3,3-tetramethyldisiloxane)-platinum complex catalyst; hereinafter, referred to as platinum catalyst] (10 mg on the basis of platinum per 1 kg of the polymer) were mixed and stirred under heating condition and nitrogen atmosphere at 100°C. After confirmation of disappearance of alkenyl group, the reaction mixture was concentrated to give dimethoxysilyl group-terminated poly(n-butyl acrylate/ethyl acrylate/2-methoxyethyl acrylate) copolymer [P1]. The number average molecular weight and the molecular weight distribution of the obtained copolymer were about 18,000 and 1.2, respectively. The average number of silyl groups introduced into one molecule of the copolymer was measured by ¹H-NMR analysis to find it was about 1.9.

### (Synthesis Example 2)

### Synthesis Example of crosslinkable silyl group-containing poly(n-butyl acrylate/ethyl acrylate/octadecyl acrylate) copolymer

A dimethoxysilyl group-terminated poly(n-butyl acrylate/ethyl acrylate/octadecyl acrylate) polymer [P2] was obtained in the same manner as in Synthesis Example 1 except that the following materials were used in lieu of the respective raw materials: CuBr (0.8 kg), acetonitrile (8.9 kg), butyl acrylate (12.5kg), ethyl acrylate (3.7kg), octadecyl acrylate (3.8 kg) and diethyl 2, 5-dibromoadipate (1. 6 kg) . The polymer obtained had a number average molecular weight of about 26, 000 and a molecular weight distribution of 1.2. The average number of the silyl groups introduced into the polymer per molecule thereof was determined by ¹H NMR analysis and found to be about 1.6.

### (Synthesis Example 3) Synthesis Example of crosslinkable silyl group-containing poly(n-butyl acrylate) polymer

A dimethoxysilyl group-terminated poly(n-butyl acrylate) polymer [P3] was obtained in the same manner as in Synthesis Example 1 except that the following materials were used in lieu of the respective materials: CuBr (1.09 kg), acetonitrile (11.4 kg), butyl acrylate (26.0 kg) and diethyl 2,5-dibromoadipate (2.28 kg). The polymer obtained had a number average molecular weight of about 26, 000 and a molecular weight distribution of 1.3. The average number of the silyl groups introduced into the polymer per molecule thereof was determined by ¹H NMR analysis and found to be about 1.8.

### (Synthesis Example 4)

### Synthesis Example of poly(n-butyl acrylate/ethyl acrylate/2-methoxyethyl acrylate) having acryloyl groups at both termini

First, n-butyl acrylate, ethyl acrylate, and 2-methoxyethyl acrylate were polymerized at a molar ratio of 25/46/29 using cuprous bromide as a catalyst, pentamethyldiethylenetriamine as a ligand, and diethyl 2,5-dibromoadipate as an initiator to produce bromine-terminated poly(n-butyl acrylate/ethyl acrylate/2-methoxyethyl acrylate) having a number-average molecular weight of 16, 500 and a molecular weight distribution of 1.13.

Then, 400 g of the resultant polymer was dissolved in N,N-dimethylacetamide (400 mL), and 10.7 g of potassium acrylate was added to the resultant solution. The resulting mixture was heated and stirred at 70°C for 6 hours in a nitrogen atmosphere to produce a mixture of acryloyl group-terminated poly(n-butyl acrylate/ethyl acrylate/2-methoxyethyl acrylate) (referred to as "polymer [P4]" hereinafter). Then, N,N-dimethylacetamide was distilled off from the mixture under reduced pressure, and toluene was added to the residue. The insoluble substance was filtered off, and toluene of the filtrate was distilled off under reduced pressure to purify polymer [P4].

After the purification, polymer [P4] having acryloyl groups at both termini had a number-average molecular weight of 16,900, a molecular weight distribution of 1.14, and an average number of terminal acryloyl groups of 1.8 (i.e. the introduction rate of acryloyl groups to a terminus was 90%).

### (Synthesis Example 5)

### Synthesis of poly (n-butyl acrylate) having methacryloyl groups at both ends

First, n-butyl acrylate was polymerized using cuprous bromide as a catalyst, pentamethyldiethylenetriamine as a ligand, and diethyl 2,5-dibromoadipate as an initiator to produce bromine-terminated poly(n-butyl acrylate) having a number-average molecular weight of 22,500 and a molecular weight distribution of 1.15.

Then, 300 g of the resultant polymer was dissolved in N,N-dimethylacetamide (300 mL), and 9.4 g of potassium methacrylate was added to the resultant solution. The resulting mixture was heated and stirred at 70°C for 3 hours in a nitrogen atmosphere to produce a mixture of a poly (n-butyl acrylate) having acryloyl groups at both termini (referred to as "polymer [P5]" hereinafter).

Then, N,N-dimethylacetamide was distilled off from the mixture under reduced pressure, and toluene was added to the residue. The insoluble substance was filtered off. Then, toluene of the filtrate was distilled off under reduced pressure to purify polymer [P5]. After the purification, polymer [P5] had a number-average molecular weight of 22,600, a molecular weight distribution of 1.14, and an average number of terminal methacryloyl groups of 1.7.

### (Example 1)

To 100 parts of [P1] obtained in Synthesis Example 1 as the crosslinkable silyl group-terminated vinyl polymer (I) were added 1 part of Optomer SP-172 (photo acid generator, tri(alkylphenyl)sulfonium hexafluoroantimonate, product of Asahi Denka Kogyo) and 1 part of Irganox 1010 (pentaerythritol tetrakis[3-(3,5-di-tert-butyl-4-hydroxyphenyl)propionate], product of Ciba Specialty Chemicals), followed by mixing up to give a curable composition.

Then, the curable composition obtained was photoirradiated using a metal halide lamp (80 W/cm, distance from irradiation source 15 cm) for 30 seconds to give an about 2-mm-thick sheet-like cured product.

Separately, the composition obtained was applied to aluminum substrates (product of Engineering Test Service, milled, JIS H 4000 A1050P) using a 50-µm applicator, followed by 30 seconds photoirradiation with a metal halide lamp (80 W/cm, distance from irradiation source 15 cm) to give samples for cross cut adhesion testing.

### (Example 2)

To 70 parts of [P2] obtained in Synthesis Example 2 as the crosslinkable silyl group-terminated vinyl polymer (I) were added 30 parts of a polyoxyalkylene polymer-containing MS polymer SAT 350 (product of KANEKA CORPORATION) and 1 part of Optomer SP-172 (photo acid generator, tri(alkylphenyl)sulfonium hexafluoroantimonate, product of Asahi Denka Kogyo) and 1 part of Irganox 1010 (pentaerythritol tetrakis[3-(3,5-di-tert-butyl-4-hydroxyphenyl)propionate], product of Ciba Specialty Chemicals), followed by mixing up to give a curable composition.

Then, the curable composition obtained was photoirradiated using a metal halide lamp (80 W/cm, distance from irradiation source 15 cm) for 30 seconds to give an about 2-mm-thick sheet-like cured product.

### (Example 3)

To 90 parts of [P1] obtained in Synthesis Example 1 as the crosslinkable silyl group-terminated vinyl polymer (I) were added 10 parts of Celoxide 2021 P (alicyclic epoxy compound, product of Daicel Chemical Industries, Ltd.), 1.05 parts of Optomer SP-172 (photo acid generator, tri(alkylphenyl)sulfonium hexafluoroantimonate, product of Asahi Denka Kogyo) and 1 part of Irganox 1010 (pentaerythritol tetrakis[3-(3,5-di-tert-butyl-4-hydroxyphenyl)propionate], product of Ciba Specialty Chemicals), followed by mixing up to give a curable composition.

Then, the curable composition obtained was photoirradiated using a metal halide lamp (80 W/cm, distance from irradiation source 15 cm) for 30 seconds to give an about 2-mm-thick sheet-like cured product.

### (Example 4)

To 80 parts of [P1] obtained in Synthesis Example 1 as the crosslinkable silyl group-terminated vinyl polymer (I) were added 20 parts of Celoxide 2021 P (alicyclic epoxy compound, product of Daicel Chemical Industries, Ltd.), 1.1 parts of Optomer SP-172 (photo acid generator, tri(alkylphenyl)sulfonium hexafluoroantimonate, product of Asahi Denka Kogyo) and 1 part of Irganox 1010 (pentaerythritol tetrakis[3-(3,5-di-tert-butyl-4-hydroxyphenyl)propionate], product of Ciba Specialty Chemicals), followed by mixing up to give a curable composition.

Then, the curable composition obtained was photoirradiated using a metal halide lamp (80 W/cm, distance from irradiation source 15 cm) for 30 seconds to give an about 2-mm-thick sheet-like cured product.

### (Example 5)

To 100 parts of the crosslinkable silyl group-terminated polyisobutylene polymer EP100S (product of KANEKA CORPORATION) were added 1 part of Optomer SP-172 (photo acid generator, tri(alkylphenyl)sulfonium hexafluoroantimonate, product of Asahi Denka Kogyo) and 1 part of Irganox 1010 (pentaerythritol tetrakis[3-(3,5-di-tert-butyl-4-hydroxyphenyl)propionate], product of Ciba Specialty Chemicals), followed by mixing up to give a curable composition.

Then, the curable composition obtained was photoirradiated using a metal halide lamp (80 W/cm, distance from irradiation source 15 cm) for 30 seconds to give an about 2-mm-thick sheet-like cured product.

The curable compositions obtained as described above in Examples 1 to 5 were used for measurement/testing for gel fraction, mechanical properties, hardness, and cross cut adhesiveness by the methods described later herein. The results thus obtained are shown in Table 1.

**Table 1**

| | | Example 1 | Example 2 | Example 3 | Example 4 | Example 5 |
|---|---|---|---|---|---|---|
| Gel fraction (%) | | 96 | 92 | 94 | 94 | 95 |
| Mechanical properties (No. 2 dumbbells) | M100(MPa) | 0.18 | 0.1 | 0.15 | 0.47 | 0.4 |
| | Breaking strength (MPa) | 0.36 | 0.4 | 0.28 | 0.48 | 0.76 |
| | Elongation (%) | 211 | 437 | 196 | 103 | 225 |
| Hardness (Duro A) | | 8 | 2 | 9 | 18 | 15 |
| Cross cut adhesion test | | 0/100 | - | - | - | - |

### (Example 6)

To 70 parts of [P1] obtained in Synthesis Example 1 as the crosslinkable silyl group-terminated vinyl polymer, and 30 parts of Epicoat 828 (bisphenol A epoxy resin, product of Japan Epoxy Resins Co., Ltd.) were added 1 part of Optomer SP-172 (photo acid generator, tri(alkylphenyl)sulfonium hexafluoroantimonate, product of Asahi Denka Kogyo) and 1 part of Irganox 1010 (pentaerythritol tetrakis[3-(3,5-di-tert-butyl-4-hydroxyphenyl)propionate], product of Ciba Specialty Chemicals), followed by mixing up to give a curable composition.

Then, the curable composition obtained was photoirradiated using a metal halide lamp (80 W/cm, distance from irradiation source 15 cm) for 30 seconds to give an about 2-mm-thick sheet-like cured product.

### (Example 7)

A cured product was obtained in the same manner as in Example 6 except that 30 parts of Epolite 4000 (hydrogenated bisphenol A epoxy resin, product of Kyoeisha) was added in lieu of 30 parts of Epicoat 828.

### (Example 8)

A cured product was obtained in the same manner as in Example 6 except that 30 parts of Celoxide 2021 P (alicyclic epoxy compound, product of Daicel Chemical Industries, Ltd.) was added in lieu of 30 parts of Epicoat 828.

### (Example 9)

A cured product was obtained in the same manner as in Example 8 except that 1.5 parts of OXT-101 (oxetane alcohol, product of Toagosei Co., Ltd.) was further added.

The curable compositions obtained as described above in Examples 6 to 9 were used for measurement/testing for gel fraction, mechanical properties, and hardness by the methods described later herein. The results thus obtained are shown in Table 2.

**Table 2**

| | | Example 6 | Example 7 | Example 8 | Example 9 |
|---|---|---|---|---|---|
| Gel fraction (%) | | 95 | 93 | 98 | 97 |
| Mechanical properties (No. 2 dumbbells) | M50(MPa) | 2.36 | 0.87 | 5.84 | 6.95 |
| | Breaking strength (MPa) | 2.95 | 1.62 | 6.43 | 6.98 |
| | Elongation (%) | 59 | 79 | 56 | 51 |
| Hardness (Duro A) | | 61 | 43 | 38 | 44 |

### (Example 10)

To 70 parts of [P1] obtained in Synthesis Example 1 as the crosslinkable silyl group-terminated vinyl polymer, and 30 parts of [P4] obtained in Synthesis Example 4 as the acryloyl group-terminated vinyl polymer were added 0.7 part of Optomer SP-172 (photo acid generator, tri(alkylphenyl)sulfonium hexafluoroantimonate, product of Asahi Denka Kogyo), 0.3 part of Darocure 1173 (photoradical polymerization initiator, product of Ciba Specialty Chemicals), 0.15 part of Irgacure 819 (photoradical polymerization initiator, product of Ciba Specialty Chemicals) and 1 part of Irganox 1010 (pentaerythritol tetrakis[3-(3,5-di-tert-butyl-4-hydroxyphenyl)propionate], product of Ciba Specialty Chemicals), followed by mixing up to give a curable composition.

Then, the curable composition obtained was photoirradiated using a metal halide lamp (80 W/cm, distance from irradiation source 15 cm) for 30 seconds to give an about 2-mm-thick sheet-like cured product.

### (Example 11)

A cured product was obtained in the same manner as in Example 10 except that the amount of the vinyl polymer [P1] was changed from 70 parts to 50 parts, the amount of the vinyl polymer [P4] was changed from 30 parts to 50 parts, the amount of Optomer SP-172 (photo acid generator, tri(alkylphenyl)sulfonium hexafluoroantimonate, product of Asahi Denka Kogyo) was changed from 0.7 part to 0.5 part, the amount of Darocure 1173 (photoradical polymerization initiator, product of Ciba Specialty Chemicals) was changed from 0.3 part to 0.5 part, and the amount of Irgacure 819 (photoradical polymerization initiator, product of Ciba Specialty Chemicals) was changed from 0.15 part to 0.25 part.

### (Example 12)

A cured product was obtained in the same manner as in Example 11 except that the amount of the vinyl polymer [P1] was changed from 50 parts to 30 parts, the amount of the vinyl polymer [P4] was changed from 50 parts to 70 parts, the amount of Optomer SP-172 (photo acid generator, tri(alkylphenyl)sulfonium hexafluoroantimonate, product of Asahi Denka Kogyo) was changed from 0.5 part to 0.3 part, the amount of Darocure 1173 (photoradical polymerization initiator, product of Ciba Specialty Chemicals) was changed from 0.5 part to 0.7 part, and the amount of Irgacure 819 (photoradical polymerization initiator, product of Ciba Specialty Chemicals) was changed from 0.25 part to 0.35 part.

The curable compositions obtained as described above in Examples 10 to 12 were used for measurement/testing for gel fraction, mechanical properties, and hardness by the methods described later herein. The results thus obtained are shown in Table 3.

**Table 3**

| | | Example 10 | Example 11 | Example 12 |
|---|---|---|---|---|
| Gel fraction (%) | | 86 | 89 | 89 |
| Mechanical properties (No. 2 dumbbells) | M50(MPa) | 0.12 | 0.13 | 0.17 |
| | Breaking strength (MPa) | 0.46 | 0.50 | 0.55 |
| | Elongation (%) | 231 | 220 | 180 |
| Hardness (Duro A) | | 7 | 7 | 11 |

### (Example 13)

To 100 parts of [P3] obtained in Synthesis Example 3 as the crosslinkable silyl group-terminated vinyl polymer were added 1 part of Optomer SP-172 (photo acid generator, tri(alkylphenyl)sulfonium hexafluoroantimonate, product of Asahi Denka Kogyo) and 1 part of Irganox 1010 (pentaerythritol tetrakis[3-(3,5-di-tert-butyl-4-hydroxyphenyl)propionate], product of Ciba Specialty Chemicals), followed by mixing up to give a curable composition.

Then, the curable composition obtained was photoirradiated using a metal halide lamp (80 W/cm, distance from irradiation source 15 cm) for 30 seconds to give an about 2-mm-thick sheet-like cured product.

### (Example 14)

A cured product was obtained in the same manner as in Example 13 except that the amount of the vinyl polymer [P3] was changed from 100 parts to 70 parts, the amount of Optomer SP-172 (photo acid generator, tri(alkylphenyl)sulfonium hexafluoroantimonate, product of Asahi Denka Kogyo) was changed from 1 parts to 0.7 part, and 30 parts of the methacryloyl group-containing vinyl polymer [P5], 0.3 part of Darocure 1173 (photoradical polymerization initiator, product of Ciba Specialty Chemicals), and 0.15 part of Irgacure 819 (photoradical polymerization initiator, product of Ciba Specialty Chemicals) were further added.

### (Example 15)

A cured product was obtained in the same manner as in Example 14 except that 10 parts of glycidyl methacrylate (product of Tokyo Chemical Industry Co., Ltd.) was further added.

### (Example 16)

A cured product was obtained in the same manner as in Example 14 except that the amount of the vinyl polymer [P3] was changed from 70 parts to 50 parts, the amount of the vinyl polymer [P5] was changed from 30 parts to 50 parts, the amount of Optomer SP-172 (photo acid generator, tri(alkylphenyl)sulfonium hexafluoroantimonate, product of Asahi Denka Kogyo) was changed from 0.7 part to 0.5 part, the amount of Darocure 1173 (photoradical polymerization initiator, product of Ciba Specialty Chemicals) was changed from 0.3 part to 0.5 part, and the amount of Irgacure 819 (photoradical polymerization initiator, product of Ciba Specialty Chemicals) was changed from 0.15 part to 0.25 part.

### (Example 17)

A cured product was obtained in the same manner as in Example 16 except that the amount of the vinyl polymer [P3] was changed from 50 parts to 30 parts, the amount of the vinyl polymer [P5] was changed from 50 parts to 70 parts, the amount of Optomer SP-172 (photo acid generator, tri(alkylphenyl)sulfonium hexafluoroantimonate, product of Asahi Denka Kogyo) was changed from 0.5 part to 0.3 part, the amount of Darocure 1173 (photoradical polymerization initiator, product of Ciba Specialty Chemicals) was changed from 0.5 part to 0.7 part, and the amount of Irgacure 819 (photoradical polymerization initiator, product of Ciba Specialty Chemicals) was changed from 0.25 part to 0.35 part.

The curable compositions obtained as described above in Examples 13 to 17 were used for measurement/testing for gel fraction, mechanical properties, and hardness by the methods described later herein. The results thus obtained are shown in Table 4.

**Table 4**

| | | Example 13 | Example 14 | Example 15 | Example 16 | Example 17 |
|---|---|---|---|---|---|---|
| Gel fraction (%) | | 88 | 76 | 69 | 79 | 73 |
| Mechanical properties (No. 2 dumbbells) | M100(MPa) | 0.15 | 0.11 | 0.044 | 0.062 | 0.043 |
| | Breaking strength (MPa) | 0.30 | 0.30 | 0.39 | 0.30 | 0.31 |
| | Elongation (%) | 231 | 302 | 417 | 412 | 569 |
| Hardness (Duro A) | | 4 | 1 | 1 | 1 | 1 |

### (Example 18)

To 100 parts of [P1] obtained in Synthesis Example 1 as the crosslinkable silyl group-terminated vinyl polymer (I) were added 1 part of Optomer SP-172 (photo acid generator, tri(alkylphenyl)sulfonium hexafluoroantimonate, product of Asahi Denka Kogyo), 1 part of Irganox 1010 (pentaerythritol tetrakis[3-(3,5-di-tert-butyl-4-hydroxyphenyl)propionate], product of Ciba Specialty Chemicals), and 2 parts of A-187 (γ-glycidoxypropyltrimethoxysilane, product of Dow Corning Corporation) as an adhesion promoter, followed by mixing up to give a curable composition.

Then, the curable composition obtained was photoirradiated using a metal halide lamp (80 W/cm, distance from irradiation source 15 cm) for 30 seconds to give an about 2-mm-thick sheet-like cured product.

Separately, the composition obtained was applied to aluminum substrates (product of Engineering Test Service, milled, JIS H 4000 A1050P) using a 50-µm applicator, followed by 30 seconds photoirradiation with a metal halide lamp (80 W/cm, distance from irradiation source 15 cm) to give samples for cross cut adhesion testing.

### (Example 19)

A cured product and a sample for cross cut adhesion testing were obtained in the same manner as in Example 18 except that the amount of A-187 (γ-glycidoxypropyltrimethoxysilane, product of Dow Corning Corporation) was changed from 2 parts to 5 parts.

The curable compositions obtained as described above in Examples 18 and 19 were used for measurement/testing for gel fraction, mechanical properties, hardness, and cross cut adhesiveness by the methods described later herein. The results thus obtained are shown in Table 5.

**Table 5**

| | | Example 18 | Example 19 |
|---|---|---|---|
| Gel fraction (%) | | 91 | 92 |
| Mechanical properties (No. 2 dumbbells) | M100(MPa) | 0.31 | 0.40 |
| | Breaking strength (MPa) | 0.50 | 0.49 |
| | Elongation (%) | 163 | 124 |
| Hardness (Duro A) | | 10 | 18 |
| Cross cut adhesion test | | 25/100 | 0/100 |

### (Example 20)

To 70 parts of [P1] obtained in Synthesis Example 1 as the crosslinkable silyl group-terminated vinyl polymer, and 30 parts of Ebecry 3605 (partially-acrylated bisphenol A epoxy acrylate, product of DAICEL-CYTEC Company LTD.) were added 0.7 part of Optomer SP-172 (photo acid generator, tri(alkylphenyl)sulfonium hexafluoroantimonate, product of Asahi Denka Kogyo), 0.3 part of Darocure 1173 (photoradical polymerization initiator, product of Ciba Specialty Chemicals), 0.15 part of Irgacure 819 (photoradical polymerization initiator, product of Ciba Specialty Chemicals) and 1 part of Irganox 1010 (pentaerythritol tetrakis[3-(3,5-di-tert-butyl-4-hydroxyphenyl)propionate], product of Ciba Specialty Chemicals), followed by mixing up to give a curable composition.

Then, the curable composition obtained was photoirradiated using a metal halide lamp (80 W/cm, distance from irradiation source 15 cm) for 30 seconds to give an about 2-mm-thick sheet-like cured product.

### (Example 21)

To 30 parts of [P1] obtained in Synthesis Example 1 as the crosslinkable silyl group-terminated vinyl polymer, and 70 parts of Ebecry 3605 (partially-acrylated bisphenol A epoxy acrylate, product of DAICEL-CYTEC Company LTD.) were added 0.3 part of Optomer SP-172 (photo acid generator, tri(alkylphenyl)sulfonium hexafluoroantimonate, product of Asahi Denka Kogyo), 0.7 part of Darocure 1173 (photoradical polymerization initiator, product of Ciba Specialty Chemicals), 0.35 part of Irgacure 819 (photoradical polymerization initiator, product of Ciba Specialty Chemicals) and 1 part of Irganox 1010 (pentaerythritol tetrakis[3-(3,5-di-tert-butyl-4-hydroxyphenyl)propionate], product of Ciba Specialty Chemicals), followed by mixing up to give a curable composition.

Then, the curable composition obtained was photoirradiated using a metal halide lamp (80 W/cm, distance from irradiation source 15 cm) for 30 seconds to give an about 2-mm-thick sheet-like cured product.

### (Comparative Example 1)

To 100 parts of Ebecry 3605 (partially-acrylated bisphenol A epoxy acrylate, product of DAICEL-CYTEC Company LTD.) were added 1 part of Darocure 1173 (photoradical polymerization initiator, product of Ciba Specialty Chemicals), 0. 5 part of Irgacure 819 (photoradical polymerization initiator, product of Ciba Specialty Chemicals) and 1 part of Irganox 1010 (pentaerythritol tetrakis[3-(3,5-di-tert-butyl-4-hydroxyphenyl)propionate], product of Ciba Specialty Chemicals), followed by mixing up to give a curable composition.

Then, the curable composition obtained was photoirradiated using a metal halide lamp (80 W/cm, distance from irradiation source 15 cm) for 30 seconds to give an about 2-mm-thick sheet-like cured product.

The curable compositions obtained as described above in Examples 20 and 21, and Comparative Example 1 were used for measurement/testing for gel fraction, mechanical properties, and hardness by the methods described later herein. The results thus obtained are shown in Table 6.

**Table 6**

| | | Example 20 | Example 21 | Comparative Example 1 |
|---|---|---|---|---|
| Gel fraction (%) | | 95 | 90 | 96 |
| Mechanical properties (No. 2 dumbbells) | M50(MPa) | 2.85 | - | - |
| | Breaking strength (MPa) | 3.92 | 0.88 | 0.25 |
| | Elongation (%) | 70 | 3 | 0 |
| Hardness (Duro A) | | 64 | 94 | 85 |

### <Gel fraction>

Each sheet-like curable composition obtained in each Example and Comparative Example was immersed in toluene at room temperature for 24 hours, the change in weight between before and after immersion was measured, and the gel fraction was calculated.

### <Mechanical properties>

No. 2 dumbbell specimens were punched out from each sheet-like curable composition obtained in each Example and Comparative Example, and they were subjected to tensile testing according to JIS K 7113 (measurement conditions: 23°C x 55% R.H., pulling rate 200 mm/min) using a Shimadzu autograph. In Table 1, M100 indicates 100% modulus (strength at 100% elongation).

In Tables 1 to 6, M50 refers to 50% modulus (strength at 50% elongation), and M100 to 100% modulus (strength at 100% elongation).

### <Hardness>

Each sheet-like curable composition obtained in each Example and Comparative Example was subjected to harness (Duro A) measurement at 23°C and 55% R.H. using a Duro A hardness tester.

### <Cross cut adhesion test>

Cross cut adhesiveness measurements were carried out according to JIS 5400. In Table 1 and Table 5, the measurement results are shown in terms of the fraction "number of squares not peeled off/total number of squares".

## Claims

1. A curable composition
which comprises a vinyl polymer (I) having, on an average, at least one crosslinkable silyl group at its termini and a photo acid generator (II).

2. The curable composition according to Claim 1
wherein the crosslinkable silyl group is represented by the following general formula (1):
-[Si(R¹)_{2-b}(Y)_{b}O]ₘ-Si(R²)₃₋ₐ(Y)ₐ (1)
{wherein, R¹ and R² may be same or different and each is an alkyl group containing 1 to 20 carbon atoms, an aryl group containing 6 to 20 carbon atoms, an aralkyl group containing 7 to 20 carbon atoms or a triorganosiloxy group represented by (R')₃SiO- (in which R' is a univalent hydrocarbon group containing 1 to 20 carbon atoms and a plurality of R' groups may be the same or different) and, when there are two or more R¹ or R² groups, they may be the same or different; Y represents a hydroxyl group or a hydrolyzable group and, when there are two or more Y groups, they may be the same or different; a represents 0, 1, 2 or 3, b represents 0, 1 or 2, and m is an integer of 0 to 19, provided that the relation a + mb ≥ 1 should be satisfied.}

3. The curable composition according to Claim 1 or 2
wherein the molecular weight distribution of the vinyl polymer (I) is lower than 1.8.

4. The curable composition according to any one of Claims 1 to 3
wherein the main chain of the vinyl polymer (I) is a (meth)acrylic polymer.

5. The curable composition according to Claim 4
wherein the main chain of the vinyl polymer (I) is an acrylic polymer.

6. The curable composition according to Claim 5
wherein the main chain of the vinyl polymer (I) is an acrylate polymer.

7. The curable composition according to any one of Claims 1 to 6
wherein the main chain of the vinyl polymer (I) is produced by living radical polymerization.

8. The curable composition according to Claim 7
wherein the main chain of the vinyl polymer (I) is produced by atom transfer radical polymerization.

9. The curable composition according to any one of Claims 1 to 8
wherein the vinyl polymer (I) has a number average molecular weight of not lower than 3,000.

10. The curable composition according to any one of Claims 1 to 3
wherein the main chain of the vinyl polymer (I) is a polyisobutylene polymer.

11. The curable composition according to any one of Claims 1 to 10
wherein a main chain structure of the vinyl polymer (I) between the crosslinkable silyl group occurring at one terminus and the crosslinkable silyl group occurring at a site different from the terminus is built up of carbon-carbon bonds alone or of carbon-carbon bonds and carbon-silicon bonds alone.

12. The curable composition according to any one of Claims 1 to 11
wherein the photo acid generator (II) is selected from the group consisting of sulfonate esters, onium salts and carboxylate esters.

13. The curable composition according to any one of Claims 1 to 12
which further comprise a polyether polymer (III) having, on an average, at least one crosslinkable silyl group at its termini.

14. The curable composition according to Claim 13
wherein the main chain of the polyether polymer (III) is essentially polypropylene oxide.

15. The curable composition according to Claim 13 or 14
wherein the crosslinkable silyl group in the polyether polymer (III) is represented by the following general formula (2) :
- [Si (R¹)_{2-b}(Y)_{b}O]ₘ-Si(R²)₃₋ₐ(Y)ₐ (2)
{wherein, R¹ and R² may be same or different and each is an alkyl group containing 1 to 20 carbon atoms, an aryl group containing 6 to 20 carbon atoms, an aralkyl group containing 7 to 20 carbon atoms or a triorganosiloxy group represented by (R')₃SiO- (in which R' is a univalent hydrocarbon group containing 1 to 20 carbon atoms and a plurality of R' groups may be the same or different) and, when there are two or more R¹ or R² groups, they may be the same or different; Y represents a hydroxyl group or a hydrolyzable group and, when there are two or more Y groups, they may be the same or different; a represents 0, 1, 2 or 3, b represents 0, 1 or 2, and m is an integer of 0 to 19, provided that the relation a + mb ≥ 1 should be satisfied.}

16. The curable composition according to any one of Claims 1 to 15
which further comprise an epoxy compound and/or oxetane compound (IV).

17. The curable composition according to Claim 16
wherein the epoxy compound and/or oxetane compound (IV) has no aromatic ring.

18. The curable composition according to Claim 16 or 17
wherein the epoxy compound and/or oxetane compound (IV) has a crosslinkable silyl group within the molecule.

19. The curable composition according to any one of Claims 1 to 18
which further comprise a radical-polymerizable carbon-carbon double bond-containing compound.

20. The curable composition according to any one of Claims 1 to 19
which comprises a vinyl polymer (V) having, on an average, at least one crosslinkable acryloyl group at its termini.

21. The curable composition according to Claim 20
wherein the crosslinkable acryloyl group is represented by the following general formula (3):
-OC(O)C(R^{a})=CH₂ (3)
(wherein R^{a} represents a hydrogen atom or an organic group containing 1 to 20 carbon atoms).

22. The curable composition according to Claim 20 or 21
wherein the molecular weight distribution of the vinyl polymer (V) is lower than 1.8.

23. The curable composition according to any one of Claims 20 to 22
wherein the main chain of the vinyl polymer (V) is a (meth)acrylic polymer.

24. The curable composition according to Claim 23
wherein the main chain of the vinyl polymer (V) is an acrylic polymer.

25. The curable composition according to Claim 24
wherein the main chain of the vinyl polymer (V) is an acrylate polymer.

26. The curable composition according to any one of Claims 20 to 25
wherein the main chain of the vinyl polymer (V) is produced by living radical polymerization.

27. The curable composition according to Claim 26
wherein the main chain of the vinyl polymer (V) is produced by atom transfer radical polymerization.

28. The curable composition according to any one of Claims 20 to 27
wherein the vinyl polymer (V) has a number average molecular weight of not lower than 3,000.

29. The curable composition according to any one of Claims 1 to 28
which further comprise a trialkoxysilane compound or tetraalkoxysilane compound having a molecular weight of not higher than 1,000.

30. The curable composition according to any one of Claims 1 to 29
which comprise a tin-based compound.

31. A cured product obtained by irradiating the curable composition according to any one of Claims 1 to 30 with active energy rays.

32. A pressure-sensitive adhesive/adhesive composition based on the curable composition according to any one of Claims 1 to 31.

33. A sealant based on the pressure-sensitive adhesive/adhesive composition according to Claim 32.

34. An adhesive based on the pressure-sensitive adhesive/adhesive composition according to Claim 32.

35. A pressure-sensitive adhesive based on the pressure-sensitive adhesive/adhesive composition according to Claim 32.

36. A potting agent based on the pressure-sensitive adhesive/adhesive composition according to Claim 32.

37. A coating agent based on the pressure-sensitive adhesive/adhesive composition according to Claim 32.
